(19)

Europäisches Patentamt

European Patent Office

Office européen des brevets

(11) **EP 3 916 067 B1**

(12) **EUROPÄISCHE PATENTSCHRIFT**

(45) Veröffentlichungstag und Bekanntmachung des Hinweises auf die Patenterteilung:
**12.07.2023 Patentblatt 2023/28**

(21) Anmeldenummer: **20176894.2**

(22) Anmeldetag: **27.05.2020**

(51) Internationale Patentklassifikation (IPC):
***C09D 5/00*** *(2006.01)*

(52) Gemeinsame Patentklassifikation (CPC):
**C09D 5/00; C09K 3/22;** Y02W 30/91

(54) **BIOZEMENTIERUNGSMISCHUNG ZUR STAUBKONTROLLE**

BIOCEMENTATION MIXTURE FOR DUST SUPPRESSION

COMPOSITION DE BIOCEMENTATION POUR LA SUPPRESSION DE POUSSIÈRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA TN**

(43) Veröffentlichungstag der Anmeldung:
**01.12.2021 Patentblatt 2021/48**

(73) Patentinhaber: **Bind-X GmbH**
**82152 Planegg (DE)**

(72) Erfinder:
• **Spitznagel, Martin**
**80802 München (DE)**

• **Fried, Luitpold**
**81539 München (DE)**
• **Pazur, Saskia**
**82223 Eichenau (DE)**
• **Merkl, Jan-Philip**
**82069 Hohenschäftlarn (DE)**
• **Hornung, Florian**
**81371 München (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
**WO-A1-2016/145190**

**Beschreibung**

Die vorliegende Erfindung betrifft primär die Verwendung einer Mischung zum Reduzieren von Staubbildung und / oder Erosion sowie eine hierfür geeignete Mischung. Weitere Aspekte, insbesondere weitere Verwendungen, ergeben sich aus der nachfolgenden Beschreibung.

Staub findet sich fast überall. In starkem Maße entsteht er durch ungeteerte Transportwege (Straßen, Schienen, Flughäfen), landwirtschaftliche Nutzflächen, Minen, Tagebau, Baustellen, Industrieflächen, Deponien, usw. Eine Reihe von Nachteilen ist mit anhaltender Staubexposition verbunden. So ist Staub gesundheitsschädlich und kann Heuschnupfen, Allergien oder eine sog. Staublunge verursachen. Staub ist umweltschädlich; er transportiert und verteilt Schadstoffe wie Chemikalien, Schwermetalle, Viren und Mikroorganismen. Staub birgt Gefahren für den Verkehr, wenn durch den Staub die Sicht für Verkehrsteilnehmer behindert wird. Staubbildung ist meist die Folge von oberflächlichem Materialabtrag. Ungewollter Materialabtrag geht auch einher mit ungewolltem Materialverlust. Staub kann sich in und an Maschinen (z.B. Fahrzeugen, Baumaschinen) absetzen und Beschädigung und kürzere Wartungsintervalle insbesondere an bewegten Teilen hervorrufen.

Aus diesem Grund wurden im Stand der Technik unterschiedliche Maßnahmen zur Staubunterdrückung vorgeschlagen.

Hierzu zählen das Abdecken durch Planen und der Anbau von Vegetation. Allerdings ist beides meist kostspielig und nicht immer möglich. So ist eine Bepflanzung auf Transportwegen wie Straßen nicht möglich.

Des Weiteren wurde vorgeschlagen, den Feuchtigkeitsgehalt im Boden / Substrat, z.B. durch Zugabe von Wasser, Salzlauge etc. zu erhöhen (Naeimi M, Chu J, Environmental Science and Pollution Research 24.29. 2017. 23341-23350; Mayer, FD et al, Geo-frontiers 2011: advances in geotechnical engineering. 2011. 4002-4011; jeweils Einleitung). Nachteilig an dieser Technologie ist, dass die Wirkung nur solange anhält bis der Wasseranteil verdampft ist. In heißen und trockenen Klimazonen kann dies zu einer sehr kurzen Wirkdauer der Maßnahme führen. Um einen langanhaltenden oder gar dauerhaften Effekt zu erzielen, muss der Auftrag ggfs. ständig wiederholt werden, was mühsam und kostenintensiv ist. Ein weiterer Nachteil ist, dass die vorgeschlagenen Salzlösungen extrem korrosiv gegenüber Metallen (und somit korrosiv gegenüber Fahrzeugen und Maschinen) und Beton sind. Da die Salzlösungen in Erde und Grundwasser eintreten, ist die Technologie zudem recht umweltschädlich.

Ein anderer Ansatz der Staubkontrolle sieht den Einsatz von Destillationsrückständen (WO 2009/151316) oder Steinkohlenteerpech (EP 0 305 621) vor. Allerdings sind beide Substanzen toxisch. Deren Ausbringung ist aus Umweltschutzgründen somit nicht akzeptabel.

EP 2 838 969 schlägt eine Staubunterdrückung unter Verwendung von Polymerdispersionen vor. Nachteilig an dem Einsatz von Polymerdispersionen ist jedoch, dass sie i.d.R. nicht oder nur schwer biologisch abbaubar sind.

Gemäß einer weiteren Maßnahme werden organische Verbindungen wie Lignin, Lignosulfonate, Tenside, Polyacrylamide, Stärkeether, Polyacrylnitrile, Polyvinylalkohole, Polyacrylamide, Carboxymethylcellulose und Polyvinylacetate eingesetzt, um Staub zu binden (Stabnikov V et al. Water Air Soil Pollut. 2013. 224:1631, Einleitung). Als größter Nachteil werden im Stand der Technik die hohen Kosten genannt, die insbesondere bei großflächigen Applikationen anfallen (Stabnikov V et al., *supra,* Tabelle 2).

Die vorgenannten Nachteile wurden zumindest zum Teil mit der in der WO 2006/066326 beschriebenen mikrobiellen Biozementierung überwunden. Die Offenlegungsschrift offenbart ein Verfahren zur Bildung von hochfestem Biozement in einem permeablen Ausgangsmaterial, wobei das Ausgangsmaterial mit einer effektiven Menge (i) eines Urease-produzierenden Mikroorganismus, (ii) Harnstoff und (iii) Calcium-Ionen versetzt wird. Durch die Urease-katalysierte Umwandlung des Harnstoffs in Carbonat und dessen Reaktion mit den bereitgestellten Calcium-Ionen entsteht Calciumcarbonat, welches das Ausgangsmaterial verfestigt. Es wird unter anderem beschrieben, dass sich das dort offenbarte Verfahren für Anwendungen im Bergbau, im Bauingenieurwesen oder zur Bereitstellung von Spezialmaterialien eignet. Im Gegensatz zu den zuvor beschriebenen konventionellen Methoden ist es bei der Biozementierung möglich, auf den Einsatz von nicht biologisch abbaubaren Substanzen teilweise oder vollständig zu verzichten. Es ist keine Schädigung von Maschinen, Fahrzeugen, usw. zu befürchten und die Anwendungskosten sind gering (Stabnikov V et al., *supra,* Tabelle 2).

WO 2016/145190 A1 beschreibt Zusammensetzungen und Verfahren zur Staubkontrolle und zur Herstellung von Baustoffen unter Verwendung von enzymproduzierenden Zellen, einer Stickstoffquelle, wie Harnstoff, und einer Calciumquelle, wie Calciumchlorid.

Ein mit der Staubbildung verwandter Aspekt ist die Bodenerosion. Bodenerosion ist die übermäßige Erosion von Böden durch Wind und Wasser, insbesondere verursacht durch unsachgemäße menschliche Landnutzung, zum Beispiel Entfernung der schützenden Vegetation durch Überweidung oder Abholzung, sowie zu kurze Brachezeiten. Besonders problematisch ist hierbei der Verlust des fruchtbarsten und landwirtschaftlich bedeutendsten Oberbodens. Anhaltende Bodenerosion hat zunächst eine Verschlechterung der Qualität des Bodens (Bodendegradation) zur Folge. Die Degradation kann schließlich bis zum vollständigen Verlust der landwirtschaftlichen Nutzbarkeit des Bodens führen (Bodendevastierung). Bodenerosion ist ein Problem mit weitreichenden ökologischen, ökonomischen und gesellschaftlichen Folgen. Daher wurden weltweit verschiedene Bodenschutzmaßnahmen eingeleitet, die das Problem jedoch bislang nicht vollständig beseitigen konnten.

Es war daher primäre Aufgabe der vorliegenden Erfindung, Maßnahmen zur Staubreduktion und / oder Erosionsreduktion bereitzustellen, die die oben aufgeführten Nachteile zumindest zum Teil überwinden und im Vergleich zu der bekannten Biozementierung eine verbesserte, insbesondere länger anhaltende Staubreduktion und / oder Erosionsreduktion, erreichen. Eine weitere Aufgabe der vorliegenden Erfindung war es, Maßnahmen zur Staubreduktion und / oder Erosionsreduktion bereitzustellen, die die staub- und / oder erosionsreduzierenden Eigenschaften nach mechanischer Belastung besser aufrechterhalten, so dass ein so behandelter Boden auch begehbar ist. Weitere (zusätzlich oder alternativ) zu lösende Aufgaben der vorliegenden Erfindung ergeben sich durch Studium der Beschreibung, der Ansprüche und insbesondere auch des Beispielteils.

Erfindungsgemäß gelöst wird diese Aufgabe bzw. werden diese Aufgaben durch die Verwendung einer Mischung wie in Anspruch 1 spezifiziert zum Reduzieren von Staubbildung und / oder Erosion sowie durch eine hierfür geeignete Mischung.

Weitere Aspekte und bevorzugte Ausgestaltungen der vorliegenden Erfindung ergeben sich aus den nachfolgenden Ausführungen, den beigefügten Beispielen und insbesondere den beigefügten Patentansprüchen.

Erfindungsgemäß ist die Mischung wie hier beschrieben zur Biozementierung geeignet. Der Begriff Biozementierung steht im Rahmen des vorliegenden Textes für eine Verfestigung und / oder Verhärtung von (permeablen) Substraten (wie im Rahmen des erfindungsgemäßen Verfahrens weiter unten definiert). Auf / in diesen Substraten wird dadurch die Staubbildung verhindert oder reduziert. Biozement ist im Rahmen dieses Textes das Produkt der hierin definierten Biozementierung.

Es wird angenommen, dass es sich bei besagter Verfestigung und / oder Verhärtung um einen Vorgang handelt, bei dem Teile des Substrats, auf / in dem die Staubbildung reduziert oder verhindert werden soll, durch einen oder mehrere Binder, der bzw. die in der erfindungsgemäß zu verwendenden Mischung enthalten ist bzw. sind und / oder aus deren Bestandteilen gebildet wird bzw. werden, miteinander verbunden werden und auf diese Weise eine Verfestigung und / oder Verhärtung (Biozementierung) des Substrats oder Teilen des Substrats bewirkt wird. Insbesondere wird angenommen, dass es sich bei besagter Verfestigung und / oder Verhärtung um einen Prozess handelt, bei dem (lebende) Organismen, Teile davon oder Enzyme, die vorzugsweise aus den besagten Organismen oder Teilen gewonnen werden und / oder von diesen produziert werden, dazu eingesetzt werden, Carbonat zu bilden, die Carbonat-Bildung zu induzieren und / oder zu katalysieren. Die gebildeten Carbonate verbinden dabei die Teile des Substrats bzw. das Substrat, auf / in welchem die Staubbildung reduziert werden soll, wodurch eine Verfestigung und / oder Verhärtung des Substrats oder Teilen davon erfolgt. Die gebildeten Carbonate stellen im Rahmen dieses Textes daher einen Mindestbestandteil des Biozements dar.

Des Weiteren wird im Rahmen der Erfindung mittels einer wasserlöslichen und / oder Wasser-dispergierbaren und / oder Wasser-emulgierbaren kohäsionsmodifizierenden Verbindung die Verfestigung und / oder Verhärtung wie nachfolgend beschrieben modifiziert.

Unter dem Begriff "Reduzieren von Staubbildung" (vorliegend auch kurz als "Staubkontrolle" und "Staubunterdrückung" bezeichnet) ist insbesondere ein langanhaltendes Reduzieren, ggfs. vollständiges Reduzieren (d.h. Verhindern), der Aufwirbelung von Staubpartikeln gemeint, vorzugsweise von Staubbildung, die im Bergbau, bei Bauarbeiten, durch Benutzung unbefestigter Transportwege und / oder in der Landwirtschaft entsteht, weiter bevorzugt von Staubbildung, die durch die Lagerung von Abraum und / oder Halden entsteht. Dabei ist der Begriff "langanhaltend" dahingehend zu verstehen, dass der emissionsbedingte Gewichtsverlust eines Modellsubstrats nach einer Minute Windexposition im Windkanal bei 12 m/s (ermittelt unter Bedingungen und an einem Substrat als Modellsubstrat wie in Beispiel 1 beschrieben) über eine Dauer von mindestens 24 Stunden, bevorzugt mindestens 48 Stunden, weiter bevorzugt mindestens 3 Tagen und am meisten bevorzugt mindestens 4 Tagen (nach einmaliger Applikation der erfindungsgemäßen Mischung) in derselben Größenordnung liegt, d.h. die über die Dauer ermittelten emissionsbedingten Gewichtsverluste unterscheiden sich relativ zueinander um den Faktor von kleiner 10. Um ein Beispiel zu nennen, wenn der emissionsbedingte Gewichtsverlust zum ersten Zeitpunkt 0,1 % beträgt und 24 Stunden nach dem ersten Zeitpunkt 0,9 % beträgt, liegt der emissionsbedingte Gewichtsverlust in derselben Größenordnung. Wenn hingegen der emissionsbedingte Gewichtsverlust zum ersten Zeitpunkt 0,1 % beträgt und 24 Stunden nach dem ersten Zeitpunkt 1,0 % oder mehr beträgt, liegt der emissionsbedingte Gewichtsverlust nicht in derselben Größenordnung.

Da die Staubunterdrückung eine Reduzierung der Erosion zur Folge hat, betrifft die vorliegende Erfindung auch die Verwendung zum Reduzieren der Erosion.

Erfindungsgemäß wird dies vor allem durch eine Aggregation der Staubpartikel zu größeren Aggregaten erreicht, was vorliegend auch als Verfestigung bezeichnet wird. Durch die Aggregation bildet sich eine Kruste auf der Substratoberfläche aus, die die Aufwirbelung der darunterliegenden Partikel verhindert. Wie nachfolgend beschrieben erlaubt jedoch eine (anfänglich) feste Kruste keine, oder nur unzureichende Aussagen über die Dauer der erreichbaren Staubunterdrückung. Somit wird angenommen, dass die staubunterdrückende Wirkung auf einem weiteren Effekt beruht.

Erfindungsgemäß umfasst oder besteht die Mischung aus nachfolgenden Bestandteilen:

(i) ein oder mehrere carbonatbildende Organismen und / oder Enzyme
(d.h. Organismen und / oder Enzyme, das, der bzw. die dazu in der Lage ist / sind, Carbonat zu bilden, die Carbonat-Bildung zu induzieren und / oder zu katalysieren);

(ii) wenigstens ein Stoff zur Bildung von Carbonat;

(iii) wenigstens eine wasserlösliche und / oder Wasser-dispergierbare und / oder Wasser-emulgierbare kohäsionsmodifizierende Verbindung ausgewählt aus der Gruppe von:

Verbindungen mit Calciumaffinität wie in Anspruch 1 aufgeführt; und

Verbindungen mit Carbonataffinität wie in Anspruch 1 aufgeführt;

(iv) optional: eine oder mehrere Kationen-Quellen; und

(v) optional: ein oder mehrere Zusatzstoffe.

Lediglich klarstellend sei erwähnt, dass erfindungsgemäße Mischungen stets unterschiedliche Verbindungen bzw. Stoffe für die Bestandteile (ii) und (iii) enthalten. Das bedeutet, dass ein und derselbe Stoff bzw. ein und dieselbe Verbindung in derselben Mischung nicht sowohl als Bestandteil (ii) als auch Bestandteil (iii) gelten kann/können.

Da die Biozementierung im Wesentlichen auf einer Aktivität von Enzym(en) und / oder (lebenden) Organismen beruht, die häufig empfindlich gegenüber Umgebungsbedingungen reagieren, war es nicht ohne Weiteres zu erwarten, dass die Biozementierung in Anwesenheit weiterer Verbindungen überhaupt oder wenigstens in technisch relevantem Umfang abläuft.

Unerwartet stellte sich jedoch sogar heraus, dass eine Mischung wie hier beschrieben zu länger beständigem Biozement und damit zu einer verbesserten Staubkontrolle führt. Als besonders bemerkenswert ist die Tatsache, dass bereits nach wenigen Applikationen oder selbst nur nach einmaliger Applikation diese Effekte anhaltend erzielt werden. Die Erfindung basiert maßgeblich auf der Erkenntnis, dass eine scheinbar anfänglich bestehende Korrelation von Bruchkraft zu Staubunterdrückung nach zwei Tagen nicht mehr existiert (auch wenn in Einzelfällen eine Korrelation beobachtet werden konnte).

Durch Behandlung des Bodens mit Calciumligninsulfonat beispielsweise bildet sich eine dünne, brüchige Schicht, die zwar fest ist, aber nach Brechen keine Staubunterdrückung mehr bewirkt.

Aus diesem Grund ist eine, beispielsweise über die Bruchkraft bestimmbare, Bodenfestigkeit nicht geeignet, um Vorhersagen zu treffen, welches Staubverhalten ein behandelter Boden über einen längeren Zeitraum aufweisen könnte. Das bedeutet, dass Mischungen, die zu einem weniger festen Boden führen, dennoch hervorragende Staubunterdrückungseigenschaften aufweisen können. Es ist anzunehmen, dass für eine langanhaltende Staubunterdrückung der Boden- /Substratzusammenhalt in tieferen Schichten eine größere oder gar die tragende Rolle spielt im Vergleich zu einer (anfänglichen) Festigkeit der Oberfläche. Insbesondere gilt dies nach mechanischer Beanspruchung der Probe. Für langanhaltende Staubunterdrückung ist es wichtig, dass die emissionsreduzierende Wirkung nach mechanischer Belastung der Probe nicht zurückgeht. In der erfindungsgemäßen Mischung wird der Substratzusammenhalt maßgeblich durch die wasserlösliche und / oder Wasser-dispergierbare und / oder Wasser-emulgierbare kohäsionsmodifizierende Verbindung (im Folgenden auch kurz kohäsionsmodifizierende Verbindung genannt) erzielt, wobei durch das Zusammenwirken der Bestandteile (i), (ii) und (iii) insgesamt eine besonders gute Staubkontrolle erzielt wird.

Als weiterer Vorteil der erfindungsgemäß zu verwendenden Mischungen ergibt sich, dass diese zu besonders schnell erhärtendem und / oder besonders bruchfesten Biozement führen. Dies führt zu einer nochmals verbesserten Staubkontrolle.

Der Begriff "wasserlöslich" im Kontext des Bestandteils (iii) bezeichnet eine Verbindung, die eine Löslichkeit in Wasser von wenigstens 1 g / L, bevorzugt wenigstens 5 g / L, weiter bevorzugt wenigstens 10 g / L, weiter bevorzugt wenigstens 20 g / L, weiter bevorzugt wenigstens 50 g / L, am meisten bevorzugt wenigstens 100 g / L, jeweils bestimmt bei 20 °C, aufweist.

Der Begriff "Wasser-dispergierbar" bzw. "Wasser-emulgierbar" im Kontext des Bestandteils (iii) bezeichnet eine Verbindung, die in Wasser zu wenigstens 1 g / L, bevorzugt wenigstens 5 g / L, weiter bevorzugt wenigstens 10 g / L, weiter bevorzugt wenigstens 20 g / L, weiter bevorzugt wenigstens 50 g / L, am meisten bevorzugt wenigstens 100 g / L, jeweils bestimmt bei 20 °C, dispergierbar bzw. emulgierbar ist.

Um die Wasserlöslichkeit, Wasser-Dispergierbarkeit bzw. Wasser-Emulgierbarkeit einer Verbindung zu bestimmen, kann wie folgt vorgegangen werden: Zur Bestimmung der Wasserlöslichkeit fester, pastöser und gelartiger Verbindungen (beispielsweise Polyvinylacetat 20, Polycarbonat, langkettige Fettsäure und Stärke) wird eine definierte Menge der Verbindung (bspw. 5 g) in einer definierten Menge Wasser (bspw. 100 mL destilliertes Wasser) gegeben und bei 20°C für 24 Stunden gerührt. Anschließend wird filtriert (bspw. mittels Homyl 80-120$\mu$m Quantitatives Filterpapier). Das Filterpapier wird anschließend fachmännisch getrocknet und gewogen. Die ermittelte Masse, abzüglich der Filtermasse, ist die Masse des Rückstandes in Gramm. Die Differenz der definierten Menge der Verbindung (bspw. 5 g) und der Masse des Rückstandes in Gramm geteilt durch die definierte Menge Wasser (bspw. 0,1 L) ergibt die Wasserlöslichkeit der jeweiligen Verbindung in g pro Liter.

Zur Bestimmung der Wasser-Dispergierbarkeit fester, pastöser und gelartiger Substanzen wird eine definierte Menge der Verbindung (bspw. 50 g) in einer definierten Menge Wasser (bspw. 1000 mL destilliertes Wasser) gegeben und bei 20°C homogenisiert (bspw. mittels Dissolver DISPERMAT® LC75 bei 15000 Umdrehungen pro Minute für 5 Minuten). Anschließend wird die Mischung zentrifugiert (bspw. 2 min bei 100 g). Der Überstand wird abdekantiert und das Präzipitat fachmännisch getrocknet und gewogen. Die ermittelte Masse ist die Masse des Präzipitats nach Zentrifugation. Die Differenz zwischen der definierten Menge der Verbindung (bspw. 50 g) und der Masse des Präzipitats nach Zentrifugation geteilt durch die definierte Menge Wasser (bspw. 1 L) ist die Wasser-Dispergierbarkeit der Substanz.

Zum Bestimmen der Wasser-Löslichkeit bzw. Wasser-Emulgierbarkeit einer flüssigen Substanz (beispielsweise Rapsöl) kann wie folgt vorgegangen werden. Es wird eine definierte Menge der Verbindung (bspw. 5 g) mit einer definierten Menge Wasser (bspw. 100 g destilliertes Wasser) vermengt und 24 Stunden gerührt. Die Mischung wird anschließend in einen Scheidetrichter überführt. Im Scheidetrichter wird die Mischung 5 Minuten stehen gelassen. Tritt nach dieser Zeit keine Phasenseparation auf, wird die Mischung weitere 2 Stunden, vorzugsweise weitere 10 Stunden ruhen gelassen. Tritt keine Phasenseparation auf, so gilt die Verbindung als wasserlöslich. Die Wasserlöslichkeit der Verbindung beträgt in diesem Beispiel mindestens 50 Gramm pro Liter. Tritt eine Phasenseparation auf, so werden die Phasen im Scheidetrichter getrennt und die organische Phase über Natriumsulfat getrocknet. Das Gewicht der getrockneten organischen Phase wird bestimmt (Masse der organischen Phase in Gramm). Die Differenz der definierten Menge der Verbindung (bspw. 5 g) und der Masse der organischen Phase in Gramm geteilt durch die definierte Menge Wasser (bspw. 0,1 L) ergibt die Wasser-Emulgierbarkeit der flüssigen Verbindung.

Eine weiter bevorzugte Trennmethode für dispergierte und nicht dispergierte Anteile ist die Zentrifugation. Nach adäquater Trocknung kann die Masse des Rückstandes in Gramm sowie daraus die Wasserlöslichkeit bzw. Wasser-Dispergierbarkeit bestimmt werden.

Um die gewünschte Dispergierbarkeit zu erreichen oder die Dispergierbarkeit zu erhöhen, ist es im Rahmen der Erfindung möglich und / oder vorteilhaft, der Mischung eine oberflächenaktive Substanz wie einen Emulgator und / oder Dispergator und / oder Stabilisierer hinzuzufügen. Dieses Vorgehen eröffnet auch die Möglichkeit, die hier beschriebenen Wirkungen, bevorzugt synergistischen Wirkungen, hinsichtlich der Verfestigung, selbst bei eher schlecht dispergierbaren kohäsionsmodifizierenden Verbindungen, zu erreichen.

Der Begriff "kohäsionsmodifizierend" im Kontext des Bestandteils (iii) bezeichnet vorliegend eine Verbindung, die in der Mischung in einer Mindestmenge vorliegt, die ausreicht, um die kohäsiven Eigenschaften eines Modellsubstrats wie hier beschrieben (gewaschener und getrockneter Quarzsand mit einer Körnung von 0-2 mm; vgl. Beispiel 1) zu modifizieren. Das bedeutet, dass eine Verbindung, die grundsätzlich (bei entsprechend ausreichend hoher Menge) kohäsionsmodifizierende Eigenschaften aufweist, jedoch in der Mischung unterhalb der Mindestmenge vorliegt, nicht als Bestandteil (iii) gilt. Unter dem Begriff "modifizieren" wird vorliegend insbesondere eine Erhöhung der Kohäsionskräfte zwischen den Substratpartikeln verstanden. Als Indiz für kohäsionsmodifizierende Eigenschaften dient das Vorhandensein wenigstens einer chemischen Gruppen, die in der Lage ist, Calcium und / oder Carbonat zu binden. Demnach weist eine bevorzugte kohäsionsmodifizierende Verbindung Calciumaffinität und / oder Carbonataffinität auf.

Bei den hier spezifisch genannten wasserlöslichen und / oder Wasser-dispergierbaren und / oder Wasser-emulgierbaren kohäsionsmodifizierenden Verbindungen handelt es sich per Definition um Verbindungen gemäß Bestandteil (iii) im Sinne der Erfindung. Die spezifisch genannten Verbindungen stellen jeweils bevorzugte Ausführungsformen dar.

Ob es sich bei einer anderen Verbindung (Testverbindung) um einen Bestandteil (iii) im Sinne der Erfindung handelt, kann bestimmt werden, indem der emissionsbedingte Gewichtsverlust des Modellsubstrats nach einer Minute Windexposition im Windkanal bei 12 m/s (ermittelt unter Bedingungen und an einem Substrat als Modellsubstrat wie in Beispiel 1 beschrieben) zu einem vordefinierten Zeitpunkt nach einmaliger Applikation einer Mischung, die neben den Bestandteilen (i) und (ii) die Testverbindung enthält, bestimmt wird (Testwert) und mit dem emissionsbedingten Gewichtsverlust verglichen wird, der sich zu dem vordefinierten Zeitpunkt nach einmaliger Applikation einer entsprechenden Mischung, die die zu untersuchende Verbindung nicht enthält, ergibt (Vergleichswert). Dem Fachmann ist bekannt, dass der Effekt von der eingesetzten Menge abhängen kann. Dieser Vergleich kann deshalb für verschiedene Mengen der Testverbindung erfolgen. Ist ein Testwert kleiner als der Vergleichswert, handelt es sich bei der Testverbindung in der getesteten Menge um eine Verbindung, die kohäsionsmodifizierend im Sinne der Erfindung ist. Durch einfache Löslichkeitsversuche (wie dem Fachmann bekannt und auch im vorliegenden Text beschrieben) kann bestimmt werden, ob die Verbindung das geforderte Löslichkeitsprofil erfüllt.

Bei dem vordefinierten Zeitpunkt kann es sich um 24, 36, 48, 60 und / oder 72 Stunden nach der Applikation handeln. Dem Fachmann ist bekannt, dass der Wassergehalt einen Effekt auf die Staubunterdrückung hat. Die Erfinder beobachteten, dass der synergistische Effekt besonders stark ist, wenn das Substrat voll getrocknet ist (nach etwa 4 Tagen). Deshalb ist es bevorzugt, dass eine Testung erfolgt, wenn das Substrat vollständig getrocknet ist, also bspw. 3 Tage, 3,5 Tage, 4 Tage, 4,5 Tage oder 5 Tage nach der Applikation.

Ob es sich bei der Verbindung (Testverbindung) um einen Bestandteil mit Calciumaffinität handelt, kann mittels Calciumaffinitätschromatographie getestet werden. Dieses Verfahren geht auf Porath J et al. (Porath J et al. Nature. 1975. 258(5536):598-599) zurück. Im Speziellen kann ein Protokoll in Anlehnung an von Campbell J A Biochem Soc Tans. 1991. 19(4):387S verwendet werden: Sepharose 6 Fast Flow (GE Healthcare, Life Science) wird in eine Säule (9x100 mm) geschichtet und viermal mit einer Calciumchloridlösung (5 mg/mL) gespült. Eine Spülung besteht aus einem Volumen, das dem einfachen Säulenvolumen entspricht (hierin definiert). Das Gel wird mit einem Tris-Acetat Puffer (pH 8.2, 0.1 M) mit Natriumchlorid (0.1 M) einmal gespült, um ungebundene Calciumionen zu entfernen. Die Testverbindung wird in dem Tris-Acetat/Natriumchlorid Puffer in einer Konzentration von 1 g Testsubstanz pro Liter gelöst, emulgiert bzw. dispergiert. Sollte die Testsubstanz aufgrund ihrer physikochemischen Eigenschaften nicht in dem entsprechenden Puffer löslich sein, so wird der Fachmann einen geeigneten Puffer auswählen. Als Detektionsverfahren wird Absorptionsspektroskopie bei einer Wellenlänge von 280 nm verwendet. Der Extinktionskoeffizient bei der Testverbindung sollte im Vorfelde fachmännisch bestimmt werden und sollte 1000 L mol$^{-1}$ cm$^{-1}$ beziehungsweise 40 L g$^{-1}$ cm$^{-1}$ überschreiten. Sollte dies nicht der Fall sein, wird der Fachmann eine geeignete Wellenlänge wählen, bei der der Extinktionskoeffizient den oben beschriebenen Wert übersteigt. Sollte dies bei keiner Wellenlänge der Fall sein, so ist die eluierte Menge durch gravimetrische und/oder atomspektroskopische Verfahren zu ermitteln. Die Testsubstanz ist auf die Säule aufzutragen. Hierbei wird über das aufgetragene Volumen und die Konzentration der Testsubstanz die Einsatzmenge der Testsubstanz ermittelt, dies ist die Einsatzmenge der Testsubstanz (hierin definiert). Nach dem Beladen der Testsubstanz wird die Säule mit dem Tris-Acetat/Natriumchlorid-Puffer gespült und die Probennahme gestartet. Die Säule ist dreimal mit dem Tris-Acetat/Natriumchlorid-Puffer zu spülen und die Fraktionen zu sammeln. Mittels Absorptionsspektroskopie ist die Testverbindungsmasse im Eluat zu ermitteln und aufzusummieren. Diese Summe der Testverbindungmassen in den einzelnen Fraktionen ist die eluierte Testverbindung (hierin definiert). Die eluiert Testverbindung ist durch die Einsatzmenge der Testsubstanz zu teilen. Ist der Quotient dieser Verbindungen kleiner als 0,98, so weist die Testverbindung Calciumaffinität auf. Weiter bevorzugt kann die Säule mit einer Ethylendiamintetraacetat (EDTA) Lösung (10 mM) vier Mal gespült werden, um die Testverbindung mit Calciumaffinität von der Säule zu lösen. Mittels Absorptionsspektroskopie ist die Testverbindungsmenge im Eluat zu ermitteln und aufzusummieren. Diese Summe ist die EDTA-eluierte Testverbindung (hierin definiert). Ist der Quotient aus EDTA-eluierter Testverbindung und Einsatzmenge der Testsubstanz größer als 0,02, so handelt es sich um eine Verbindung mit Calciumaffinität.

Ob es sich bei der Verbindung (Testverbindung) um einen Bestandteil mit Carbonataffinität handelt, kann mittels folgendem Assay getestet werden: Die Testverbindung wird in destilliertem Wasser mit einer Konzentration von 1 g pro Liter gelöst, emulgiert bzw. dispergiert, diese Lösung ist Komponente A. Als Komponente B wird eine 200 g pro Liter Natriumcarbonatlösung angefertigt. Ein Milliliter der vollständig homogenisierten Komponente A wird unter Rühren zu zehn Milliliter der Komponente B gegeben und 48 h inkubiert. Wenn es zu einer Ausfällung und/oder starken Gasentwicklung kommt, handelt es sich um eine Verbindung mit Carbonataffinität (qualitativer Nachweis). Dieser Assay kann auch (halb-)quantitativ mittels der Carbonatbestimmung nach Scheibler oder einer Weiterentwicklung dieser Methode (z.B. wie in Horváth, B. et al., A Simple Method for Measuring the Carbonate Content of Soils, Soil Science Society of America Journal 2005, 69, 1066-1068 beschrieben) durchgeführt werden. Hierzu muss das Gasvolumen bestimmt werden, das bei dem Zusammengeben der Testsubstanzen entsteht. Das entstandene Präzipitat ist mittels Zentrifugation von der Lösung zu trennen und zu trocknen. Im Anschluss wird das getrocknete Präzipitat mit Säure versetzt und das dabei entstehende Gasvolumen gemessen. Ist die Summe der beiden gemessenen Gasvolumina größer als 0,1 mL Gas pro 1 g Einsatzmenge der Testsubstanz, so handelt es sich um eine Verbindung mit Carbonataffinität. Ferner sind Mischungen bevorzugt, die dadurch charakterisiert sind, dass die durch die Bestandteile (i), (ii) und (iii) hervorgerufene staubunterdrückende Wirkung (hier auch als staubreduzierende Wirkung bezeichnet) größer ist als die Summe der staubunterdrückenden Wirkung, die durch die Bestandteile (i) und (ii) hervorgerufen wird, und der staubunterdrückenden Wirkung, die durch den Bestandteil (iii) hervorgerufen wird. Mit anderen Worten handelt es sich bei den besagten bevorzugten Mischungen um synergistisch wirkende Mischungen, die eine besonders gute Staubunterdrückung über einen langanhaltenden Zeitraum gewährleisten.

Die staubunterdrückende Wirkung kann durch Bestimmung des emissionsbedingten Gewichtsverlusts des Modellsubstrats nach einer Minute Windexposition im Windkanal bei 12 m/s (ermittelt unter Bedingungen und an einem Substrat als Modellsubstrat wie in Beispiel 1 beschrieben) zu einem definierten Zeitpunkt (bspw. 24 Stunden, 48 Stunden, 3 Tage, 4 Tage, usw.) nach einmaliger Applikation der jeweiligen Bestandteile bestimmt werden.

Bevorzugte Mischungen weisen als Bestandteil (ii) folgende Stoffe auf:

Harnstoff und dessen Salze; organische Säuren wie Milchsäure und deren Salze, bevorzugt Carboxylate, und deren Ester; Gluconsäure und deren Salze, bevorzugt Carboxylate, und deren Ester; Essigsäure und deren Salze, bevorzugt Carboxylate, und deren Ester; Ameisensäure und deren Salze, bevorzugt Carboxylate, und deren Ester; Propansäure und deren Salze, bevorzugt Carboxylate, und deren Ester; Butansäure und deren Salze, bevorzugt Carboxylate, und deren Ester; Pentansäure und deren Salze, bevorzugt Carboxylate, und deren Ester, Ameisensäure und deren Salze, bevorzugt Carboxylate, und deren Ester, Maleinsäure und deren Salze, bevorzugt Carboxylate, und deren Ester, Bernsteinsäure und deren Salze, bevorzugt Carboxylate, und deren Ester, Benztraubensäure und deren Salze, bevorzugt Carboxylate, und deren Ester, Acetessigsäure und deren Salze, bevorzugt Carboxylate, und deren Ester, Lävulinsäure und deren Salze, bevorzugt Carboxylate, und deren Ester, Oxalessigsäure und deren Salze, bevorzugt Carboxylate, und deren Ester, Zitronensäure und deren Salze, bevorzugt Carboxylate, und deren Ester, Fruchtsäuren, vorzugsweise Apfelsäure und deren Salze, bevorzugt Carboxylate, und deren Ester, Citronensäure und deren Salze, bevorzugt Carboxylate, und deren Ester, Fumarsäure und deren Salze, bevorzugt Carboxylate, und deren Ester, Gluconsäure und deren Salze, bevorzugt Carboxylate, und deren Ester, Glycolsäure und deren Salze, bevorzugt Carboxylate, und deren Ester, Mandelsäure und deren Salze, bevorzugt Carboxylate, und deren Ester, Oxalsäure und deren Salze, bevorzugt Carboxylate, und deren Ester, Salicylsäure und deren Salze, bevorzugt Carboxylate, und deren Ester, $\alpha$-Hydroxycaprylsäure und deren Salze, bevorzugt Carboxylate, und deren Ester und Weinsäure und deren Salze, bevorzugt Carboxylate, und deren Ester; Peptide, vorzugsweise enthaltend nicht-proteinogene Aminosäuren, Asparagin, Alanin, Glycin, Lysin, Glutamin und / oder Glutaminsäure; Aminosäuren, vorzugsweise nicht-proteinogene Aminosäuren, Asparagin, Alanin, Glycin, Lysin, Glutamin und Glutaminsäure, und deren Salze, bevorzugt Carboxylate, und deren Ester; pflanzliche und tierische Komplexsubstrate, insbesondere Pepton, Hefeextrakt, Fleischextrakt, Nährbouillon und Casaminosäure; industrielle Reststoffströme, insbesondere Maisquellwasser, Lactose-Mutterlauge, Proteinlysate, vorzugsweise aus Erbsen, Fleisch, Kartoffeln oder Tomaten; anaerobe Substrate, vorzugsweise Kohlenstoffdioxid und Methan.

Besonders bevorzugte Mischungen weisen als Bestandteil (ii) Harnstoff, Acetat, Formiat, Lactat, Propionat, Pyruvat, Glucose, Saccharose, Fructose, Glycerin, Gluconat, Lactose, und / oder Aminosäure(n) auf.

Bevorzugte Mischungen weisen als Bestandteile (iii) folgende Verbindungen auf:
Ligninsulfonat, insbesondere Calciumligninsulfonat, Calciumformiat, Calciumpropionat, Calciumlactat, Calciumacetat, Calciumpyruvat, Calciumsalicylat, Caseinat, Albumin, Alanin, Asparagin, Glycin, Glutamin, Glutamat, Lysin, nicht-proteinogene Aminosäuren, Hefeextrakt, Albumin, Polyvinylalkohol, Stärkeether, Magnesiumsulfat, Huminsäure, Alkalisilikat, Styrolacrylatdispersion, Polyvinylacetatdispersion, Polyacrylnitrildispersion, Polyacrylsäure, Polyacrylamid, Ethylenvinylacetatdispersion und Styrolbutadiendispersion.

Sofern im vorliegenden Text auf eine (Polymer-) Dispersion hingewiesen wird, ist damit auch das entsprechende Polymerisat umfasst.

In weiter bevorzugten Mischungen setzen sich die Bestandteile (ii) und (iii) (und optional der / die optionale(n) Bestandteil(e)) aus einer der folgenden Kombinationen zusammen, wobei erfindungsgemäß nur solche Mischungen sind, die von den Ansprüchen umfasst sind:

| Bestandteil (ii) | Bestandteil (iii) | Optionale Bestandteile |
|---|---|---|
| Harnstoff | Polyvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Polyvinylalkohol | Hefeextrakt, Ligninsulfonate, insbesondere Calciumligninsulfonat, Calciumsalze, Aminosäuren, Peptide, Cellulose und deren Derivate, Stärke und deren Derivate |
| Harnstoff | Ligninsulfonate, insbesondere Calciumligninsulfonat | Hefeextrakt, Polyvinylalkohol, Calciumsalze, Aminosäuren, Peptide, Cellulose und deren Derivate, Stärke und deren Derivate |
| Harnstoff | Calciumformiat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Calciumlactat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |

(fortgesetzt)

| Bestandteil (ii) | Bestandteil (iii) | Optionale Bestandteile |
|---|---|---|
| Harnstoff | Calciumacetat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Calciumpropionat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Stärkeether | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Stärkeester | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Celluloseether | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Celluloseester | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Styrolbutadiendispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Ethylenvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Styrolacrylatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Polyacrylnitrildispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Albumin | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Alanin | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |

(fortgesetzt)

| Bestandteil (ii) | Bestandteil (iii) | Optionale Bestandteile |
|---|---|---|
| Harnstoff | Glycin | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Glutamin | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Lysin | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Caseinat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Magnesiumsulfat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Hefeextrakt | ein anderer Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Huminsäure | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | Alkalisilikat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Harnstoff | nicht-proteinogene Aminosäuren | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Essigsäure | Ligninsulfonate, insbesondere Calciumligninsulfonat | Hefeextrakt, Polyvinylalkohol, Calciumsalze, Aminosäuren, Peptide, Cellulose und deren Derivate, Stärke und deren Derivate |
| Essigsäure | Stärkeether | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Essigsäure | Celluloseether | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |

(fortgesetzt)

| Bestandteil (ii) | Bestandteil (iii) | Optionale Bestandteile |
|---|---|---|
| Essigsäure | Polyvinylalkohol | Hefeextrakt, Ligninsulfonate, insbesondere Calciumligninsulfonat, Calciumsalze, Aminosäuren, Peptide, Cellulose und deren Derivate, Stärke und deren Derivate |
| Essigsäure | Huminsäure | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Essigsäure | Caseinat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Essigsäure | Milchsäure | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Essigsäure | Styrolbutadiendispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Essigsäure | Ethylenvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Essigsäure | Polyvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Essigsäure | Styrolacrylatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Milchsäure | Ligninsulfonate, insbesondere Calciumligninsulfonat | Hefeextrakt, Polyvinylalkohol, Calciumsalze, Aminosäuren, Peptide, Cellulose und deren Derivate, Stärke und deren Derivate |
| Milchsäure | Stärkeether | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Milchsäure | Celluloseether | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Milchsäure | Polyvinylalkohol | Hefeextrakt, Ligninsulfonate, insbesondere Calciumligninsulfonat, Calciumsalze, Aminosäuren, Peptide, Cellulose und deren Derivate, Stärke und deren Derivate |

(fortgesetzt)

| Bestandteil (ii) | Bestandteil (iii) | Optionale Bestandteile |
|---|---|---|
| Milchsäure | Huminsäure | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Milchsäure | Caseinat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Milchsäure | Styrolbutadiendispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Milchsäure | Ethylenvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Milchsäure | Polyvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Milchsäure | Styrolacrylatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| nicht-proteinogene Aminosäure | Ligninsulfonate, insbesondere Calciumligninsulfonat | Hefeextrakt, Polyvinylalkohol, Calciumsalze, Aminosäuren, Peptide, Cellulose und deren Derivate, Stärke und deren Derivate |
| nicht-proteinogene Aminosäure | Stärkeether | Hefeextrakt, Polyvinylalkohol, Calciumsalze, Aminosäuren, Peptide, Cellulose und deren Derivate, Stärke und deren Derivate |
| nicht-proteinogene Aminosäure | Celluloseether | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| nicht-proteinogene Aminosäure | Polyvinylalkohol | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| nicht-proteinogene Aminosäure | Huminsäure | Hefeextrakt, Ligninsulfonate, insbesondere Calciumligninsulfonat, Calciumsalze, Aminosäuren, Peptide, Cellulose und deren Derivate, Stärke und deren Derivate |
| nicht-proteinogene Aminosäure | Caseinat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |

(fortgesetzt)

| Bestandteil (ii) | Bestandteil (iii) | Optionale Bestandteile |
|---|---|---|
| nicht-proteinogene Aminosäure | Milchsäure | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| nicht-proteinogene Aminosäure | Styrolbutadiendispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| nicht-proteinogene Aminosäure | Ethylenvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| nicht-proteinogene Aminosäure | Polyvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Nicht-proteinogene Aminosäure | Styrolacrylatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Alanin | Ligninsulfonate, insbesondere Calciumligninsulfonat | Hefeextrakt, Polyvinylalkohol, Calciumsalze, Aminosäuren, Peptide, Cellulose und deren Derivate, Stärke und deren Derivate |
| Alanin | Stärkeether | Hefeextrakt, Polyvinylalkohol, Calciumsalze, Aminosäuren, Peptide, Cellulose und deren Derivate, Stärke und deren Derivate |
| Alanin | Celluloseether | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Alanin | Polyvinylalkohol | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Alanin | Huminsäure | Hefeextrakt, Ligninsulfonate, insbesondere Calciumligninsulfonat, Calciumsalze, Aminosäuren, Peptide, Cellulose und deren Derivate, Stärke und deren Derivate |
| Alanin | Caseinat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Alanin | Milchsäure | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |

(fortgesetzt)

| Bestandteil (ii) | Bestandteil (iii) | Optionale Bestandteile |
|---|---|---|
| Alanin | Styrolbutadiendispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Alanin | Ethylenvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Alanin | Polyvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Alanin | Styrolacrylatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glycin | Ligninsulfonate, insbesondere Calciumligninsulfonat | Hefeextrakt, Polyvinylalkohol, Calciumsalze, Aminosäuren, Peptide, Cellulose und deren Derivate, Stärke und deren Derivate |
| Glycin | Stärkeether | Hefeextrakt, Polyvinylalkohol, Calciumsalze, Aminosäuren, Peptide, Cellulose und deren Derivate, Stärke und deren Derivate |
| Glycin | Celluloseether | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glycin | Polyvinylalkohol | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glycin | Huminsäure | Hefeextrakt, Ligninsulfonate, insbesondere Calciumligninsulfonat, Calciumsalze, Aminosäuren, Peptide, Cellulose und deren Derivate, Stärke und deren Derivate |
| Glycin | Caseinat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glycin | Milchsäure | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glycin | Styrolbutadiendispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |

(fortgesetzt)

| Bestandteil (ii) | Bestandteil (iii) | Optionale Bestandteile |
|---|---|---|
| Glycin | Ethylenvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glycin | Polyvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glycin | Styrolacrylatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Lysin | Ligninsulfonate, insbesondere Calciumligninsulfonat | Hefeextrakt, Polyvinylalkohol, Calciumsalze, Aminosäuren, Peptide, Cellulose und deren Derivate, Stärke und deren Derivate |
| Lysin | Stärkeether | Hefeextrakt, Polyvinylalkohol, Calciumsalze, Aminosäuren, Peptide, Cellulose und deren Derivate, Stärke und deren Derivate, |
| Lysin | Celluloseether | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Lysin | Polyvinylalkohol | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Lysin | Huminsäure | Hefeextrakt, Ligninsulfonate, insbesondere Calciumligninsulfonat, Calciumsalze, Aminosäuren, Peptide, Cellulose und deren Derivate, Stärke und deren Derivate |
| Lysin | Caseinat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Lysin | Milchsäure | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Lysin | Styrolbutadiendispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Lysin | Ethylenvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |

(fortgesetzt)

| Bestandteil (ii) | Bestandteil (iii) | Optionale Bestandteile |
|---|---|---|
| Lysin | Polyvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Lysin | Styrolacrylatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Asparagin | Ligninsulfonate, insbesondere Calciumligninsulfonat | Hefeextrakt, Polyvinylalkohol, Calciumsalze, Aminosäuren, Peptide, Cellulose und deren Derivate, Stärke und deren Derivate |
| Asparagin | Stärkeether | Hefeextrakt, Polyvinylalkohol, Calciumsalze, Aminosäuren, Peptide, Cellulose und deren Derivate, Stärke und deren Derivate |
| Asparagin | Celluloseether | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Asparagin | Polyvinylalkohol | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Asparagin | Huminsäure | Hefeextrakt, Ligninsulfonate, insbesondere Calciumligninsulfonat, Calciumsalze, Aminosäuren, Peptide, Cellulose und deren Derivate, Stärke und deren Derivate |
| Asparagin | Caseinat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Asprain | Milchsäure | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Asparagin | Styrolbutadiendispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Asparagin | Ethylenvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Asparagin | Polyvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |

(fortgesetzt)

| Bestandteil (ii) | Bestandteil (iii) | Optionale Bestandteile |
|---|---|---|
| Asparagin | Styrolacrylatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glutamin | Ligninsulfonate, insbesondere Calciumligninsulfonat | Hefeextrakt, Polyvinylalkohol, Calciumsalze, Aminosäuren, Peptide, Cellulose und deren Derivate, Stärke und deren Derivate |
| Glutamin | Stärkeether | Hefeextrakt, Polyvinylalkohol, Calciumsalze, Aminosäuren, Peptide, Cellulose und deren Derivate, Stärke und deren Derivate |
| Glutamin | Celluloseether | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glutamin | Polyvinylalkohol | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glutamin | Huminsäure | Hefeextrakt, Ligninsulfonate, insbesondere Calciumligninsulfonat, Calciumsalze, Aminosäuren, Peptide, Cellulose und deren Derivate, Stärke und deren Derivate |
| Glutamin | Caseinat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glutamin | Milchsäure | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glutamin | Styrolbutadiendispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glutamin | Ethylenvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glutamin | Polyvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glumtain | Styrolacrylatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glutamat | Ligninsulfonate, insbesondere Calciumligninsulfonat | Hefeextrakt, Polyvinylalkohol, Calciumsalze, Aminosäuren, Peptide, Cellulose und deren Derivate, Stärke und deren Derivate |

(fortgesetzt)

| Bestandteil (ii) | Bestandteil (iii) | Optionale Bestandteile |
|---|---|---|
| Glutamat | Stärkeether | Hefeextrakt, Polyvinylalkohol, Calciumsalze, Aminosäuren, Peptide, Cellulose und deren Derivate, Stärke und deren Derivate |
| Glutamat | Celluloseether | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glutamat | Polyvinylalkohol | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glutamat | Huminsäure | Hefeextrakt, Ligninsulfonate, insbesondere Calciumligninsulfonat, Calciumsalze, Aminosäuren, Peptide, Cellulose und deren Derivate, Stärke und deren Derivate |
| Glutamat | Caseinat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glutamat | Milchsäure | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate, |
| Glutamat | Styrolbutadiendispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glutamat | Ethylenvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glutamat | Polyvinylacetatd isper sion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Glutamat | Styrolacrylatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Propionsäure | Ligninsulfonate, insbesondere Calciumligninsulfonat | Hefeextrakt, Polyvinylalkohol, Calciumsalze, Aminosäuren, Peptide, Cellulose und deren Derivate, Stärke und deren Derivate |
| Propionsäure | Stärkeether | Hefeextrakt, Polyvinylalkohol, Calciumsalze, Aminosäuren, Peptide, Cellulose und deren Derivate, Stärke und deren Derivate |
| Propionsäure | Celluloseether | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate, |

(fortgesetzt)

| Bestandteil (ii) | Bestandteil (iii) | Optionale Bestandteile |
|---|---|---|
| Propionsäure | Polyvinylalkohol | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Propionsäure | Huminsäure | Hefeextrakt, Ligninsulfonate, insbesondere Calciumligninsulfonat, Calciumsalze, Aminosäuren, Peptide, Cellulose und deren Derivate, Stärke und deren Derivate |
| Propionsäure | Caseinat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Propionsäure | Milchsäure | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Propionsäure | Styrolbutadiendispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Propionsäure | Ethylenvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Propionsäure | Polyvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Propionsäure | Styrolacrylatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Ameisensäure | Ligninsulfonate, insbesondere Calciumligninsulfonat | Hefeextrakt, Polyvinylalkohol, Calciumsalze, Aminosäuren, Peptide, Cellulose und deren Derivate, Stärke und deren Derivate |
| Ameisensäure | Stärkeether | Hefeextrakt, Polyvinylalkohol, Calciumsalze, Aminosäuren, Peptide, Cellulose und deren Derivate, Stärke und deren Derivate |
| Ameisensäure | Celluloseether | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Ameisensäure | Polyvinylalkohol | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |

(fortgesetzt)

| Bestandteil (ii) | Bestandteil (iii) | Optionale Bestandteile |
|---|---|---|
| Ameisensäure | Huminsäure | Hefeextrakt, Ligninsulfonate, insbesondere Calciumligninsulfonat, Calciumsalze, Aminosäuren, Peptide, Cellulose und deren Derivate, Stärke und deren Derivate |
| Ameisensäure | Caseinat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Ameisensäure | Milchsäure | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Ameisensäure | Styrolbutadiendispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Ameisensäure | Ethylenvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Ameisensäure | Polyvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Ameisensäure | Styrolacrylatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Hefeextrakt | Ligninsulfonate, insbesondere Calciumligninsulfonat | Hefeextrakt, Polyvinylalkohol, Calciumsalze, Aminosäuren, Peptide, Cellulose und deren Derivate, Stärke und deren Derivate |
| Hefeextrakt | Stärkeether | Hefeextrakt, Polyvinylalkohol, Calciumsalze, Aminosäuren, Peptide, Cellulose und deren Derivate, Stärke und deren Derivate |
| Hefeextrakt | Celluloseether | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Hefeextrakt | Polyvinylalkohol | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Hefeextrakt | Huminsäure | Hefeextrakt, Ligninsulfonate, insbesondere Calciumligninsulfonat, Calciumsalze, Aminosäuren, Peptide, Cellulose und deren Derivate, Stärke und deren Derivate |

(fortgesetzt)

| Bestandteil (ii) | Bestandteil (iii) | Optionale Bestandteile |
|---|---|---|
| Hefeextrakt | Caseinat | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Hefeextrakt | Milchsäure | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Hefeextrakt | Styrolbutadiendispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Hefeextrakt | Ethylenvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Hefeextrakt | Polyvinylacetatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |
| Hefeeextrakt | Styrolacrylatdispersion | Hefeextrakt, Ligninsulfonate, insbesondere Calciumligninsulfonat, Polyvinylalkohol, Calciumsalze, Aminosäuren, Peptide, Cellulose und deren Derivate, Stärke und deren Derivate |

Sofern nicht anderweitig angegeben, können die hier im Text genannten Stoffe (Säuren) auch als Salz, bevorzugt Carboxylat, oder Ester vorliegen.

Dem Fachmann ist bekannt, dass die Einsatzmenge des Bestandteils (iii) stark von dessen eigenen (bspw. physikochemischen) Eigenschaften und den Eigenschaften der anderen Bestandteile der erfindungsgemäß zu verwendenden Mischung sowie den Eigenschaften des Substrats abhängig ist und wird dementsprechend geeignete Kombinationen und Einsatzmengen des Bestandteils (iii) wählen. Liegt eine Verbindung gemäß Bestandteil (iii) in einem Kulturmedium vor, in dem sich der Bestandteil (i) als Bakterienkultur befindet, so ist deren Menge üblicherweise zu gering, um die gewünschten Wirkungen zu erzielen. Die durch die Bakterienkultur eingetragene Menge ist üblicherweise derart gering, dass die Verbindung in der resultierenden Mischung lediglich in Spuren vorhanden ist.

In bevorzugten Mischungen liegt der Bestandteil (iii) in einer Menge von mindestens 0,5 Gew.-%, bevorzugt mindestens 1,0 Gew.-%, weiter bevorzugt mindestens 1,5 Gew.-%, weiter bevorzugt mindestens 2,0 Gew.-%, weiter bevorzugt mindestens 2,5 Gew.-% und am meisten bevorzugt mindestens 3,0 Gew-% vor, jeweils bezogen auf die Gesamtmasse der Bestandteile (i), (ii) und (iii). In bevorzugten Mischungen liegt der Bestandteil (iii) in einer Menge von höchstens 85 Gew.-%, bevorzugt höchstens 75 Gew.-%, weiter bevorzugt höchstens 65 Gew.-%, weiter bevorzugt höchstens 55 Gew.-%, weiter bevorzugt höchstens 45 Gew.-% und am meisten bevorzugt höchstens 35 Gew-% vor, jeweils bezogen auf die Gesamtmasse der Bestandteile (i), (ii) und (iii). In besonders bevorzugten Mischungen liegt der Bestandteil (iii) in einer Menge von 0,5 bis 85 Gew.-%, bevorzugt 1,0 bis 75 Gew.-%, weiter bevorzugt 1,5 bis 65 Gew.-%, weiter bevorzugt 2,0 bis 55 Gew.-%, weiter bevorzugt 2,5 bis 45 Gew.-% und am meisten bevorzugt 3,0 bis 30 Gew-% vor, jeweils bezogen auf die Gesamtmasse der Bestandteile (i), (ii) und (iii).

Unter Polymerisat wie hier definiert fallen alle wasserlöslichen und / oder Wasser-dispergierbaren und / oder Wasser-emulgierbaren (wie hier definiert) Polymere. Polymerdispersionen stellen eine Untergruppe der Polymerisate dar.

In bestimmten Ausführungsformen handelt es sich bei der flüssigen oder getrockneten Polymerdispersion oder dem flüssigen oder getrockneten Polymerisat (soweit von den Ansprüchen umfasst) um ein Polymer oder Copolymer, das ein Monomer der nachfolgenden Monomere enthält oder sich aus zwei oder mehr verschiedenen Monomeren der nachfolgenden Monomere zusammensetzt: Ethylen, Propen, Butadien, Buten, Styrol, Isopren (sowie weitere allylische und arylische Monomeren), Acrylsäure und deren Salze, bevorzugt Carboxylate, und deren Ester, Vinyl-Monomeren, wie Vinylacetat, Vinylchlorid, Vinylneodecanoat, Vinylpyrrolidon und Vinylimidazol und jeweils dessen Derivate, Isocyansäure und deren Salze, weiter bevorzugt Cyanaten, insbesondere Mono- , Di- und Polyisocyanaten, Alkoholen, bevorzugt mehrwertigen Alkoholen, weiter bevorzugt Diolen, Triolen und Tetraolen, Aminen, bevorzugt mehrwertigen Aminen, weiter bevorzugt Diaminen, Triaminen, Tetraaminen, insbesondere Diaminobenzol, Ethylendiamin und Diethylentriamin, Epichlorhydrin, Bisphenolen, bevorzugt Bisphenol A und Bisphenol F, 2-ethyl-2-oxazolin, Ethylenoxid, Propylenoxid, Harnstoff, Melamin, Phenol, Formaldehyd, Siloxan, Tetrametylsilan, Trimetylchlorsilan, Dimethyldichlorislan, Methyltrichlorsilan, Tetrachlorsilan, Acrylnitril, Maleinsäure, Hydroxysäuren, bevorzugt Hydroxyfettsäuren, Dicarbonsäuren, bevorzugt Oxalsäure, Malonsäure, Bernsteinsäure, Glutarsäure, Adipinsäure, Pimelinsäure, Korksäure, Azelainsäure, Sebacinsäure und Terephtalsäure, Acrylamid, Aminosäuren, nicht-proteinogene Aminosäuren, Monosaccharide, Disaccharide, Oligosaccharide, sowie deren Derivate.

In weiter bevorzugten Mischungen ist der Bestandteil (iii) ausgewählt aus der Gruppe bestehend aus:

Calciumligninsulfonat, Natriumligninsulfonat, Kaliumligninsulfonat, Magnesiumligninsulfonat, Ammoniumligninsulfonat, Kraft-Lignine, Huminsäure und deren Salze, bevorzugt Carboxylaten und deren Derivaten,

Fasern und Faserstoffe, die ausgewählt sind aus der Gruppe bestehend aus Cellulosefasern, Holzfasern und Holzcellulosefasern,

Gummi arabicum, Xanthan, Alginate und Agar Agar,

Proteinquellen und / oder Aminosäuren, die ausgewählt sind aus der Gruppe bestehend aus Casein, Albumin, Hefeextrakte, Peptone, Caseinat, Calciumcaseinat, Milchpulver, Alanin, Glycin, Lysin, Asparagin, Glutamin, Glutamat, nicht-proteinogene Aminosäure, Reststoffe und Industriestoffe, die ausgewählt sind aus der Gruppe bestehend aus Maisquellwasser, Lactose-Mutterlaugen, Proteinlysaten, Melasse, Proteinabfällen, vorzugsweise aus der Hefeproduktion, Fleischherstellung, Obstherstellung, Gemüseherstellung, Milchindustrie und Papierfabrikation,

flüssigen und getrockneten Polymerdispersionen oder Polymerisaten, die ausgewählt sind aus der Gruppe bestehend aus Polyhydroxybutyrat, Polylactid, Polybutylensuccinat, Polyacrylsäure, Polymethacrylat, Poly(2-hydroxyethylmethacrylat), Polyvinylalkohol, Polyvinylacetat, Polyvinylpyrrolidon, Poly(2-ethyl-2-oxazolin), Polystyrol, Polyamid, Styrolbutadiene, Styrolacrylate, Styrole, Acrylate, Acrylsäuren, Vinylacetate, Isocyanate, Epoxide und Polyaminosäuren. In besonders bevorzugten Mischungen ist der Bestandteil (iii) ausgewählt aus der Gruppe bestehend aus Ligninsulfonat, insbesondere Calciumligninsulfonat, Hefeextrakt, Albumin, Stärkeether, Alanin, Lysin, Styrolacrylatdispersion, Polyvinylalkohol, Polyvinylacetatdispersion, Styrolbutadiendispersion, Huminsäure, Alkalisilikat und Kombinationen davon.

Ferner sind Mischungen bevorzugt, in denen der Bestandteil (ii) ausgewählt ist aus der Gruppe bestehend aus:

Harnstoff und dessen Salze; organischen Säuren wie Milchsäure und deren Salze, bevorzugt Carboxylate, und deren Ester; Gluconsäure und deren Salze, bevorzugt Carboxylate, und deren Ester; Essigsäure und deren Salze, bevorzugt Carboxylate, und deren Ester; Ameisensäure und deren Salze, bevorzugt Carboxylate, und deren Ester; Propansäure und deren Salze, bevorzugt Carboxylate, und deren Ester; Butansäure und deren Salze, bevorzugt Carboxylate, und deren Ester; Pentansäure und deren Salze, bevorzugt Carboxylate, und deren Ester; Peptide, vorzugsweise enthaltend nicht-proteinogene Aminosäuren, Asparagin, Alanin, Glycin, Lysin, Glutamin und / oder Glutaminsäure; Aminosäuren, vorzugsweise nicht-proteinogene Aminosäuren, Asparagin, Alanin, Glycin, Lysin, Glutamin und Glutaminsäure, und deren Salze, bevorzugt Carboxylate, und deren Ester; pflanzliche und tierische Komplexsubstrate, insbesondere Pepton, Hefeextrakt, Fleischextrakt, Nährbouillon und Casaminosäure; industrielle Reststoffströme, insbesondere Maisquellwasser, Lactose-Mutterlauge, Proteinlysate, vorzugsweise aus Erbsen, Fleisch, Kartoffeln oder Tomaten; anaerobe Substrate, vorzugsweise Kohlenstoffdioxid und Methan,

vorausgesetzt, dass die Bestandteile (ii) und (iii) verschieden voneinander sind.

Bevorzugt ist eine Verwendung wie vorangehend beschrieben, wobei die Mischung in flüssiger Form, als Gel, Paste oder als Pulver vorliegt.

Die erfindungsgemäß zu verwendende Mischung kann in Form einer flüssigen, gelartigen, pastösen oder pulverförmigen Mischung oder in Form von zwei, drei, vier oder mehr getrennt voneinander vorliegenden flüssigen und / oder gelartigen und / oder pastösen und / oder pulverförmigen Vor-Mischungen, die vor oder während der Verwendung miteinander vermischt werden, vorliegen bzw. angewendet werden.

Insbesondere in Form eines Pulvers weist die Mischung bzw. weisen die Vor-Mischungen vorteilhafterweise eine besonders lange Lagerstabilität, vorzugsweise von mindestens 12 bis 24 Monaten, auf.

Eine Pulverform der Mischung bzw. Vor-Mischung kann durch dem Fachmann geläufige Standardverfahren, beispielsweise durch Sprühtrocknung, Gefriertrocknung, (Niedertemperatur-)Vakuumtrocknung, Wirbelschichttrocknung und / oder unter Zuhilfenahme einer Filtration mit Filterhilfsmitteln, erhalten werden.

Pulverförmig bedeutet im Rahmen dieses Textes, dass der Gehalt an flüssigen Komponenten, vorzugsweise an Wasser, in der Mischung 10 Gew.-% oder weniger, vorzugsweise 5 Gew.-% oder weniger, vorzugsweise 2,5 Gew.-% oder weniger, weiter bevorzugt 1,0 Gew.-% oder weniger, am meisten bevorzugt 0,1 Gew.-% oder weniger, bezogen auf das Gesamtgewicht der erfindungsgemäß zu verwendenden Mischung bzw. der Vor-Mischung, beträgt.

Der Gehalt an flüssigen Komponenten, vorzugsweise an Wasser, in der Mischung bzw. Vor-Mischung kann durch dem Fachmann bekannte Standardverfahren bestimmt werden. Beispielsweise kann eine gravimetrische Gehaltsbestimmung der flüssigen Komponenten durchgeführt werden, wobei die entnommene Probe gewogen wird, dann über einen ausreichenden Zeitraum bis zur Trocknung auf eine Temperatur über dem Siedepunkt der flüssigen Komponenten erwärmt wird und anschließend erneut gewogen wird. Aus der Gewichtsdifferenz vor und nach der Trocknung lässt sich der Gehalt in Gew.-% an flüssigen Komponenten, vorzugsweise an Wasser, bestimmen.

Gemäß einer weiteren Ausführungsform kann die erfindungsgemäß zu verwendende Mischung auch in Form einer gelartigen oder pastösen Mischung oder in Form von zwei, drei, vier oder mehr getrennt voneinander vorliegenden festen und / oder flüssigen und / oder gelartigen und / oder pastösen Vor-Mischungen, die vor oder während der Verwendung miteinander vermischt werden, vorliegen bzw. angewendet werden.

Vorteilhafterweise führt eine erfindungsgemäße Verwendung der Mischung zu einer für die hierin beschriebenen Zwecke besonders geeigneten Dicke der Biozementschicht. Vorzugsweise wird hierbei eine Biozement-Schicht mit einer Dicke von wenigstens 1 mm erhalten, vorzugsweise von wenigstens 3 mm, weiter bevorzugt von wenigstens 10 mm. Weiter bevorzugt ist es, wenn die Schichtdicke maximal 100 mm, vorzugsweise maximal 50 mm, weiter bevorzugt maximal 35, weiter bevorzugt maximal 30 mm, beträgt. Im Ergebnis ist es besonders bevorzugt, wenn die Schichtdicke der insgesamt gebildeten Biozementschicht im Bereich von 1 mm bis 100 mm, vorzugsweise von 10 mm bis 50 mm, weiter bevorzugt von 10 mm bis 35 mm, weiter bevorzugt 10 bis 30 mm, liegt. Die Schichtdicke der Biozement-Schicht umfasst den Bereich des Substrats, der durch die Zugabe der Mischung verfestigt wird. Die Dicke der Biozement-Schicht kann durch manuelle Messung nach mechanischem Bruch der Schicht mit Hilfe eines Messschiebers bestimmt werden. Alternativ können je nach Dicke der Verfestigung unterschiedliche (zerstörungsfreie) Messverfahren aus Bau, Landwirtschaft, Geologie oder weiteren Einsatzgebieten verwendet werden (z.B. Handgerät MIT-SCAN-T2).

Gemäß einer weiteren bevorzugten Ausführungsform führt eine erfindungsgemäße Verwendung der Mischung wie hierin beschrieben zu einer Biozement-Schicht, die wasserdurchlässig, d.h. wasserpermeabel oder wassersemipermeabel, ist. Dies ist besonders vorteilhaft, da beispielsweise Regenwasser im Außenbereich auch im biozementierten Bereich ohne Hinderung in die gebildete Biozement-Schicht eindringen und abfließen kann. Die Wasserdurchlässigkeit einer Probe wird herkömmlich als Wasserfluss durch die Probe in einer definierten Zeitperiode angegeben. Sie kann als Permeabilitätsrate (in cm/h, mm/h oder cm/Tag) oder alternativ in Form des Durchlässigkeitsbeiwerts (coefficient of permeability, in m/s) ausgedrückt werden. Eine Angabe des Durchlässigkeitsbeiwerts ermöglicht eine Klassifizierung einer Probe, vorzugsweise einer Bodenprobe, beispielsweise in die Kategorien (wasser-) permeabel, (wasser-) semipermeabel und (wasser-) impermeabel.

Im Rahmen des vorliegenden Textes steht der Begriff "wasserpermeable Biozement-Schicht" für eine Biozement-Schicht mit einem (Wasser-) Durchlässigkeitsbeiwert von größer als $10^{-5}$ bis $10°$ m/s, und der Begriff "wassersemipermeable Biozement-Schicht" für eine Biozement-Schicht mit einem (Wasser-) Durchlässigkeitsbeiwert von größer als $10^{-9}$ bis $10^{-5}$ m/s, und der Begriff "wasserimpermeable Biozement-Schicht" für eine Biozement-Schicht mit einem (Wasser-) Durchlässigkeitsbeiwert von $10^{-11}$ (oder weniger) bis $10^{-9}$ m/s. Gängige Methoden zur Bestimmung des Durchlässigkeitsbeiwerts umfassen Labormethoden (z.B. Rammkernsondierungen und anschließende Bestimmung der wassergesättigten Durchlässigkeit im Labor) und Feldmethoden (z.B. Bestimmung der Infiltrationsrate mit einem Doppelringinfiltrometer).

Eine bevorzugte Ausführungsform bezieht sich auf die Verwendung einer Mischung wie hierin definiert, wobei die gebildete Biozement-Schicht einen (Wasser-) Durchlässigkeitsbeiwert von größer als $10^{-9}$ bis $10°$ m/s, bevorzugt von größer als $10^{-9}$ bis $10^{-3}$ m/s, weiter bevorzugt von größer als $10^{-8}$ bis $10^{-3}$ m/s, aufweist.

Die erfindungsgemäße Verwendung zeigt eine robuste Funktonalität unter reellen (Umwelt-) Bedingungen, ist einfach anwendbar (oftmals durch eine einmalige Applikation) und ermöglicht den Verzicht auf bzw. die Reduktion von toxischen Substanzen. Des Weiteren kann sie auch mit weiteren Maßnahmen zur Staubunterdrückung kombiniert werden. In gewissen Fällen kann es gewünscht sein, die Verfestigung rückgängig zu machen. Vorteilhafterweise ist die erfindungsgemäße Verwendung reversibel, d.h. die Biozementierung des Substrats bzw. von Teilen des Substrats kann bei Bedarf beispielsweise durch die Applikation geeigneter Säuren oder durch mechanisches Brechen wieder rückgängig gemacht werden. Das Substrat bzw. Teile des Substrats können auf diese Weise beispielsweise zum Anbau von Kulturpflanzen zugänglich gemacht werden. Eine Ausführungsform bezieht sich daher auf die Verwendung einer Mischung wie hierin definiert, wobei die Biozementierung des Substrats bzw. von Teilen des Substrats rückgängig gemacht werden kann bzw. vorzugsweise rückgängig gemacht wird.

Bevorzugt ist eine Verwendung wie vorangehend beschrieben, wobei einer bzw. der, mehrere oder sämtliche Organismen ausgewählt ist / sind aus der Gruppe bestehend aus Mikroorganismen, vorzugsweise ausgewählt aus der Gruppe bestehend aus Mikroorganismen der Abteilung Firmicutes, vorzugsweise der Klasse Bacilli, vorzugsweise der Ordnung Bacillales, vorzugsweise der Familien Planococcaceae oder Bacillaceae, vorzugsweise der Gattungen *Sporosarcina, Lysinibacillus* oder *Bacillus,* vorzugsweise ausgewählt aus den Arten *Sporosarcina pasteurii, Sporosarcina ureae, Lysinibacillus sphaericus, Lysinibacillus fusiformis, Bacillus megaterium, Lysinibacillus sp., Bacillus pseudofirmus, Bacillus halodurans* oder *Bacillus cohnii;* und Mikroorganismen der Abteilung Proteobacteria, vorzugsweise der Klassen Alphaproteobacteria, Gammaproteobacteria, Deltaproteobacteria oder Epsilonproteobacteria, vorzugsweise der Ordnungen Enterobacteriales, Myxococcales, Campylobacterales, Pseudomonadales oder Caulobacterales, vorzugsweise der Familien Enterobacteriaceae, Myxococcaceae, Helicobacteraceae, Pseudomonadaceae oder Caulobacteraceae, vorzugsweise der Gattungen *Proteus, Myxococcus, Helicobacter, Pseudomonas* oder *Brevundimonas,* vorzugsweise ausgewählt aus den Arten *Proteus vulgaris, Proteus mirabilis, Myxococcus xanthus, Helicobacter pylori, Pseudomonas aeruginosa* oder *Brevundimonas diminuta;* und Mikroorganismen der Abteilung Actinobacteria, vorzugsweise der Klasse Actinobacteria, vorzugsweise der Ordnung Actinomycetales, vorzugsweise der Familien Brevibacteriaceae oder Micrococcineae, vorzugsweise der Gattungen *Brevibacterium* oder *Micrococcaceae,* vorzugsweise ausgewählt aus den Arten *Brevibacterium linens* oder *Arthrobacter crystallopoietes;* und Mikroorganismen der Abteilung Cyanobacteria, vorzugsweise der Klasse Cyanobacteria, vorzugsweise der Ordnung Synechococcales, vorzugsweise der Familie Synechococcaceae, vorzugsweise der Gattung *Synechococcus,* vorzugsweise der Art *Synechococcus;* und aeroben Bakterien, anaeroben Bakterien, fakultativ anaeroben Bakterien und deren Zwischenstufen.

Hiervon umfasst sind auch sämtliche Varianten, Serotypen, Mutanten und Sporen sowie etwaige abgeleitete genetisch veränderte Mikroorganismen.

Der vorgenannte Organismus bzw. die vorgenannten Organismen, vorzugsweise Mikroorganismen, kann / können (gemeinsam oder getrennt voneinander) in Flüssigkeit(en) wie beispielsweise Pufferlösungen, Lösungsmittel, Nährmedien und / oder Mischungen davon, vorliegen, wobei diese Mischungen auch tiefgefroren sein können, oder in Pulver-Form vorliegen können.

Gemäß der vorliegenden Erfindung ist der Organismus oder sind die Organismen, der bzw. die dazu in der Lage ist / sind, Carbonat zu bilden, die Carbonat-Bildung zu induzieren und / oder zu katalysieren, Bestandteil der verwendeten Mischung.

Alternativ ist es denkbar und im Rahmen der Erfindung ebenfalls vorgesehen, dass (indigene) Organismen, die im zu behandelnden Substrat, vorzugsweise Boden, vorliegen bzw. aus besagtem Substrat isoliert, im Labor kultiviert und dann wieder auf/in das Substrat eingebracht werden, dazu in der Lage ist / sind, Carbonat zu bilden, die Carbonat-Bildung zu induzieren und / oder zu katalysieren. In diesem Fall sind alternative bzw. äquivalente Ausführungsformen denkbar (und dementsprechend hierin als erfindungsgemäß umfasst), in denen die Organismen der erfindungsgemäß zu verwendenden Mischung und die (indigenen) Organismen in / auf dem Substrat gemeinsam das Carbonat bilden, die Carbonat-Bildung induzieren und / oder katalysieren bzw. in denen die zu verwendende Mischung selbst keine Organismen enthält, die dazu in der Lage ist / sind, Carbonat zu bilden, die Carbonat-Bildung zu induzieren und / oder zu katalysieren. Gemäß einer bevorzugten Ausführungsform umfasst oder besteht Bestandteil (i) der erfindungsgemäß zu verwendenden Mischung aus einer Kombination von einem Organismus oder mehreren Organismen, die dazu in der Lage ist / sind, Carbonat zu bilden, die Carbonat-Bildung zu induzieren und / oder zu katalysieren, und solchen, die nicht dazu in der Lage sind.

Gemäß einer bevorzugten Ausführungsform umfasst oder besteht Bestandteil (i) der erfindungsgemäß zu verwendenden Mischung aus einer Kombination von aeroben Bakterien, anaeroben Bakterien und / oder fakultativ anaeroben Bakterien und / oder deren Zwischenstufen.

Gemäß einer weiteren bevorzugten Ausführungsform umfasst oder besteht Bestandteil (i) der erfindungsgemäß zu verwendenden Mischung aus einer Kombination von einem Organismus oder mehreren Organismen, die dazu in der Lage ist / sind, Carbonat ureolytisch zu bilden, die Carbonat-Bildung ureolytisch zu induzieren und / oder zu katalysieren, und solchen, der bzw. die nicht zur Ureolyse in der Lage ist / sind bzw. überhaupt nicht dazu in der Lage sind, Carbonat zu bilden, die Carbonat-Bildung zu induzieren und / oder zu katalysieren.

Dem Fachmann ist dabei bekannt, dass eine Biozementierung (wie hierin definiert) unter erfindungsgemäßer Verwendung einer Mischung (wie hierin definiert) besonders effizient in einem bestimmten Zellzahl-Spektrum der verwendeten Organismen abläuft. Laut eigener Untersuchungen beträgt die Zellzahl des Organismus bzw. der Organismen in der erfindungsgemäß zu verwendenden Mischung vorzugsweise mindestens $10^7$ Zellen / mL, weiter bevorzugt mindestens $10^8$ Zellen / mL, und / oder vorzugsweise höchstens $10^{12}$ Zellen / mL, bevorzugt höchstens $10^{10}$ Zellen / mL, weiter bevorzugt höchstens $10^9$ Zellen / mL. Gemäß einer bevorzugten Ausführungsform beträgt die Zellzahl des Organismus bzw. der Organismen in der erfindungsgemäß zu verwendenden Mischung $10^8$ bis $10^9$ Zellen / mL.

Bevorzugt ist eine Verwendung wie vorangehend beschrieben, wobei ein bzw. das, mehrere oder sämtliche Enzyme ausgewählt ist / sind aus der Gruppe bestehend aus Urease, Asparaginase, Carboanhydrase und metabolischen Enzymen.

Bei metabolischen Enzymen handelt es sich im Rahmen des vorliegenden Textes bevorzugt um Enzyme des Stoffwechsels eines oder mehrerer (Mikro-) Organismen wie hierin beschrieben, die, beispielsweise unter Umsetzung von Acetat und / oder Lactat, in der Lage sind, Carbonat zu bilden, die Carbonat-Bildung zu induzieren und / oder zu katalysieren. Vorzugsweise wird / werden in Bestandteil (i) der erfindungsgemäß zu verwendenden Mischung ein Organismus oder mehrere Organismen (wie vorangehend definiert) verwendet, der / die ein oder mehrere der vorgenannten Enzyme produzieren können, bzw. vorzugsweise werden die vorgenannten Enzyme aus den oben genannten Organismen gewonnen oder freigesetzt.

Handelt es sich bei dem verwendeten Organismus bzw. den verwendeten Organismen um einen pathogenen Organismus / pathogene Organismen, so ist es im Rahmen des vorliegenden Textes bevorzugt, wenn in Bestandteil (i) der erfindungsgemäß zu verwendenden Mischung lediglich die daraus gewonnenen oder freigesetzten, nicht pathogenen, Enzyme verwendet werden.

Gemäß einer weiteren bevorzugten Ausführungsform können in Bestandteil (i) der erfindungsgemäß zu verwendenden Mischung Kombinationen aus Enzymen, die aus den oben genannten Organismen gewonnen oder freigesetzt werden, mit Enzymen nichtmikrobieller Herkunft (beispielsweise pflanzliche Enzyme) verwendet werden. Das Enzym Urease kann beispielsweise aus Soja-Bohnen gewonnen und erfindungsgemäß verwendet werden.

Gemäß einer weiteren bevorzugten Ausführungsform können in Bestandteil (i) der erfindungsgemäß zu verwendenden Mischung Kombinationen aus einem oder mehreren der oben genannten Organismen, der bzw. die dazu in der Lage ist / sind, Carbonat zu bilden, die Carbonat-Bildung zu induzieren und / oder zu katalysieren, mit einem oder mehreren der oben genannten Enzyme, das bzw. die dazu in der Lage ist / sind, Carbonat zu bilden, die Carbonat-Bildung zu induzieren und / oder zu katalysieren, verwendet werden.

Carbonate können mit Hilfe der oben genannten Enzyme durch verschiedene Stoffwechselprozesse generiert werden. Beispielsweise kann durch aerobe Verstoffwechslung organischer Kohlenstoffquellen eine Ammonifikation stattfinden (z.B. Enzym Asparaginase) oder es kann eine heterotrophe Verstoffwechslung organischer Kohlenstoffquellen (z.B. Calciumlactat oder Calciumacetat) stattfinden. Beide Prozesse stellen Carbonate bereit. Auch die aerobe und anaerobe Photosynthese kann zur Bildung von Carbonaten herangezogen werden, genauso wie die anaerobe Denitrifikation, anaerobe Sulfatreduktion und (an)aerobe Methanoxidation.

Die Biozementierung mit Hilfe der erfindungsgemäß zu verwendenden Mischung kann daher auf einem oder mehreren der vorgenannten Stoffwechselprozesse beruhen.

Ob ein anderer Organismus oder ein anderes Enzym als die hier konkret genannten Organismen oder die hier konkret genannten Enzyme ein Bestandteil (i) im Sinne der Erfindung darstellt, kann mithilfe des nachfolgend beschriebenen Assays A bestimmt werden.

(Assay A)

(i) Bereitstellen und Inkontaktbringen eines zu testenden Organismus oder einer zu testenden Mischung von Organismen (Testorganismus) und des Bestandteils (ii),

(ii) Bereitstellen eines Mittels zur Feststellung einer Ureolyse und / oder Carbonatbildung,

(iii) Kombinieren der in Schritt (i) resultierenden Mischung mit dem Mittel aus Schritt (ii), und

(iv) Bestimmen anhand des Mittels aus Schritt (ii), ob eine Ureolyse und / oder Carbonatbildung vorliegt,

wobei es sich bei dem Testorganismus um einen Bestandteil (i) im Sinne der Erfindung handelt, wenn in Schritt (iv) eine Ureolyse und / oder Carbonatbildung festgestellt wird.

Gemäß einem leicht modifizierten Assay A' umfasst Schritt (i) des Weiteren ein Modellsubstrat (wie hier beschrieben), und Schritt (iv) umfasst das Bestimmen, ob eine Biozementierung festgestellt wird, wobei es sich bei dem Testorganismus um einen Bestandteil (i) im Sinne der Erfindung handelt, wenn eine Biozementierung festgestellt wird.

Handelt es sich bei dem zu testenden Bestandteil um ein Enzym oder um eine Enzymmischung, kann analog vorgegangen werden.

Die folgenden Ausführungen können bei der Auswahl von im Rahmen einer erfindungsgemäßen Verwendung geeigneten Organismen hilfreich sein.

Der in Schritt (i) von Assay A wie hierin definiert bereitzustellende Bestandteil (ii), ist im vorliegenden Text näher definiert, auch anhand ausgewählter und bevorzugter Beispiele.

In Schritt (i) von Assay A wie hierin definiert können z.B. Reinkulturen des zu charakterisierenden Organismus (z.B. aus Stammsammlungen) bereitgestellt werden, und / oder der zu charakterisierende Organismus bzw. die zu charakterisierende Mischung von Organismen können beispielsweise aus einer geeigneten Probe (z.B. Bodenprobe) mittels eines Nährstoffmediums (z.B. Christensen-Urea-Agar, B4-Medium oder M-3P-Medium) isoliert und zu einer für die weitere Untersuchung geeigneten Zellkultur kultiviert werden. Das zur Isolierung und Kultivierung verwendete Nährstoffmedium kann flüssig oder fest sein. Dem Fachmann ist bekannt, dass das Nährmedium nach den Ansprüchen des Organismus / der Organismen variiert werden kann. Der / die Organismen werden vorzugsweise bis zu einer Zelldichte zwischen $1 \times 10^7$ bis $1 \times 10^{12}$ Zellen/mL kultiviert. Dem Fachmann ist bekannt, dass beispielsweise die Kultivierungstemperatur und die Medienzusammensetzung gemäß den Bedürfnissen des Organismus bzw. der Mischung von Organismen ausgewählt werden. Die bereit- bzw. hergestellte Zellkultur wird dann mit dem Bestandteil (ii) und ggfs. dem Modellsubstrat in Kontakt gebracht, um eine Mischung zu erhalten, die dann in Schritt (iii) mit dem Mittel aus Schritt (ii) kombiniert wird.

Das Mittel zur Feststellung einer Ureolyse und / oder Carbonatbildung in Schritt (ii) von Assay A wie hierin definiert ist beispielsweise ein pH-Indikator, eine Vorrichtung und / oder ein oder mehr Stoff(e) zur Messung der Ureaseaktivität, eine Vorrichtung und / oder ein oder mehr Stoff(e) zur Messung der durch die Biozementierung gebildeten Carbonatmenge, oder eine Vorrichtung zur Messung des Grades der Verfestigung des Substrats (durch die Biozementierung).

Die Bestimmung, ob eine Ureolyse und / oder Carbonatbildung vorliegt, in Schritt (iv) des Assays A wie hierin definiert, insbesondere die Feststellung einer Biozementierung kann qualitativ oder bevorzugt quantitativ erfolgen.

Eine bevorzugte Methode zur besagten Bestimmung ist beispielsweise die Zugabe eines geeigneten pH-Indikators (z.B. Phenolrot, vorzugsweise in einer Konzentration von 15 mg/L) zur in Schritt (i) resultierenden Mischung. Im Falle des Vorliegens einer Ureolyse und / oder Carbonatbildung erhöht sich der pH-Wert der Mischung, was zu einer Farbänderung des Indikators (z.B. im Falle von Phenolrot zur Pinkfärbung) führt.

Wird der Mischung aus Schritt (i) eine Kationen-Quelle, vorzugsweise eine Calcium-Quelle, hinzugefügt, kommt es im Falle des Vorliegens einer Ureolyse und / oder Carbonatbildung bei Festmedien in der Regel zur Kalkkrustenbildung um die Kolonien bzw. auf den Kolonien des Organismus bzw. der Organismen. Bei flüssigen Nährmedien kommt es bei ausreichender Verfügbarkeit einer Kationen-Quelle, vorzugsweise einer Calcium-Quelle (z.B CaCl2), und einer Carbonat-Quelle (z.B. Harnstoff) in der Regel zu Kalkpräzipitationen. Auch diese Kalkkrustenbildung bzw. Kalkpräzipitation kann als optischer Nachweis für eine Ureolyse und / oder Carbonatbildung dienen bzw. können die besagten Kalkkrustenbildungen bzw. Kalkpräzipitationen durch eine qualitative und / oder quantitative Carbonatbestimmung, vorzugsweise mit Hilfe der (halb-)quantitativen Carbonatbestimmung nach Scheibler oder einer Weiterentwicklung dieser Methode (z.B. wie in Horváth, B. et al., A Simple Method for Measuring the Carbonate Content of Soils, Soil Science Society of America Journal 2005, 69, 1066-1068 beschrieben), analysiert werden.

Eine weitere Methode zur besagten Bestimmung ist beispielsweise eine Messung der Ureaseaktivität des Organismus oder der Mischung von Organismen. Dabei wird der zu analysierende Organismus oder die zu analysierende Mischung von Organismen u.a. mit gepuffertem Harnstoff (z.B. 1,5 M Harnstoff in 0,1 M Tris-HCl, pH 7,5) gemischt und die Bildung der entstandenen Ammoniumionen konduktometrisch als Anstieg des Messsignals über die Zeit gemessen und die Ureaseaktivität berechnet (wie z.B. in V. S. Whiffin, Microbial CaCOs Precipitation for the production of Biocement, Dissertation, 2004, Murdoch University, Western Australia beschrieben). Die Ureaseaktivität liegt vorzugsweise zwischen $1 \times 10^{-7}$ bis $1 \times 10^{-11}$ mM hydrolisierter Harnstoff/min/cm/Zellen/mL, weiter bevorzugt zwischen $1 \times 10^{-8}$ bis $1 \times 10^{-10}$ mM hydrolisierter Harnstoff/min/cm/Zellen/mL, weiter bevorzugt zwischen $1 \times 10^{-8}$ bis $1 \times 10^{-9}$ mM hydrolisierter Harnstoff/min/cm/Zellen/mL. Ersteres entspricht ungefähr einer Harnstoffhydrolyserate von 0 - 300 mM hydrolisierter Harnstoff / min, je nach eingesetzter Zellzahl. Eine weitere bevorzugte Methode zur besagten Bestimmung stellt beispielsweise die Messung der durch die Biozementierung gebildeten Carbonatmenge, vorzugsweise mit Hilfe der (halb-) quantitativen Carbonatbestimmung nach Scheibler, dar. Die zu untersuchende Mischung wird vorzugsweise 48 h offen bei Raumtemperatur (25 °C) inkubiert. Anschließend kann durch Zentrifugation und Trocknung zur weiteren Verwendung ein präzipitiertes Pellet gewonnen werden. Mit dem getrockneten Pellet kann der (halb-) quantitative Nachweis des gebildeten Calciumcarbonates, vorzugsweise durch die Carbonatbestimmung nach Scheibler, erfolgen. Optional kann das getrocknete Präzipitat vorher gewogen und die Fällungseffizienz berechnet werden. Optional kann parallel dazu eine zusätzliche qualitative Bestimmung, ob eine Ureolyse und / oder Carbonatbildung vorliegt, durchgeführt werden. Dazu kann der Mischung aus Schritt (i) Phenolrot (15 mg/L) zugesetzt werden. Der zu verwerfende Überstand bei der Gewinnung des Pellets ist dann beim Vorliegen einer Ureolyse und / oder Carbonatbildung in der Regel pink gefärbt.

Eine weitere bevorzugte Methode zur besagten Bestimmung stellt beispielsweise die Messung des Grades der Verfestigung des Substrats (durch das während der Biozementierung entstandene Carbonat) dar. Ein geeignetes Substrat hierfür ist z.B. Quarzsand, vorzugsweise mit einer Korngröße von 0 bis 2mm (als Modellsubstrat). Die übrigen Bestandteile der Mischung aus Schritt (i) werden vorzugsweise in einer Menge der resultierenden Mischung von 5 l/m$^2$ (im Falle einer flüssigen Mischung) auf bzw. in das Substrat auf-/eingebracht. Die anschließende Inkubation sollte offen und bei Raumtemperatur oder oberhalb von Raumtemperatur für mindestens 2 Tage (vorzugsweise für mindestens 10 Tage) erfolgen. Anschließend wird die Festigkeit der gebildeten Biozementschicht durch bruchmechanische Analyse mit Hilfe eines digitalen (Bruch-)Kraftmessgeräts in Anlehnung an DIN EN 196-1:2005-05 ermittelt. Im Vergleich zur Kontrolle (Aufbringen einer Vergleichsmischung ohne Organismus bzw. Organismen auf das Substrat) sollten Unterschiede in der Bruchkraft von $\geq$ 3 N (bzw. $\geq$ 0,01 MPa), vorzugsweise von $\geq$ 30 N (bzw. $\geq$ 0,1 MPa), detektierbar sein.

Im Rahmen des Assays A kann auch die Dicke der Biozement-Schicht mit Hilfe eines Messschiebers bestimmt werden; diese sollte bei erfolgreicher Verfestigung vorzugsweise im untersuchten Bereich durchschnittlich $\geq$ 3 mm betragen.

Gemäß einer bevorzugten Ausführungsform ist Bestandteil (i) der erfindungsgemäß zu verwendenden Mischung ein Organismus/mehrere Organismen, der/die in Schritt (iv) des Assays A wie hierin definiert in Bezug auf zwei oder mehr der vorstehend beschriebenen Bestimmungsmethoden, vorzugsweise drei oder mehr, besonders bevorzugt vier oder mehr, ganz besonders bevorzugt alle Bestimmungsmethoden, dazu führt, dass eine Ureolyse und / oder Carbonatbildung, vorzugsweise eine Biozementierung festgestellt wird.

Bevorzugt ist des Weiteren eine Verwendung wie vorangehend beschrieben, wobei der Bestandteil (iv) ausgewählt ist aus der Gruppe bestehend aus organischen und anorganischen Calcium-Salzen, vorzugsweise Calciumnitrat, Calciumacetat, Calciumlactat, Calciumpyruvat, Calciumsalicylat und Calciumchlorid, Magnesium-Salzen, Mangan-Salzen, Zink-Salzen, Cobalt-Salzen, Nickel-Salzen, Kupfer-Salzen, Blei-Salzen, Eisen-Salzen, Cadmium-Salzen, Polymeren, vorzugsweise kationischen Polymeren, Schwermetall-Kationen, Leichtmetall-Kationen, radioaktiven Kationen sowie deren Mischungen.

Gemäß der vorliegenden Erfindung kann der Bestandteil (iv) in der erfindungsgemäß zu verwendenden Mischung enthalten sein oder nicht. Wenn er nicht in der Mischung enthalten ist, kann er auf / in dem zu behandelnden Substrat vorhanden sein oder diesem zugegeben werden, um die Biozementierung zu ermöglichen.

Insbesondere ist eine Verwendung wie vorangehend beschrieben bevorzugt, in der der Bestandteil (iv) in einer Gesamtkonzentration von 0,05 bis 1 M vorliegt und / oder eine Gesamtcalciumkonzentration von 1,5 M nicht überschreitet.

Optional können Mischungen wie hier beschrieben ein oder mehrere Zusatzstoffe (Bestandteil (v)) enthalten. Ist der Bestandteil (v) enthalten, ist er vorzugsweise ausgewählt aus der Gruppe bestehend aus: natürlichen und chemischen Herbiziden; Fungiziden; Molluskiziden; Insektiziden; Hydrophobizierern und Wachsemulsionen; Stabilisierer; Dispergatoren; Emulgierhilfen; Tensiden, vorzugsweise kationische, anionische und ungeladenen Tenside; Aminen; Ethanolaminen; Thixotropiermitteln; Treibmitteln; Rieselhilfsmitteln, Kristallisationskeimen und Kristallisationsmodifizierern; Komplexbildnern, vorzugsweise Phosphonaten, Phosphaten und Polyphosphaten, Fettsäuren; Mineralien und Spurenelementen; Salzen, vorzugsweise Halogeniden, Silikaten, Phosphaten und Sulfate; Gesteinen, vorzugsweise Bimsstein, Sand, Kies und Schiefermehl, Gummimehlen, Gummigranulaten und anderen thermoplastische Elastomeren, vorzugsweise aus der Reifenindustrie; Zuschlagsstoffe, vorzugsweise amorphe und kristalline Zuschlagsstoffe, weiter bevorzugt hydraulische, nicht-hydraulische und puzzolanische Materialien; Pflanzensamen, vorzugsweise Monokotylen und Dikotylen, Sporen, vorzugsweise Moossporen, Pflanzen und Teile davon, vorzugsweise Wurzeln, Zwiebeln, Holz und Holzschnitzel; Dünger; Bakterien, die zur Bildung von Polymeren in der Lage sind; und Substanzen, die die Biozementierung modifizieren.

Im Übrigen wird auf die Ausführungen zum erfindungsgemäßen Verfahren und zur erfindungsgemäßen Mischung verwiesen, die entsprechend für die erfindungsgemäße Verwendung gelten. Ferner stellen die im Zusammenhang der Staubkontrolle beschriebenen Ausführungsformen entsprechende Ausführungsformen der Erosionskontrolle und der weiteren hier offenbarten Verwendungen dar.

Ein weiterer Aspekt der vorliegenden Erfindung betrifft ein Verfahren zum Reduzieren von Staubbildung und / oder Erosion. Das Verfahren umfasst folgende Schritte:

(a) Identifizieren eines zu behandelnden Substrats, auf / in dem eine Staubbildung und / oder Erosion reduziert werden soll,

(b) Bereitstellen einer Mischung, oder deren Bestandteile, wie hier (insbesondere im Rahmen der erfindungsgemäßen Verwendung) definiert,

(c) Applizieren der in Schritt (b) bereitgestellten Mischung, oder von deren Bestandteilen, auf / in das zu behandelnde Substrat, in einer Menge, die ausreicht, um eine Biozementierung zu ermöglichen, und

(d) Ausbildenlassen einer Biozement-Schicht, so dass eine Staubbildung und / oder Erosion auf / in dem Substrat reduziert wird.

Gemäß einer bevorzugten Ausführungsform des erfindungsgemäßen Verfahrens handelt es sich bei dem Applizieren um ein Auftragen der in Schritt (b) bereitgestellten Mischung, oder von deren Bestandteilen, auf / in das zu behandelnde Substrat. Gemäß einer weiteren bevorzugten Ausführungsform handelt es sich bei dem Applizieren um ein Auftragen und anschließendes Einbringen, beispielsweise durch Untermischung, der in Schritt (b) bereitgestellten Mischung, oder von deren Bestandteilen, auf / in das zu behandelnde Substrat. Gemäß einer weiteren bevorzugten Ausführungsform des erfindungsgemäßen Verfahrens handelt es sich bei dem Applizieren um ein Einbringen der in Schritt (b) bereitgestellten Mischung, oder von deren Bestandteilen, auf / in das zu behandelnde Substrat.

Gemäß einer Ausführungsform des erfindungsgemäßen Verfahrens wird das in Schritt (a) identifizierte Substrat oder Teile davon vom ursprünglichen Ort entfernt, mit der in Schritt (b) bereitgestellten Mischung, oder deren Bestandteile, in einer Menge vermischt, die ausreicht, um eine Biozementierung zu ermöglichen (beispielsweise in einem Mischgerät), die erhaltene Mischung an den ursprünglichen Ort des Substrats zurückgebracht (oder alternativ an einen anderen Ort gebracht, an dem eine Biozement-Schicht gebildet werden soll), gefolgt von Schritt (d) wie hierin beschrieben. In einer solchen Ausführungsform entfällt Schritt (c) des Verfahrens wie hierin beschrieben.

Abhängig von der Form (fest bzw. pulverförmig oder flüssig oder gelartig oder pastös) der in Schritt (b) des erfindungsgemäßen Verfahrens bereitgestellten Mischung, oder deren Bestandteile (vgl. hierzu die obigen Ausführungen), kann das Applizieren in Schritt (c) auf unterschiedliche Art und Weise erfolgen. Pulverförmige Mischungen können beispielsweise auf das zu behandelnde Substrat aufgestreut und / oder in das Substrat eingearbeitet werden. Flüssige Mischungen werden beispielsweise auf das zu behandelnde Substrat gegossen oder aufgesprüht und optional anschließend in das Substrat eingearbeitet. Vorteilhafterweise reicht in der Regel ein einmaliges Applizieren der in Schritt (b) bereitgestellten Mischung, oder deren Bestandteile, auf / in das zu behandelnde Substrat aus, um eine Biozement-Schicht wie in Schritt (d) des erfindungsgemäßen Verfahrens definiert, auszubilden. Bevorzugt reicht ein einmaliges Auftragen der in Schritt (b) bereitgestellten Mischung auf / in das zu behandelnde Substrat aus, um eine Biozement-Schicht wie in Schritt (d) des erfindungsgemäßen Verfahrens definiert, auszubilden.

Dem Fachmann ist dabei bekannt, dass eine Biozementierung (wie hierin definiert) im erfindungsgemäßen Verfahren besonders effizient bei einem bestimmten Applikationsvolumen bzw. einer bestimmten Konzentration der Mischung aus Schritt (b) abläuft (siehe hierzu auch die bevorzugten Zellzahlen des Organismus bzw. der Organismen in der erfindungsgemäß zu verwendenden Mischung wie hier beschrieben). Laut eigenen Untersuchungen beträgt das Applikationsvolumen der erfindungsgemäß zu verwendenden Mischung (wie oben definiert) vorzugsweise mindestens 0,1 l/m$^2$, weiter bevorzugt mindestens 0,5 l/m$^2$, weiter bevorzugt mindestens 1,0 l/m$^2$, weiter bevorzugt mindestens 2,0 l/m$^2$, mindestens 3,0 l/m$^2$, mindestens 4,0 l/m$^2$ oder mindestens 5,0 l/m$^2$, und / oder vorzugsweise höchstens 20,0 l/m$^2$, weiter bevorzugt höchstens 10,0 l/m$^2$.

Für einen effektiven Biozementierungsprozess in Schritt (d) des erfindungsgemäßen Verfahrens ist es vorteilhaft, wenn das System aus erfindungsgemäß einzusetzender Mischung und Substrat (wie hierin definiert) einen Wassergehalt von mehr als 10 Gew.-% bezogen auf das Gesamtgewicht des besagten Systems aufweist. Wird die erfindungsgemäß einzusetzende Mischung in Schritt (b) des erfindungsgemäßen Verfahrens in pulverförmiger Form (wie oben definiert) eingesetzt und ist auch das Substrat in Schritt (a) bzw. (c) des erfindungsgemäßen Verfahrens im wesentlichen wasserfrei, so dass ein Wassergehalt des besagten Systems von 10 Gew.-% oder weniger bezogen auf das Gesamtgewicht des Systems resultiert, so ist es vorteilhaft, wenn das erfindungsgemäße Verfahren einen weiteren Schritt umfasst, in welchem entweder der Mischung, oder deren Bestandteile, aus Schritt (b) des Verfahrens vor oder nach dem Applizieren auf/ in das zu behandelnde Substrat, genügend Wasser bzw. wässrige Lösung zugesetzt wird, so dass ein Wassergehalt des besagten Systems von mehr als 10 Gew.- % bezogen auf das Gesamtgewicht des besagten Systems resultiert. Alternativ oder gleichzeitig kann dem zu behandelnden Substrat vor oder nach dem Applizieren der in Schritt (b) des erfindungsgemäßen Verfahrens bereitgestellten Mischung, oder deren Bestandteile, eine entsprechende Menge an Wasser bzw. wässrige Lösung zugesetzt werden.

Des Weiteren ist es bei Einsatz des erfindungsgemäßen Verfahrens vorteilhaft, das Verfahren beispielsweise nicht bei zu starkem Regen bzw. Wind durchzuführen. Starker Regen oder Wind können unter Umständen zu einem Verlust oder einer erheblichen Verdünnung an erfindungsgemäß einzusetzender Mischung schon vor der Ausbildung der Biozement-Schicht (Schritt (d)) führen, was die Ausbildung der Biozement-Schicht verhindern könnte bzw. ihre Festigkeit und / oder Dicke negativ beeinflussen könnte. Nach dem Applizieren der in Schritt (b) des erfindungsgemäßen Verfahrens bereitgestellten Mischung, oder deren Bestandteile, auf / in das zu behandelnde Substrat, d.h. in Schritt (d) des erfindungsgemäßen Verfahrens, erfolgt das Ausbilden der Biozement-Schicht vorzugsweise über einen Inkubationszeitraum von mindestens 6 Stunden, vorzugsweise von mindestens 24 Stunden, weiter bevorzugt von mindestens 48 Stunden, in welchem vorzugsweise keine Menge an Regen bzw. Wind bzw. künstlicher Bewässerung auftritt, welche zu einem signifikanten Verlust an erfindungsgemäß einzusetzender Mischung führt. Als besonders vorteilhaft in diesem Zusammenhang hat sich herausgestellt, dass die erfindungsgemäßen Mischungen neben dem Vorteil einer langanhaltenden Verfestigung auch in der Lage sind, die Verfestigung zu beschleunigen. Auf diese Weise können oben beschriebene witterungsbedingte Verluste weitgehend verhindert oder reduziert werden.

Der benötigte Inkubationszeitraum für das Ausbilden der Biozement-Schicht in Schritt (d) des erfindungsgemäßen Verfahrens ist ferner abhängig von verschiedenen Umweltparametern, wie beispielsweise der Raum- bzw. Außentemperatur und der Luftfeuchtigkeit, und vom eingesetzten Applikationsvolumen der Mischung. Sollte es während des besagten Inkubationszeitraums von mindestens 6 Stunden, vorzugsweise von mindestens 24 Stunden, weiter bevorzugt von mindestens 48 Stunden, durch Regen oder Wind zu einem signifikanten Verlust an erfindungsgemäß einzusetzender Mischung, oder deren Bestandteile, kommen, so ist es vorteilhaft, die Schritte (b) bis (d) des erfindungsgemäßen Verfahrens so oft wie nötig, vorzugsweise einmal, zweimal, dreimal oder mehr, zu wiederholen, bis eine ausreichende Dicke und Festigkeit der Biozement-Schicht erreicht wird. Zudem bzw. alternativ kann es sich als vorteilhaft erweisen, die Schritte (b) bis (d) des erfindungsgemäßen Verfahrens zu wiederholen, vorzugsweise einmal, zweimal, dreimal oder mehr zu wiederholen, sollte die Dicke und / oder Festigkeit der ausgebildeten Biozement-Schicht auf / in dem Substrat im Laufe der Zeit durch Verwitterung und / oder natürlichen Abbau abnehmen und dadurch nicht mehr zum Reduzieren von Staubbildung und / oder Erosion ausreichend sein.

Die Dicke der Biozement-Schicht kann durch manuelle Messung nach mechanischem Bruch der Schicht mit Hilfe eines Messschiebers bestimmt werden. Alternativ können je nach Dicke der Verfestigung unterschiedliche (zerstörungsfreie) Messverfahren aus Bau, Landwirtschaft, Geologie oder weiteren Einsatzgebieten verwendet werden (z.B. Handgerät MIT-SCAN-T2). Die Schichtdicke der Biozement-Schicht umfasst den Bereich des Substrats, der durch die Zugabe der Mischung verfestigt wird.

Die Festigkeit der Biozement-Schicht entspricht der Bruchkraft (in Newton (N)), die aufgewendet werden muss, um die Biozement-Schicht zu brechen. Das Brechen der Biozementierungsschicht ist der Punkt bei der keine (plastische) Verformung der Schicht bei Krafteinwirkung mehr auftritt, sondern es zum Durchbruch der (Biozementierungs-) Schicht kommt. Man erkennt das Brechen durch einen Abfall der gemessenen Kraft. Die Bruchkraft (Maximalwert der Kraftmessung) kann mit Hilfe des folgenden Verfahrens bestimmt werden: Das Verfahren ist angelehnt an das normierte Prüfverfahren zur Festigkeitsbestimmung in Zement DIN EN 196-1:2005-05. Mittels eines digitalen (Bruch- )Kraftmessgeräts wird nach Angaben des Herstellers die Bruchkraft gemessen. Ein Prüfkörper wird mit Hilfe eines Kurbelprüfstandes in die Probe (bis zum Bruch) gedrückt und die aufgebrachte Kraft kontinuierlich gemessen. Aus mehreren Messungen (>3) wird die mittlere Bruchkraft errechnet. Die mittlere Bruchkraft beträgt vorzugsweise zwischen 0,5 und 1000 N, weiter bevorzugt zwischen 3 und 300 N.

Bevorzugt ist ein Verfahren wie vorangehend beschrieben, wobei das Substrat ausgewählt ist aus der Gruppe bestehend aus organischem und anorganischem Material, insbesondere biogenem und/oder anthropogenem Ursprungs, vorzugsweise metamorphe, sedimentäre und magmatische Gesteine und jeweils deren Derivate und Mischungen, sowie Kombinationen davon.

Weiter bevorzugt ist das in dem erfindungsgemäßen Verfahren verwendete Substrat ausgewählt aus der Gruppe bestehend aus einem Material, das durch eine oder mehr der Untergruppen aus (Strunz H und Nickel E H, V Strunz Mineralogical Tables, 2001, 9. Edition) beschrieben werden kann:

(i) Elemente (inkl. aller Untergruppen), z.B., aber nicht ausschließlich: Gold, Kupfer, Silber, Zink, Zinn, Eisen, Antimon, Graphit, Palladium, Kohlenstoff;
(ii) Sulfide und Sulfosalze (inkl. aller Untergruppen), z.B., aber nicht ausschließlich: Chalkopyrit, Galenit, Pyrit;
(iii) Halogenide (inkl. aller Untergruppen), z.B., aber nicht ausschließlich: Flourit;
(iv) Oxide und Hydroxide (inkl. aller Untergruppen), z.B., aber nicht ausschließlich: Calciumoxid, Magnesiumoxid, Kassiterit, Magnetit, Hämatit, Ilmenit;
(v) Carbonate und Nitrate (inkl. aller Untergruppen), z.B., aber nicht ausschließlich: Calcit;
(vi) Borate (inkl. aller Untergruppen), z.B., aber nicht ausschließlich: Borax, Boracit, Ulexit;
(vii) Sulfate, Chromate, Molybdate, Wolframate (inkl. aller Untergruppen), z.B., aber nicht ausschließlich: Langbeinit, Anhydrit, Kieserit, Gips;
(viii) Phosphate, Arsenate, Vanate (inkl. aller Untergruppen), z.B., aber nicht ausschließlich: Monazit;
(ix) Silikate, Germanate (inkl. alle Untergruppen), z.B., aber nicht ausschließlich: Olivin, Topas, Muskovit, Talk, Zement, Mikosilika, Wassergläser;
(x) Organische Minerale (inkl. alle Untergruppen);

Mischungen, die ein oder mehr der oben genannten Materialien enthalten, sowie Substanzen und / oder deren Mischformen mit biogenem und/oder anthropogenem Ursprung z.B. aber nicht ausschließlich: Erden, Aschen, Holz, Mulch, Zemente, Calciumcarbonat (inkl. Polymorphe, Derivate und Mischformen, sowie natürlich basiert (GCC Ground calcium carbonate) als auch synthetisch PCC (precipitated calcium carbonate, Aluminiumoxid, Aluminiumhydroxid, Magnesiumoxid, Calciumoxid, Calciumhydroxid und Abraum sowie feinkörnige Rückstände aus der Aufbereitung einer der vorherigen Substanzen oder einer Mischung dieser (Tailings), weiter bevorzugt ist das in dem erfindungsgemäßen Verfahren verwendete Substrat ausgewählt aus der Gruppe bestehend aus kristallinen und amorphen Substanzen, sowie Mischungen davon.

Abhängig von den Eigenschaften des zu behandelnden Substrats kann es sich als vorteilhaft erweisen, das Substrat (oder Bestandteil (i), (ii), (iii) und / oder (iv) der in Schritt (b) bereitgestellten Mischung) mit einem oder mehreren der oben genannten Additive zu versetzen, um beispielsweise die Reaktivität des Substrats mit dem während des erfindungsgemäßen Verfahrens gebildeten Biozement zu verbessern. Dies führt vorteilhafterweise zu einer besonders harten bzw. stabilen Biozement-Schicht, welche die Staubbildung und / oder Erosion besonders effektiv unterdrückt.

Weiter bevorzugt ist ein Verfahren wie vorangehend beschrieben, wobei die Mischung in flüssiger Form, als Gel, Paste oder als Pulver vorliegt (vgl. oben).

Die in Schritt (b) des erfindungsgemäßen Verfahrens bereitgestellte Mischung, oder deren Bestandteile, kann demnach in Form von einer Mischung, vorzugsweise in Pulverform, oder in Form von zwei, drei, vier oder mehr getrennt voneinander vorliegenden flüssigen und / oder gelartigen und / oder pastösen und / oder pulverförmigen Vor-Mischungen vorliegen, die vor oder während des Applizierens auf / in das zu behandelnde Substrat in Schritt (c) miteinander vermischt werden.

Vorteilhafterweise ist eine einmalige Durchführung der Schritte (b) bis (d) des erfindungsgemäßen Verfahrens in der Regel ausreichend, um eine zufriedenstellende Staubbildungs- / Erosionsunterdrückung zu gewährleisten. Gemäß einer weiteren Ausführungsform können die Schritte (b) bis (d) bzw. (b) und (c) bei Bedarf jedoch einmal, zweimal, dreimal oder mehr wiederholt werden, um eine besonders effektive Biozementierung des zu behandelnden Substrats, und damit eine besonders effektive Staubbildungs- / Erosionsunterdrückung, zu gewährleisten.

Gemäß einer weiteren bevorzugten Ausführungsform des erfindungsgemäßen Verfahrens, wird Schritt (c) einmalig oder wiederholt durchgeführt wird, wobei die Menge des insgesamt applizierten Bestandteils (iii) mindestens 20 g, bevorzugt mindestens 40 g, weiter bevorzugt mindestens 60 g, weiter bevorzugt mindestens 80 g, weiter bevorzugt mindestens 100 g und am meisten bevorzugt mindestens 120 g beträgt, jeweils bezogen auf 1 Quadratmeter Applikationsfläche, und /oder

wobei die Menge des insgesamt applizierten Bestandteils (iii) höchstens 2000 g, bevorzugt höchstens 1600 g, weiter bevorzugt höchstens 1200 g, weiter bevorzugt höchstens 800 g, weiter bevorzugt höchstens 600 g und am meisten bevorzugt höchstens 400 g beträgt, jeweils bezogen auf 1 Quadratmeter Applikationsfläche.

Im Übrigen wird auf die Ausführungen zur erfindungsgemäßen Verwendung und der erfindungsgemäßen Mischung verwiesen, die entsprechend für das erfindungsgemäße Verfahren gelten.

Ein weiterer Aspekt der vorliegenden Erfindung betrifft eine Mischung, die zur Biozementierung in der Lage ist, wie hier (insbesondere im Rahmen der erfindungsgemäßen Verwendung oder des erfindungsgemäßen Verfahrens) definiert.

In bevorzugten Mischungen ist der Bestandteil (iii) ausgewählt aus der Gruppe bestehend aus:
Albumin; Stärkeether; Alanin; Lysin; Styrolacrylat, insbesondere Styrolacrylatdispersion; Ethylenvinylacetat, insbesondere Ethylenvinylacetatdispersion; Polyvinylalkohol; Magnesiumsulfat; Polyvinylacetat, insbesondere Polyvinylacetatdispersion; Styrolbutadien, insbesondere Styrolbutadiendispersion; Huminsäure und Kombinationen davon sowie Polymere, die Monomere der vorgenannten Polymere enthalten.

In bevorzugten Mischungen ist ferner der Bestandteil (ii) ausgewählt aus der Gruppe bestehend aus:
Harnstoff und dessen Salze; organischen Säuren wie Milchsäure und deren Salze, bevorzugt Carboxylate, und deren Ester; Gluconsäure und deren Salze, bevorzugt Carboxylate, und deren Ester; Essigsäure und deren Salze, bevorzugt Carboxylate, und deren Ester; Ameisensäure und deren Salze, bevorzugt Carboxylate, und deren Ester; Propansäure und deren Salze, bevorzugt Carboxylate, und deren Ester; Butansäure und deren Salze, bevorzugt Carboxylate, und deren Ester; Pentansäure und deren Salze, bevorzugt Carboxylate, und deren Ester; Peptide, vorzugsweise enthaltend nicht-proteinogene Aminosäuren, Asparagin, Alanin, Glycin, Lysin, Glutamin und / oder Glutaminsäure; Aminosäuren, vorzugsweise nicht-proteinogene Aminosäuren, Asparagin, Alanin, Glycin, Lysin, Glutamin und Glutaminsäure, und deren Salze, bevorzugt Carboxylate, und deren Ester; pflanzliche und tierische Komplexsubstrate, insbesondere Pepton, Hefeextrakt, Fleischextrakt, Nährbouillon und Casaminosäure; industrielle Reststoffströme, insbesondere Maisquellwasser, Lactose-Mutterlauge, Proteinlysate, vorzugsweise aus Erbsen, Fleisch, Kartoffeln oder Tomaten; anaerobe Substrate, vorzugsweise Kohlenstoffdioxid und Methan.

Bei den im vorliegenden Text als Bestandteil (ii) genannten Salzen handelt es sich vorzugsweise um die jeweiligen Calciumsalze. Dadurch ergibt sich der Vorteil, dass der Bestandteil (ii) sowohl als Stoff zur Bildung von Carbonat als auch als bevorzugte Kationenquelle gemäß dem optionalen Bestandteil (iv) fungieren kann.

Im Übrigen wird auf die Ausführungen zu den erfindungsgemäßen Verwendungen und dem erfindungsgemäßen Verfahren verwiesen, die entsprechend für die erfindungsgemäße Mischung gelten.

Bei der Testung der erfindungsgemäßen Biozementierungsmischungen auf verschiedenen Substraten wurden weitere unerwartete Beobachtungen gemacht, die im nachfolgenden weiter ausgeführt werden. Hieraus ergeben sich weitere, potenzielle Anwendungsfelder, die weitere Aspekte der vorliegenden Erfindung darstellen.

So betrifft ein weiterer Aspekt der vorliegenden Erfindung die Verwendung einer Mischung, die zur Biozementierung geeignet ist, umfassend oder bestehend aus den Bestandteilen (i), (ii) und (iii) sowie optional Bestandteil (iv) und / oder optional Bestandteil (v) wie im vorliegenden Text spezifiziert zur Pelettisierung.

Bei der Applikation der erfindungsgemäßen Mischungen auf eine bewegte Eisenerz Probe, fiel auf, dass sich nach Applizieren kleine Agglomerate bzw. Pellets formten. In einem Pelletisierer geformte Pellets wiesen (neben verringerter Emission bei der Herstellung auch) eine höhere Festigkeit als Vergleichsmischungen auf.

Die Verarbeitung der mit Vergleichsmischungen hergestellten Pellets erwies sich als schwierig, da die hergestellten Pellets sehr leicht zerbrachen. Dies ist vermutlich auf das Fehlen von der kohäsionsmodifizierenden Verbindung zurückzuführen. Kohäsionsmodifizierende Substanzen ermöglichen somit auch die Darstellung eines Biozementes, welcher für Pelletisierung eingesetzt werden kann.

Unerwartet fiel auf, dass nach Formation des Biozementes einige Substrate im Pelletisierer langsamer trockneten; deswegen wurde der Einfluss der Biozementierungsmischungen auf die Evaporation tiefgründiger untersucht.

Entsprechend betrifft ein weiterer Aspekt der vorliegenden Erfindung die Verwendung einer Mischung, die zur Biozementierung geeignet ist, umfassend oder bestehend aus den Bestandteilen (i), (ii) und (iii) sowie optional Bestandteil (iv) und / oder optional Bestandteil (v) wie im vorliegenden Text spezifiziert zur Kontrolle, insbesondere Reduzierung, von Evaporation.

Die Erfinder fanden heraus, dass durch effektive Schichtbildung die Trocknungsgeschwindigkeit des Sandes verringert wurde. Dies war an der höheren relativen Bodenfeuchte der Proben, in denen die erfindungsgemäßen Mischungen im Vergleich zur Wasserapplikation oder im Vergleich zu nicht-erfindungsgemäßen Vergleichsmischungen zu erkennen. Es wird angenommen, dass die entstandene Biozementschicht ein kohäsives Hindernis für von unten nachströmendes Wasser aufweist. Es kann vermutet werden, dass aufgrund der Anwesenheit der kohäsionsmodifizierenden Substanzen die Porosität der Schicht in einer Art geändert wird, so dass Wasser weniger schnell verdunsten kann.

Die veränderte Porosität kann auch für andere Anwendungen genutzt werden, wo Porosität eine Rolle spielt. Dies gilt insbesondere für die Verwendung in Dämmmaterialien, Katalysatorbetten und/oder Batteriematerialien. Entsprechend betrifft ein weiterer Aspekt der vorliegenden Erfindung die Verwendung einer Mischung, die zur Biozementierung geeignet ist, umfassend oder bestehend aus den Bestandteilen (i), (ii) und (iii) sowie optional Bestandteil (iv) und / oder optional Bestandteil (v) wie im vorliegenden Text spezifiziert zur Herstellung von Dämmmaterialien, Katalysatorbetten und/oder Batteriematerialien.

Aufgrund der verringerten Porosität eignet sich das auf erfindungsgemäßen Mischungen basierendes Material auch besonders gut als Abdichtungsmaterial. Ein weiterer Aspekt der vorliegenden Erfindung betrifft somit die Verwendung einer Mischung, die zur Biozementierung geeignet ist, umfassend oder bestehend aus den Bestandteilen (i), (ii) und (iii) sowie optional Bestandteil (iv) und / oder optional Bestandteil (v) wie im vorliegenden Text spezifiziert zur Herstellung von Abdichtungsmaterial.

Ein weiterer Aspekt der vorliegenden Erfindung betrifft die Verwendung einer Mischung, die zur Biozementierung geeignet ist, umfassend oder bestehend aus den Bestandteilen (i), (ii) und (iii) sowie optional Bestandteil (iv) und / oder optional Bestandteil (v) wie im vorliegenden Text spezifiziert zur (Schwermetallionen-) Dekontamination von Substraten und / oder (Schwermetallionen-) Präzipitation aus Substraten.

Dem Fachmann ist bekannt, dass Carbonationen, die durch Bakterien aus z.B. Urea hergestellt werden, zur Ausfällung von Metallionen benutzt werden können (Phillips et al, Engineered applications of ureolytic biominerafization: a review, Biofouling, 2013, Vol. 29, No. 6, 715-733). Vermutlich wurde aus diesem Grund beobachtet, dass bei der Verwendung von schwermetallbelasteten Böden eine schnellere Schichtbildung einsetzte. Deswegen wurde getestet, ob sich die kohäsionsmodifizierenden Substanzen auch zum Verbessern von Schermetallionenpräzipitation eignen. In Versuchen konnten die Erfinder zeigen, dass die erfindungsgemäßen Mischungen in der Lage sind, Schwermetallionen zu binden und zu präzipitieren.

Ein weiterer Aspekt der vorliegenden Erfindung betrifft die Verwendung einer Mischung, die zur Biozementierung geeignet ist, umfassend oder bestehend aus den Bestandteilen (i), (ii) und (iii) sowie optional Bestandteil (iv) und / oder optional Bestandteil (v) wie im vorliegenden Text spezifiziert zur (Schwermetallionen-) Dekontamination und / oder (Schwermetallionen-) Präzipitation aus Lösung.

Die kohäsionsmodifizierende Verbindung in der erfindungsgemäßen Mischung zeichnet sich dadurch aus, dass sie synergistisch mit der mikrobiellen Biozementierung einen besonders kohäsiven, emissionsarmen Biozement ergeben. Unerwartet stellte sich heraus, dass dies auch in Lösung stattfindet und sich somit eine besonders effiziente Schwermetallionenpräzipitation aus Lösung ergibt. Dies war insbesondere deshalb unerwartet, weil gerade Polymere dazu neigen, mehrwertige Ionen, insbesondere auch zweiwertigen Metallkationen wie Ca(II), Cu(II), Mg(II) sowie Ni(II) zu binden, sie in Lösung zu dispergieren und so deren Löslichkeit zu erhöhen. Aufgrund dieser Affinität zu zweiwertigen Metallkationen wurde erwartet, dass insbesondere wenn es sich bei der wasserlöslichen und / oderwasser-dispergierbaren, kohäsionsmodifizierenden Verbindung um ein Polymer handelt, sie mehrwertige Metallkationen, sowie Aggregate und Agglomerate davon in Lösung stabilisieren und so eine weniger effiziente Metallionenausfällung stattfindet (vgl. Tadros T F 2016, Nanodispersions, ISBN-978-3-11-029033-2, insbesondere Kap. S. 25 ff *steric stabilization*).

Additive, die die Verfestigung beschleunigen, werden auch bei Baustoffen, bspw. bei zementären Baustoffen, wie Mörteln und Betonen, zur Regulierung der Erstarrungszeit verwendet (vgl. bspw. EP 2664596 A3). Aufgrund der in nachfolgendem Beispiel 1 beschriebenen, beschleunigten Aushärtung der erfindungsgemäßen Mischungen, stellt ein weiterer Aspekt der vorliegenden Erfindung die Verwendung einer Mischung dar, die zur Biozementierung geeignet ist, umfassend oder bestehend aus den Bestandteilen (i), (ii) und (iii) sowie optional Bestandteil (iv) und / oder optional Bestandteil (v) wie im vorliegenden Text spezifiziert zur Herstellung von Baustoffen, insbesondere zementären Baustoffen wie Mörteln und Betonen, und / oder Regulierung von deren Erstarrungszeit.

Die erfindungsgemäßen Mischungen haben sich ferner als geeignet herausgestellt, Holzschnitzel zu binden und zu aggregieren. Entsprechend betrifft ein weiterer Aspekt der vorliegenden Erfindung die Verwendung einer Mischung, die zur Biozementierung geeignet ist, umfassend oder bestehend aus den Bestandteilen (i), (ii) und (iii) sowie optional Bestandteil (iv) und / oder optional Bestandteil (v) wie im vorliegenden Text spezifiziert zur Herstellung von Baustoffen, insbesondere als Binder für Dämmmaterialien.Das hierin für eine erfindungsgemäße Verwendung Gesagte gilt ebenso für ein hierin beschriebenes erfindungsgemäßes Verfahren und eine hierin beschriebene erfindungsgemäße Mischung und *vice versa.* Dies gilt insbesondere für (bevorzugte) Ausführungsformen einer erfindungsgemäßen Verwendung, die entsprechende (bevorzugten) Ausführungsformen des erfindungsgemäßen Verfahrens und entsprechende (bevorzugte) Ausführungsformen der erfindungsgemäßen Mischung bilden und umgekehrt.

Nachfolgend wird die Erfindung anhand von ausgewählten Beispielen näher erläutert. Sofern nicht anders angegeben, beziehen sich alle Angaben auf das Gewicht.

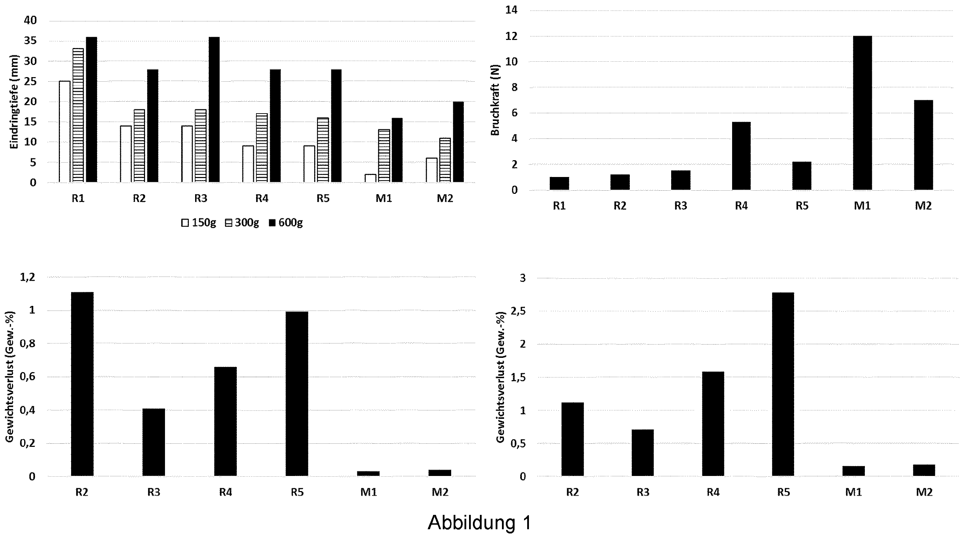

Abbildung 1: Mechanische und staubunterdrückende Eigenschaften der Biozementierungs- und Referenzmischungen bei der Verwendung von *S. pasteurii:* Eindringtiefe von Metallkonen verschiedener Gewichte in mm nach 24 h Reaktionszeit (oben links). Bruchkraft der entstandenen Schichten in Newton nach 48 h Reaktionszeit (oben rechts). Emissionsbedingter Gewichtsverlust nach 24 h Reaktionszeit bei Windexposition von 12 m/s für eine Minute (unten links). Emissionsbedingter Gewichtsverlust nach 24 h Reaktionszeit und Bestimmen der Eindringtiefe eines Metallkonus (600 g) bei Windexposition von 12 m/s für eine Minute (unten rechts).

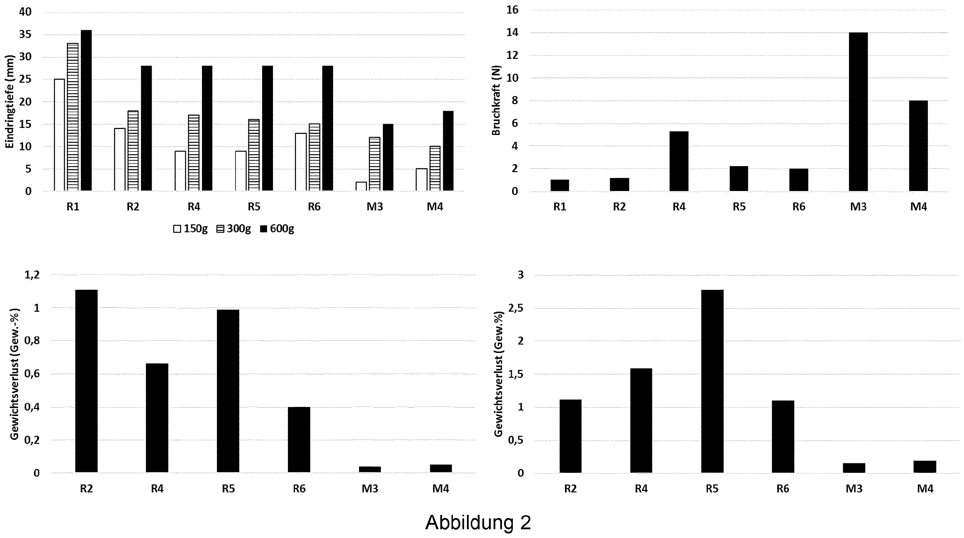

Abbildung 2: Mechanische und staubunterdrückende Eigenschaften der Biozementierung-und Referenzmischungen bei der Verwendung von *L. sphaericus*: Eindringtiefe von Metallkonen verschiedener Gewichte in mm (oben links) nach 24 h Reaktionszeit. Bruchkraft der entstandenen Schichten in Newton nach 48 h Reaktionszeit (oben rechts). Emissionsbedingter Gewichtsverlust nach 24 h Reaktionszeit bei Windexposition von 12 m/s für eine Minute (unten links). Emissionsbedingter Gewichtsverlust nach 2 h Reaktionszeit und Bestimmen der Eindringtiefe eines Metallkonus (600 g) bei Windexposition von 12 m/s für eine Minute (unten rechts).

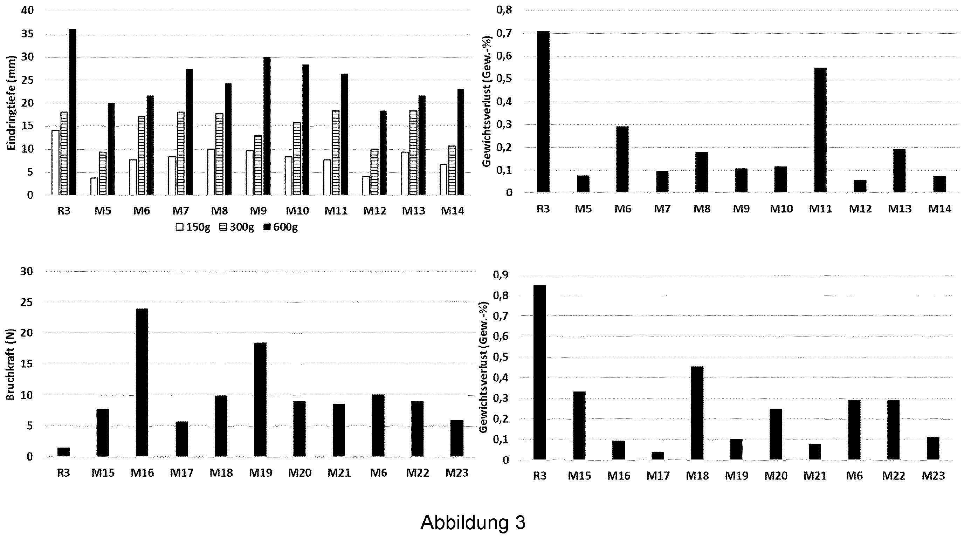

Abbildung 3: Mechanische und staubunterdrückende Eigenschaften der Biozementierungs und Referenzmischungen bei der Verwendung von verschiedenen Bakterienstämmen: Eindringtiefe von Metallkonen verschiedener Gewichte in mm (oben links) nach 24 h Reaktionszeit. Gewichtsverlust nach 24 h Reaktionszeit und bestimmen der Eindringtiefe eines Metallkonus (600 g) bei Windexposition von 12 m/s für eine Minute (oben rechts). Bruchkraft der entstandenen Schichten in Newton nach 48 h Reaktionszeit (unten links). Gewichtsverlust nach 48 h Reaktionszeit und Bestimmen der Bruchkraft bei Windexposition von 12 m/s für eine Minute (unten rechts).

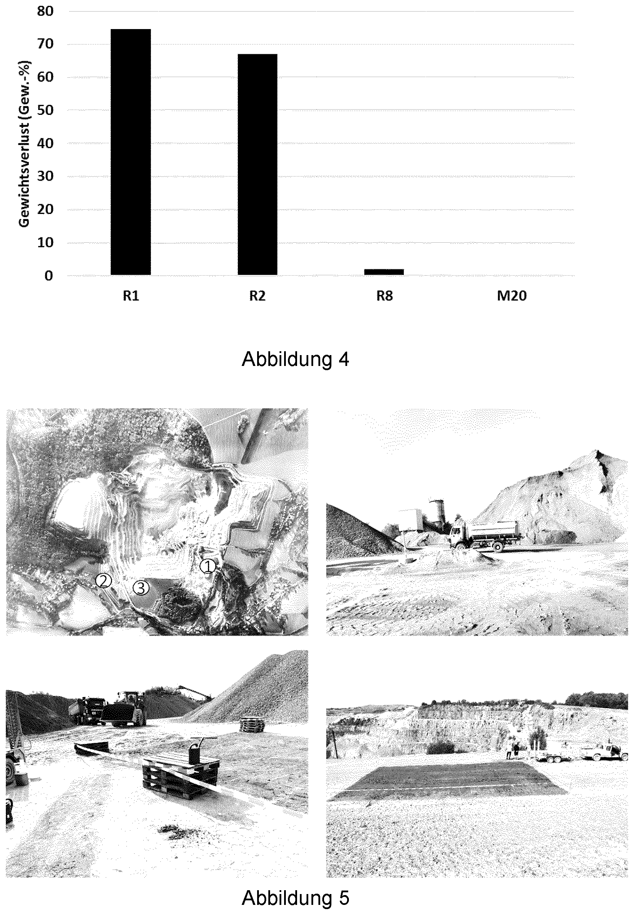

Abbildung 4: Emissionsbedingter Gewichtsverlust nach 24 Stunden Reaktionszeit und 15 Minuten Windexposition (6 m/s) der Referenzmischungen R1, R2 und R8 sowie der Biozementierungsmischung M20.

Abbildung 5: Nachweis der staubunterdrückenden Wirkung in einer Kalkmine. Darstellung der drei Applikationsflächen aus der Vogelperspektive: Straße (1), frische Halde (2), Grube (3) (oben links). Durchführung der Wasserapplikation mittels Sprühtruck als derzeitige staubunterdrückende Maßnahme (oben rechts). Ausbringung der Mischungen auf der Straße (unten links) und auf der Halde (unten rechts).

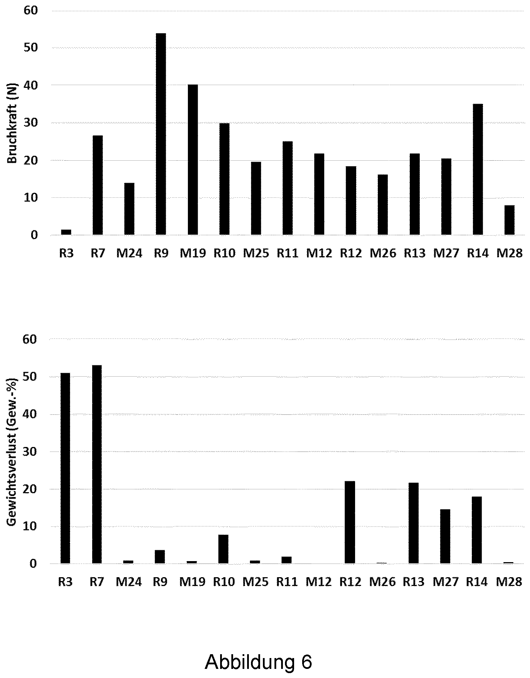

Abbildung 6: Mechanische und staubunterdrückende Eigenschaften der Biozementierungs- und Referenzmischungen bei der Verwendung von *S. pasteurii*: Bruchkraft nach vier Tagen Reaktionszeit (oben). Emissionsbedingter Gewichtsverlust nach vier Tagen Reaktionszeit, Bestimmen der Bruchkraft sowie Windexposition von 12 m/s für eine Minute (unten). Die Referenz R3 ist ausschlaggebend für alle in der Abbildung befindlichen Mischungen. Die jeweilige erfindungsgemäße Biozementierungsmischung ist für die Übersichtlichkeit immer rechts neben der dazugehörigen Referenz platziert: R3 und R7 ergeben beide keine Emissionsreduktion nach mechanischer Prüfung, die Kombination beider weist eine sehr effiziente Emissionsreduktion auf (M24).

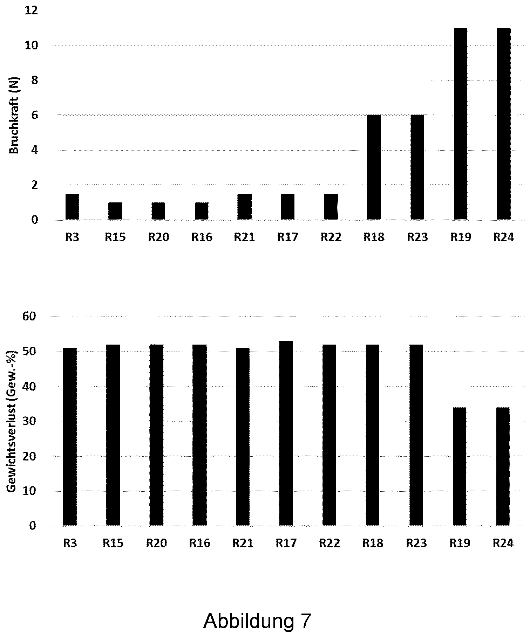

Abbildung 7: Mechanische und staubunterdrückende Eigenschaften der nicht vorteilhaften Biozementierungs- und Referenzmischungen bei der Verwendung von *S. pasteurii*: Bruchkraft nach vier Tagen Reaktionszeit (oben). Emissionsbedingter Gewichtsverlust nach vier Tagen Reaktionszeit, Bestimmen der Bruchkraft sowie Windexposition von 12 m/s für eine Minute (unten).

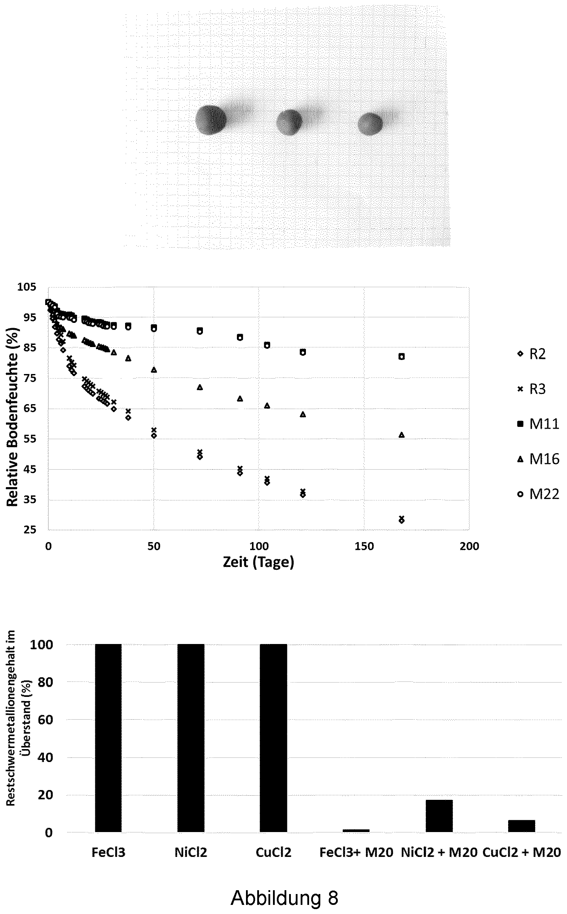

Abbildung 8: Weitere Anwendungsbeispiele von erfinderischen Mischungen. Pellets, die mit den Mischungen M7, M8 und M9 (von links nach rechts) hergestellt wurden. Die Kastengröße der Papierunterlage ist 5 mm (oben). Relative Bodenfeuchte bei behandelten Proben über einen Beobachtungszeitraum von 168 Tagen von R2 (nicht gefüllte Diamanten), R3 (Kreuze), M11 (gefüllte Quadrate), M16 (nicht gefülltes Dreieck) und M22 (nicht gefüllter Kreis). Die Evaporationskontrolle durch erfindungsgemäßen Biozement ist an der höheren relativen Bodenfeuchte zu erkennen. M11 und M22 liegen dicht beieinander (Mitte). Restschwermetallionengehalt im Überstand nach 24 Stunden Reaktionszeit und anschließender Zentrifugation (unten).

## Beispiel 1: Beschleunigte Biozementierung mit verbesserter Staubunterdrückung

Material und Methoden:

Der Versuch wurde im Labor in Plastikgefäßen mit einem Volumen von 450 cm$^3$ durchgeführt. Die Applikati-

onsfläche betrug jeweils 78,5 cm$^2$.

Das Bodensubstrat im Versuch bestand aus einem Quarzsand mit einer Körnung von 0-2 mm. Der Sand war vom Hersteller gewaschen sowie getrocknet worden und wurde direkt verwendet. Es wurden 800 g Quarzsand pro Plastikgefäß als Bodensubstrat verwendet. Das Plastikgefäß war randvoll gefüllt.

Zur Kontrolle wurden Referenz-Mischungen benutzt, welche aus den folgenden Bestandteilen in folgenden Konzentrationen bestanden:

Referenz 1 (R1): Trockenes Sandsubstrat ohne den Zusatz von wässriger Komponente.

Referenz 2 (R2): Applikation von Wasser.

Referenz 3 (R3):

| 48 | g/L | Harnstoff |
|---|---|---|
| 44 | g/L | Calciumchlorid |
| 4 x 10^8 | Zellen/mL | *S. pasteurii* |

Referenz 4 (R4):

| 6,25 | g/L | Calciumligninsulfonat |
|---|---|---|

Referenz 5 (R5)

| 3,15 | g/L | Calciumligninsulfonat |
|---|---|---|

Das biozementierende Referenzsystem R3 wird modifiziert nach Stabnikov, V., et al. Water, Air, & Soil Pollution (2013) 224:1631 zur Staubunterdrückung verwendet. Die staubunterdrückende Tendenz wurde in dieser Veröffentlichung mit Windgeschwindigkeiten von 0,39 m/s und niedriger untersucht. Die in dem vorliegenden Beispiel untersuchten Windgeschwindigkeiten sind wesentlich höher. Die im vorliegenden Beispiel ausgebrachte Gesamtmenge an biozementierender Mischung ist um das Vierfache größer. Die exakte Replikation der Literaturstelle ergab keine signifikanten Änderungen zu R3.

Des Weiteren sind in der Mischung R3 Spurenelemente und Spuren von beispielsweise Salzen und Zuckern enthalten (<1 Gew.-%). Harnstoff diente in diesem Medium primär als Carbonatquelle.

Die Referenz-Mischungen wurden in jeweils drei Replikaten auf die Versuchsflächen aufgebracht. Die Applikationsmenge pro Quadratmeter war durchgehend 4 Liter je Replikat. Zur Applikation wurde eine Pipette verwendet. Nach der Applikation wurde die Oberfläche mit einem Spatel glattgestrichen. Die berichteten Messwerte sind Mittelwerte von den drei Replikaten, die typischerweise im Bereich von 10% des ermittelten Wertes lagen.

Es wurden flüssige Biozementierungsmischungen benutzt, welche aus den folgenden Bestandteilen in den folgenden Konzentrationen bestanden:

Mischung 1 (M1):

| 48 | g/L | Harnstoff |
|---|---|---|
| 44 | g/L | Calciumchlorid |
| 6,25 | g/L | Calciumligninsulfonat |
| 4 x 10^8 | Zellen/mL | *S. pasteurii* |

Mischung 2 (M2):

| 48 | g/L | Harnstoff |
|---|---|---|
| 44 | g/L | Calciumchlorid |
| 3,15 | g/L | Calciumligninsulfonat |
| 4 x 10^8 | Zellen/mL | *S. pasteurii* |

Des Weiteren waren in der Mischung Spurenelemente und Spuren von beispielsweise Salzen und Zuckern enthalten (<1 Gew.-%). Harnstoff diente in diesem Medium primär als Carbonatquelle. Calciumligninsulfonat ist die kohäsionsmodifizierende Verbindung in den Mischungen M1 und M2.

Die Mischungen wurden in jeweils drei Replikaten auf die Versuchsflächen aufgebracht. Die Applikationsmenge pro Quadratmeter war durchgehend 4 Liter je Replikat. Zur Applikation wurde eine Pipette verwendet. Nach der Applikation wurde die Oberfläche mit einem Spatel glattgestrichen. Die berichteten Messwerte sind Mittelwerte von den drei Replikaten, die typischerweise im Bereich von 10% des ermittelten Wertes lagen.

Alle Komponenten der vorliegenden Mischungen, die zur Biozementierung in der Lage sind, bis auf die Bakterien des Stammes *S. pasteurii*, lagen in fester Form vor. Die Bakterien lagen als Flüssigkultur in einem aus dem Stand der Technik bekannten Kultivierungsmedium vor, wie beispielsweise in Cuthbert, M. O. et al., Ecological Engineering 2012, 41, 32-40 beschrieben (s. Abschnitt 2.2, S. 33), wobei im Rahmen der vorliegenden Erfindung 5 g/L Hefeextrakt verwendet wurden. Die festen Bestandteile und die Bakterien in Flüssigkultur wurden direkt vor Verwendung gemischt, wobei sich die festen Bestandteile auflösten.

Nach der Applikation der Referenz-Mischungen sowie der Biozementierungsmischungen erfolgte eine Inkubation über den Gesamtbeobachtungszeitraum (in der Regel 28 Tage) bei einer Luftfeuchte von 20% bis 60% und einem mehrfachen Luftwechsel pro Tag. In diesem Zeitraum herrschte eine Minimaltemperatur von 14,2 °C und eine Maximaltemperatur von 25,2 °C.

Nach 24 Stunden wurde die Eindringtiefe von Tauchkonen verschiedener Gewichte (150 g, 300 g und 600 g) sowie anschließend die staubunterdrückende Wirkung im Windkanal bestimmt. In Anlehnung an das Prüfnormverfahren DIN EN 13279-2:2014-03 (Abschnitt 4.4.2.2) wurde mit einem beschriebenen Vicat-Gerät mit Tauchkonus und Auslösevorrichtung (beschrieben in DIN EN 13279-2:2014-03, Bilder 2 und 3) die Eindringtiefe von Konen mit verschiedenen Gewichten (Gesamtgewicht Tauchkonus und Führungsstab 150 g, 300 g, 600 g) nach 24 Stunden ermittelt. Hierzu wurde die Probe unter den Tauchstab platziert. Der Tauchstab wurde vorsichtig so weit herabgelassen, dass er die Oberfläche der Probe berührt. Er wurde für zwei Sekunden angehalten und die Auslösevorrichtung betätigt. Der Tauchkonus drang unter Einwirkung seines Eigengewichtes senkrecht in die Probe ein. Die Eindringtiefe wurde fünf Sekunden nach Stillstand des Konus von der Skala abgelesen. Es wurde an drei Prüfstellen beprobt, die mindestens 3 cm voneinander entfernt waren. Aus den drei ermittelten Werten wurde ein Mittelwert gebildet. Die Messungen schwankten maximal um 10% des absoluten Wertes. Diese Messung gibt Auskunft über den Versteifungsverlauf (vgl. DIN EN 196-3, Abschnitt 6.3.1). Nach der Messung wurde die Masse des Prüfkörpers bestimmt (Probenmasse vor Windexposition) und der Prüfkörper im Windkanal platziert. Die mechanisch beanspruchte Probe wurde für eine Minute einer Windgeschwindigkeit von 12 m/s ausgesetzt. Die Strömungsrichtung der Luft traf in einem Winkel von 12,5° auf die Oberfläche. Nach der Windexposition wurde die reduzierte Masse bestimmt (Probenmasse nach Windexposition) und der emissionsbedingte Gewichtsverlust nach unten angegebener Formel bestimmt. Das Eigengewicht des Probengefäßes wurde jeweils abgezogen.

Die staubunterdrückende Wirkung im Windkanal ohne vorherige mechanische Beanspruchung wurde mit einer separaten Probe durchgeführt: Die Masse der erhärteten Probe (Probenmasse vor Windexposition) wurde bestimmt und die Probe wurde im Windkanal platziert. Im Windkanal wurde die Probe für eine Minute mit einer Windgeschwindigkeit von 12 m/s überströmt. Die Strömungsrichtung der Luft traf in einem Winkel von 12,5° auf die Oberfläche. Eine Messung des reduzierten Probengewichtes erfolgte nach der Windexposition (Probenmasse nach Windexposition) und der emissionsbedingte Gewichtsverlust wurde mit unten angegebener Formel bestimmt. Das Eigengewicht des Probengefäßes wurde jeweils abgezogen.

Der emissionsbedingte Gewichtsverlust in Gewichts-Prozent wurde wie folgt bestimmt:

$$\text{Emissionsbedingter Gewichtsverlust} = [(\text{Probenmasse vor Windexposition}_{\text{Tag xy}}$$
$$- \text{Probenmasse nach Windexposition}_{\text{Tag xy}}) / \text{Probenmasse vor Windexposition}_{\text{Tag xy}}] *100$$

Nach 48 Stunden wurde die Bruchkraft der Schichten bestimmt. Die Bruchkraft (Maximalwert der Kraftmessung) kann mit Hilfe des folgenden Verfahrens bestimmt werden: Das Verfahren ist angelehnt an das normierte Prüfverfahren zur Festigkeitsbestimmung in Zement DIN EN 196-1:2005-05. Mittels eines digitalen (Bruch-) Kraftmessgeräts wird nach Angaben des Herstellers die Bruchkraft gemessen. Ein Prüfkörper wird mit Hilfe eines Kurbelprüfstandes in die Probe (bis zum Bruch) gedrückt und die aufgebrachte Kraft kontinuierlich gemessen. Aus mehreren Messungen (>3) wird die mittlere Bruchkraft errechnet. Die mittlere Bruchkraft beträgt vorzugsweise zwischen 0,5 und 1000 N, weiter bevorzugt zwischen 1 und 300 N.

Im Anschluss an die Bestimmung der Bruchkraft wurde die mechanisch beanspruchte Probe in den Windkanal gestellt und für eine Minute einer Windgeschwindigkeit von 12 m/s ausgesetzt. Die Strömungsrichtung der Luft traf in einem Winkel von 12,5° auf die Oberfläche. Der emissionsbedingte Gewichtsverlust wird mit oben genannter Formel bestimmt. Dieser Test dient als Referenz für die Langzeitstabilität der Proben sowie deren Staubunterdrückung.

Ergebnisse:

Wurde der Quarzsand im trockenen Zustand (R1) im Windkanal mit einer Windgeschwindigkeit von 12 m/s für eine Minute beaufschlagt, so wurde über 50% des Gewichts in Form von Staub ausgetragen. Im nassen Zustand verlor dieser bei gleicher Windgeschwindigkeit und Expositionszeit noch 1,12 Gewichtsprozent des Eigengewichtes in Form von Staub (R2). Bei den gegebenen Bedingungen trocknet der Sand nach 4,5 Tagen komplett aus. Hierbei ging die staubunderdrückende Wirkung sukzessive zurück (Daten nicht gezeigt). In den vollständig getrockneten Proben betrug der prozentuale, emissionsbedingte Gewichtsverlust nach einer Minute Windexposition über 50%.

Die erfindungsgemäßen Formulierungen M1 und M2 wiesen einen schnelleren Ansteifungsverlauf als die Referenzsysteme R1, R2, R3, R4 und R5 auf. Nach 24 h drang ein Konus von 150 g Gewicht in die Referenzsysteme 9 bis 25 mm ein, wohingegen der Konus von 150 g Gewicht in erfindungsmäße Formulierungen 2 bzw. 6 mm eindrang (Abbildung 1 oben links). Die gleiche Tendenz war auch aus den Konen mit höherem Gewicht zu erkennen (Abbildung 1 oben links).

Nach 24 Stunden betrug der emissionsbedingte Gewichtsverlust nach einer Minute Windexposition im Windkanal (12 m/s) ohne vorherige mechanische Beanspruchung bei R1 über 50%, bei R2 1,11%, bei R3 0,41% bei R4 0,66% und bei R5 0,99%. Die Mischung M1 wies lediglich einen emissionsbedingten Gewichtsverlust von 0,03% und die Mischung M2 0,04% auf (Abbildung 1 unten links). Dies ist vermutlich auf die bessere kohäsive Wirkung zurückzuführen, die sich auch in den mechanischen Eigenschaften niederschlägt.

Nach 24 Stunden betrug der emissionsbedingte Gewichtsverlust nach einer Minute Windexposition im Windkanal (12 m/s) mit vorheriger mechanischer Beanspruchung (Überprüfen der Eindringtiefe des 600 g Konus) bei R1 über 50%, bei R2 1.12%, bei R3 0,71%, bei R4 1,58% und bei R5 2,78%. Die Mischung M1 wies einen emissionsbedingten Gewichtsverlust von 0,16% und die Mischung M2 wies einen emissionsbedingten Gewichtsverlust von 0,18% auf (Abbildung 1 unten rechts).

Nach 48 Stunden Reaktionszeit wiesen die erfindungsgemäßen Mischungen M1 und M2 eine höhere Bruchkraft auf als die zugehörigen Referenzsysteme. Hierbei lag die Bruchkraft der erfindungsgemäßen Mischungen über der Summe der Einzelbestandteile: Bruchkraft von R3= 1,5 N, Bruchkraft von R5= 2,2 N, Bruchkraft von M2= 7 N. Bruchkraft von R3= 1,5 N, Bruchkraft von R4= 5,1 N, Bruchkraft von M1= 12 N (Abbildung 1 oben rechts).

Mit dem zunehmendem Alter der Proben wurde der Unterschied in der staubunterdrückenden Wirkung nach vorheriger mechanischer Überprüfung noch stärker ersichtlich: Nach 48 Stunden betrug der emissionsbedingte Gewichtsverlust nach einer Minute Windexposition im Windkanal (12 m/s) mit vorheriger mechanischer Beanspruchung (Bestimmung der Bruchkraft) bei R2 1,30%, bei R3 0,85%, bei R4 40,1% und bei R5 42,9%. Die Mischungen M1 und M2 wiesen einen signifikanten geringeren, emissionsbedingten Gewichtsverlust von M1 0,40 und M2 0,43% auf. Nach noch längerer Reaktionszeit (10 bzw. 28 Tagen) waren gleiche Tendenzen zu erkennen (Daten nicht gezeigt; siehe hierzu auch Bsp. 2).

Die Biozementierungsmischung ist vorteilhafterweise ähnlich effektiv wie viele marktübliche Staubunterdrückungsmittel (Daten nicht gezeigt), wobei die oben beschriebene erhöhte Staubunterdrückung nach mechanischer Belastung vergleichbar ist mit der bitumen-basierter Systeme, ohne die diversen umweltbezogenen Nachteile.

Des Weiteren wurde in der vorangehend beschriebenen Biozementierungsmischungen R3, M1 und M2 der Bakterienstamm *S. pasteurii* durch die gleiche Zellzahl-Konzentration an jeweils *L. sphaericus* ersetzt, wobei die Versuche jeweils wie oben beschrieben durchgeführt wurden. Die sich daraus ergebenden flüssigen Referenz- bzw. Biozementierungsmischungen bestanden aus folgenden Bestandteilen:

Referenz 6 (R6):

| 48 | g/L | Harnstoff |
|---|---|---|
| 44 | g/L | Calciumchlorid |
| 4 x 10^8 | Zellen/mL | *L. sphaericus* |

Mischung 3 (M3):

| 48 | g/L | Harnstoff |
|---|---|---|
| 44 | g/L | Calciumchlorid |
| 6,25 | g/L | Calciumligninsulfonat |
| 4 x 10^8 | Zellen/mL | *L. sphaericus* |

Mischung 4 (M4):

| 48 | g/L | Harnstoff |
|---|---|---|
| 44 | g/L | Calciumchlorid |
| 3,15 | g/L | Calciumligninsulfonat |

| 4 x 10^8 | Zellen/mL | *L. sphaericus* |
|---|---|---|

Des Weiteren waren in der Mischung Spurenelemente und Spuren von beispielsweise Salzen und Zuckern enthalten (<1 Gew.-%). Harnstoff diente in diesem Medium primär als Carbonatquelle. Die Bakterien lagen als Flüssigkultur in einem aus dem Stand der Technik bekannten Kultivierungsmedium vor, wie beispielsweise in Dick, J. et al., Biodegradation 2006, 17, 357-367 beschrieben (s. Abschnitt "Materials and Methods", S. 359), wobei im Rahmen der vorliegenden Erfindung 5 g/L Hefeextrakt verwendet wurden. Calciumligninsulfonat ist die kohäsionsmodifizierende Verbindung in den Mischungen M3 und M4.

Bei Verwendung des Organismus *L. sphaericus* in den erfindungsgemäßen Mischungen wurden vergleichbare Ergebnisse wie unter Verwendung von *S. pasteurii* erzielt (vgl. Abbildung 2).

Vergleichbare Wirkungen auf Emissionsreduktion wurde auch bei leicht abgewandelten Formulierungen der Biozementierungsmischungen M1, M2, M3 und M4 erzielt, die Calciumacetat, Calciumpropionat, Calciumformiat, Calciumlactat und / oder Calciumchlorid in einer Konzentration von jeweils 0,05 bis 0,3 M enthielten und eine Gesamtcalciumkonzentration von 0,4 M nicht überschritten (Daten nicht gezeigt). Eine stärkere Variation in der Calciumligninsulfonatkonzentration (z.B. 1 bis 500 g/L), Harnstoffkonzentration (z.B. 0,1 bis 1,0 M) oder bei der Hefeextraktmenge (z.B. 0,1 bis 30 g/L) erbrachte ebenfalls gute Emissionsreduktion. Die Staubunterdrückung war jeweils abhängig von den eingesetzten Konzentrationen der Bestandteile der jeweiligen Biozementierungsmischung (Daten nicht gezeigt). Entsprechende Beobachtungen wurden auch für entsprechend abgewandelte erfindungsgemäße Formulierungen der Beispiele 2, 3 und 4 gemacht.

Beschleunigende Additive werden bei Baustoffen, bspw. bei zementären Baustoffen wie Mörteln und Betonen zur Regulierung der Erstarrungszeit verwendet (EP 2664596 A3). Aufgrund der in diesem Beispiel beschriebenen, beschleunigten Aushärtung der Mischungen, ist eine bevorzugte Verwendung der erfindungsgemäßen Mischungen die Verwendung zur Herstellung für Baustoffen.

Ebenso wurden vergleichbare Wirkungen auf Emissionsreduktion aller oben genannten Mischungen erzielt, bei denen die Bakterien als Pulver vorlagen. Hierzu wurden die jeweiligen Bakterienzellen im Kultivierungsmedium konzentriert, anschließend fachmännisch getrocknet und vor der Applikation im entsprechenden Medium aufgelöst.

Ebenso wurden vergleichbare Wirkungen auf Emissionsreduktion aller oben genannten Mischungen in Mischungen erzielt, bei denen Calciumligninsulfonat gegen Ligninsulfonsäure, Natriumligninsulfonat, Kaliumligninsulfonat bzw. Ammoniumligninsulfonat ausgetauscht wurde und/oder die Kationenquelle (hier: Calciumquelle wie Calciumchlorid) entfernt wurde.

**Beispiel 2: Beschleunigte Biozementierungsformulierungen mit verbesserter Staubunterdrückung für nicht-ureolytische und ureolytische Biozementierungssysteme im Vergleich**

Material und Methoden:

Der Versuch wurde im Labor in Plastikgefäßen mit einem Volumen von 450 cm$^3$ durchgeführt. Die Applikationsfläche betrug jeweils 78,5 cm$^2$.

Das Bodensubstrat im Versuch bestand aus einen Quarzsand mit einer Körnung von 0-2 mm. Der Sand war vom Hersteller gewaschen sowie getrocknet und wurde direkt verwendet. Es wurden 800 g Quarzsand pro Plastikgefäß als Bodensubstrat verwendet.

Zur Kontrolle wurde die Referenz-Mischung R3 verwendet, welche aus den folgenden Bestandteilen in folgenden Konzentrationen bestanden:

Referenz 3 (R3):

| 48 | g/L | Harnstoff |
|---|---|---|
| 44 | g/L | Calciumchlorid |
| 4 x 10^8 | Zellen/mL | *S. pasteurii* |

Referenz 6 (R6):

| 48 | g/L | Harnstoff |
|---|---|---|
| 44 | g/L | Calciumchlorid |
| 4 x 10^8 | Zellen/mL | *L. sphaericus* |

Des Weiteren waren in den Mischungen R3 und R6 Spurenelemente und Spuren von beispielsweise Salzen und Zuckern enthalten (<1 Gew.-%). Harnstoff diente in diesem Medium primär als Carbonatquelle.

Die Referenz-Mischungen wurden in jeweils drei Replikaten auf die Versuchsflächen aufgebracht. Die Applikationsmenge pro Quadratmeter war durchgehend 4 Liter je Replikat. Zur Applikation wurde eine Pipette verwendet. Nach der Applikation wurde die Oberfläche mit einem Spatel glattgestrichen.

Es wurden flüssige Biozementierungsmischungen benutzt, welche aus den folgenden Bestandteilen in den folgenden Konzentrationen bestand:

Mischung 5 (M5):

| | | |
|---|---|---|
| 5 | g/L | Hefeextrakt |
| 21 | g/L | Calciumacetat |
| 34,9 | g/L | Calciumchlorid |
| 46,2 | g/L | Calciumlactat |
| 0,40 | g/L | Natriumhydroxid |
| 1,07 | g/L | Ammoniumchlorid |
| 15 | g/L | L-Alanin |
| 25 | g/L | Calciumligninsulfonat |
| $4 \times 10^8$ | Zellen/mL | *B. pseudofirmus* |

Mischung 6 (M6):

| | | |
|---|---|---|
| 27 | g/L | Harnstoff |
| 34 | g/L | Calciumchlorid |
| 10 | g/L | Hefeextrakt |
| 12,5 | g/L | Styrolacrylatdispersion |
| $4 \times 10^8$ | Zellen/mL | *L. sphaericus* |

Mischung 7 (M7):

| | | |
|---|---|---|
| 5 | g/L | Hefeextrakt |
| 21 | g/L | Calciumacetat |
| 34,9 | g/L | Calciumchlorid |
| 46,2 | g/L | Calciumlactat |
| 25 | g/L | Calciumligninsulfonat |
| $4 \times 10^8$ | Zellen/mL | *B. halodurans* |

Mischung 8 (M8):

| | | |
|---|---|---|
| 36 | g/L | Harnstoff |
| 35 | g/L | Calciumchlorid |
| 10 | g/L | Hefeextrakt |
| $4 \times 10^8$ | Zellen/mL | *L. sphaericus* |

Mischung 9 (M9):

| | | |
|---|---|---|
| 27 | g/L | Harnstoff |
| 17 | g/L | Calciumchlorid |
| 31 | g/L | Albumin |
| $4 \times 10^8$ | Zellen/mL | *L. sphaericus* |

Mischung 10 (M10):

| 48 | g/L | Harnstoff |
|---|---|---|
| 44 | g/L | Calciumchlorid |
| 3,9 | g/L | Polyvinylalkohol |
| 4 x 10^8 | Zellen/mL | *S. pasteurii* |

Mischung 11 (M11):

| 48 | g/L | Harnstoff |
|---|---|---|
| 44 | g/L | Calciumchlorid |
| 3,9 | g/L | Polyvinylacetatdispersion |
| 4 x 10^8 | Zellen/mL | *S. pasteurii* |

Mischung 12 (M12):

| 48 | g/L | Harnstoff |
|---|---|---|
| 44 | g/L | Calciumchlorid |
| 9,4 | g/L | Stärkeether |
| 4 x 10^8 | Zellen/mL | *S. pasteurii* |

Mischung 13 (M13):

| 1 | g/L | Hefeextrakt |
|---|---|---|
| 34,9 | g/L | Calciumchlorid |
| 25 | g/L | Calciumligninsulfonat |
| 21 | g/L | Calciumacetat |
| 46,2 | g/L | Calciumlactat |
| 4 x 10^8 | Zellen/mL | *B. cohnii* |

Mischung 14 (M14):

| 1 | g/L | Hefeextrakt |
|---|---|---|
| 21 | g/L | Calciumacetat |
| 25 | g/L | Calciumligninsulfonat |
| 15 | g/L | L-Alanin |
| 34,9 | g/L | Calciumchlorid |
| 46,2 | g/L | Calciumlactat |
| 0,40 | g/L | Natriumhydroxid |
| 1,07 | g/L | Ammoniumchlorid |
| 4 x 10^8 | Zellen/mL | *A. crystallopoietes* |

Mischung 15 (M15):

| 1 | g/L | Hefeextrakt |
|---|---|---|
| 34,9 | g/L | Calciumchlorid |
| 21 | g/L | Calciumacetat |
| 46,2 | g/L | Calciumlactat |
| 4 x 10^8 | Zellen/mL | *B. cohnii* |

Mischung 16 (M16):

| 1,07 | g/L | Ammoniumchlorid |
|---|---|---|
| 21 | g/L | Calciumacetat |
| 15 | g/L | L-Alanin |
| 34,9 | g/L | Calciumchlorid |
| 0,40 | g/L | Natriumhydroxid |
| 1 | g/L | Hefeextrakt |
| 46,2 | g/L | Calciumlactat |
| 4 x 10^8 | Zellen/mL | *A. crystallopoietes* |

Mischung 17 (M17):

| 36 | g/L | Harnstoff |
|---|---|---|
| 36 | g/L | Magnesiumsulfat |
| 10 | g/L | Hefeextrakt |
| 4 x 10^8 | Zellen/mL | *L. sphaericus* |

Mischung 18 (M18):

| 27 | g/L | Harnstoff |
|---|---|---|
| 35 | g/L | Calciumchlorid |
| 45 | g/L | Lysin |
| 4 x 10^8 | Zellen/mL | *S. pasteurii* |

Mischung 19 (M19):

| 48 | g/L | Harnstoff |
|---|---|---|
| 44 | g/L | Calciumchlorid |
| 25 | g/L | Polyvinylalkohol |
| 4 x 10^8 | Zellen/mL | *S. pasteurii* |

Mischung 20 (M20):

| 27 | g/L | Harnstoff |
|---|---|---|
| 47 | g/L | Calciumligninsulfonat |
| 4 x 10^8 | Zellen/mL | *S. pasteurii* |

Mischung 21 (M21):

| 5 | g/L | Hefeextrakt |
|---|---|---|
| 21 | g/L | Calciumacetat |
| 25 | g/L | Calciumligninsulfonat |
| 34,9 | g/L | Calciumchlorid |
| 46,2 | g/L | Calciumlactat |
| 4 x 10^8 | Zellen/mL | *B. pseudofirmus* |

Mischung 22 (M22):

| 27 | g/L | Harnstoff |
|---|---|---|
| 47 | g/L | Calciumligninsulfonat |
| 12 | g/L | Calciumchlorid |
| 4 x 10^8 | Zellen/mL | *S. pasteurii* |

Mischung 23 (M23):

| | | |
|---|---|---|
| 27 | g/L | Harnstoff |
| 35 | g/L | Calciumchlorid |
| 45 | g/L | Lysin |
| 4 x 10^8 | Zellen/mL | *L. spaericus* |

Des Weiteren waren in der Mischung Spurenelemente und Spuren von beispielsweise Salzen und Zuckern enthalten (<1 Gew.-%). Harnstoff diente in den Mischungen M6, M8, M9, M10, M11, M12, M17, M18, M19, M20, M21, M22, M23 primär als Carbonatquelle. In den Mischungen M5, M7, M13, M14, M15, M16, M21 diente jeweils ein organisches Calciumsalz primär als Carbonatquelle. In der Mischung M15 diente zudem noch Hefeextrakt als Carbonatquelle. In der Mischung M16 diente zudem noch L-Alanin als Carbonatquelle.

L-Alanin, Calciumligninsulfonat, Calciumlactat (M5, M7), Calciumacetat (M1, M14), Styrolacylatdispersion, Hefeextrakt, Albumin, Polyvinylalkohol, Polyvinylacetatdispersion, Stärkeether, Magnesiumsulfat, Lysin sind in den vorliegenden Beispielen die kohäsionsmodifizierenden Verbindungen, wenn sie nicht als Carbonatquelle dienten.

Alle Komponenten der vorliegenden Mischung, die zur Biozementierung in der Lage sind, bis auf die Bakterien lagen in fester Form vor. Die Bakterien des Stammes *B. pseudofirmus* lagen als Flüssigkultur in einem aus dem Stand der Technik bekannten Kultivierungsmedium vor, wie beispielsweise in Jonkers H. M. et al., Tailor Made Concrete Structures - Walraven & Stoelhorst (eds), 2008, Taylor & Francis Group, London, ISBN 978-0-415-47535-8, Abschnitt 2.1, beschrieben, wobei im Rahmen der vorliegenden Erfindung 5 g/L Hefeextrakt verwendet wurden. 8. *cohnii* und *B. halodurans* lagen dabei im gleichen Kultivierungsmedium wie *B. pseudofirmus* vor und *A. crystallopoietes* lag in einem bekannten Kultivierungsmedium, wie beispielsweise in Hamilton, R. W. et al., Journal of Bacteriology 1977, 129(2), 874-879 beschrieben (s. Abschnitt "Materials and Methods", S. 874-875), vor. *L. sphaericus* und *S. pasteurii* lagen in den in Beispiel 1 beschriebenen Kultivierungsmedien vor. Die festen Bestandteile und die Bakterien in Flüssigkultur wurden direkt vor Verwendung gemischt, wobei sich die festen Bestandteile auflösten.

Die Mischungen wurden in jeweils drei Replikaten auf die Versuchsflächen aufgebracht. Die Applikationsmenge pro Quadratmeter war durchgehend 4 Liter je Replikat. Zur Applikation wurde eine Pipette verwendet. Nach der Applikation wurde die Oberfläche mit einem Spatel glattgestrichen. Die berichteten Messwerte sind Mittelwerte von den drei Replikaten, die typischerweise im Bereich von 10% des ermittelten Wertes lagen.

Nach der Applikation der Referenz-Mischungen sowie der Biozementierungsmischungen erfolgte eine Inkubation über den Gesamtbeobachtungszeitraum (28 Tage) bei einer Luftfeuchte von 20% bis 60% und einem mehrfachen Luftwechsel pro Tag. In diesem Zeitraum herrschte eine Minimaltemperatur von 14,2 °C und eine Maximaltemperatur von 25,2 °C.

Nach 24 Stunden wurde die Eindringtiefe von Tauchkonen verschiedener Gewichte (150 g, 300 g und 600 g) sowie anschließend die staubunterdrückende Wirkung im Windkanal, wie in Beispiel 1 beschrieben, bestimmt. Die staubunterdrückende Wirkung im Windkanal ohne vorherige mechanische Beanspruchung wurde mit einer separaten Probe durchgeführt: Die ausgehärtete Probe wurde für eine Minute einer Windgeschwindigkeit von 12 m/s ausgesetzt. Die Strömungsrichtung der Luft traf in einem Winkel von 12,5° auf die Oberfläche. Der emissionsbedingte Gewichtsverlust in Gewichts-Prozent wurde, wie in Beispiel 1 beschrieben, ermittelt.

Nach 48 Stunden wurde die Bruchkraft der Schichten bestimmt. Die Bruchkraft (Maximalwert der Kraftmessung) kann mit Hilfe des folgenden Verfahrens bestimmt werden: Das Verfahren ist angelehnt an das normierte Prüfverfahren zur Festigkeitsbestimmung in Zement DIN EN 196-1:2005-05. Mittels eines digitalen (Bruch-) Kraftmessgeräts wird nach Angaben des Herstellers die Bruchkraft gemessen. Ein Prüfkörper wird mit Hilfe eines Kurbelprüfstandes in die Probe (bis zum Bruch) gedrückt und die aufgebrachte Kraft kontinuierlich gemessen. Aus mehreren Messungen (>3) wird die mittlere Bruchkraft errechnet. Die mittlere Bruchkraft beträgt vorzugsweise zwischen 0,5 und 1000 N, weiter bevorzugt zwischen 1 und 300 N.

Im Anschluss an die Bestimmung der Bruchkraft wurde die mechanisch beanspruchte Probe in den Windkanal gestellt und für eine Minute einer Windgeschwindigkeit von 12 m/s ausgesetzt. Die Strömungsrichtung der Luft traf in einem Winkel von 12,5° auf die Oberfläche. Der emissionsbedingte Gewichtsverlust wird mit in Beispiel 1 genannter Formel bestimmt. Dieser Test dient als Referenz für die Langzeitstabilität der Proben sowie deren Staubunterdrückung.

Von ausgewählten Proben wurden nach einer Reaktionszeit 10 Tagen beziehungsweise 28 Tagen die Bruchkraft sowie der Massenverlust bei Windexposition, wie oben beschrieben, bestimmt.

Ergebnisse:

Im vorherigen Beispiel 1 wurde die Reduktion des emissionsbedingten Gewichtsverlustes durch beschleunigte Biozementierungsformulierungen beschrieben. In diesem Beispiel wird dargestellt, dass diese Erkenntnis auf eine weite Gruppe von bodenverfestigenden Substanzen, die die Biozementierung beschleunigenden, ausgeweitet werden kann.

Alle oben beschriebenen erfindungsgemäßen Formulierungen wiesen einen schnelleren Ansteifungsverlauf als die Referenzsysteme R3 und R6 auf. Nach 24 h drang ein Konus von 150 g Gewicht in die Referenzsysteme R3 bzw. R6 14 mm ein, wohingegen der Konus von 150 g Gewicht in erfindungsgemäße Formulierungen 4 bis 9,5 mm eindrang (Abbildung 3 oben links). Die gleiche Tendenz war auch aus den Konen mit höherem Gewicht zu erkennen (Abbildung 3, oben links).

Wird nach dem mechanischen Überprüfen der Gewichtsverlust im Windkanal bestimmt, so weisen die erfindungsgemäßen Mischungen eine erhöhte Kohäsivität und somit eine erhöhte Staubunterdrückung auf. Der Gewichtsverlust nach 24 Stunden Reaktionszeit, Bestimmen der Eindringtiefe und einer Minute Windexposition im Windkanal (12 m/s) ist in Abbildung 3 oben rechts dargestellt. Beim Referenzsystem R3 beträgt der prozentuale, emissionsbedingte Gewichtsverlust 0,71%. Die erfindungsmäßigen Formulierungen weisen einen Massenverlust von 0,07% bis 0,56% auf (Abbildung 3 oben rechts). Der schnellere Ansteifungsverlauf führt dazu, dass bei Windexposition weniger Partikel aus der Probe ausgetragen werden.

Nach 48 Stunden Reaktionszeit wiesen die erfindungsgemäßen Mischungen eine höhere Bruchkraft auf als die zugehörigen Referenzsysteme. Hierbei lag die Bruchkraft der erfindungsgemäßen Mischungen bei einem Vielfachen der des Referenzsystems R3 (Abbildung 3, unten links).

Mit dem zunehmendem Alter der Proben wurde der Unterschied in der staubunterdrückenden Wirkung nach vorheriger mechanischer Überprüfung noch stärker ersichtlich: Nach 48 Stunden betrug der Gewichtsverlust nach einer Minute Windexposition im Windkanal (12 m/s) mit vorheriger mechanischer Beanspruchung (Bestimmung der Bruchkraft) bei R2 1,30% und bei R3 0,85%.

Die erfindungsgemäßen Mischungen M15 bis M23 wiesen einen Massenverlust nach mechanischer Überprüfung und Windexposition von 0,04% bis 0,45% auf (vgl. Abbildung 3, unten rechts).

Wurde die Untersuchung der bruchmechanischen Eigenschaften und des emissionsbedingten Gewichtsverlustes im Windkanal nach einer längeren Reaktionszeit durchgeführt, war der Unterschied zwischen den Referenzsystemen und den biozementierenden Mischungen noch deutlicher ersichtlich:

Des Weiteren wurden die Referenzmischung R7 sowie Biozementierungsmischung M24 hergestellt und wie oben beschrieben miteinander verglichen.

Referenz 7 (R7):

| 50 | g/L | Calciumligninsulfonat |
|----|-----|------------------------|

Mischung 24 (M24):

| 48 | g/L | Harnstoff |
|---------|----------|------------------------|
| 44 | g/L | Calciumchlorid |
| 50 | g/L | Calciumligninsulfonat |
| 4 x 10^8 | Zellen/mL | *S. pasteurii* |

Des Weiteren waren in der Mischung M24 Spurenelemente und Spuren von beispielsweise Salzen und Zuckern enthalten (<1 Gew.-%). Calciumligninsulfonat ist in Mischung M24 die kohäsionsmodifizierende Verbindung. Die Bakterien des Stammes *S. pasteurii* lagen im Beispiel 1 beschriebenen Kultivierungsmedium vor. Die Mischungen wurden wie im Vorherigen beschrieben angefertigt und gelagert.

Es fiel auf, dass diese Mischungen binnen 48 Stunden verfestigten (Bruchkraft nicht gezeigt; vgl. hierzu auch Beispiel 5). Bei R7 bildete sich eine dünne Schicht, wohingegen bei M24 eine dickere, kohäsivere Schicht ausgebildet wurde. Diese Unterschiede in der Beschaffenheit der Schicht schlugen sich in einem unterschiedlichen, emissionsbedingten Gewichtsverlust nieder: Die Mischungen R7 und M24 wurden nach Bestimmen der Bruchkraft im Windkanal für eine Minute mit 12 m/s Wind beprobt (wie oben beschrieben). Dabei betrug der emissionsbedingte Gewichtsverlust bei R7 11,3% und der emissionsbedingte Gewichtsverlust von M24 0,21%. Ausgewählte Mischungen und Referenzsysteme wurden über einen Zeitraum von 48 Stunden hinweg reagieren lassen. Die Ergebnisse legen dem Fachmann nahe, dass eine erhöhte Kohäsivität Vorteile für lang andauernde Staubunterdrückung bewirkt.

Nach 10 und 28 Tagen wurden die Bruchkräfte der verschiedenen Mittel im Vergleich zu den Referenzsystemen bestimmt. Dabei wurden vergleichbare Ergebnisse wie oben beschrieben erzielt (Daten nicht gezeigt). Der Massenverlust nach mechanischer Überprüfung nach 10 Tagen ist in Tabelle 1 dargestellt. Hier zeigt sich, dass die kohäsiveren Biozementschichten eine signifikant bessere Staubunterdrückung nach mechanischer Beprobung aufwiesen.

Tabelle 1: Massenverlust nach 10 Tagen Reaktionszeit, mechanischer Beprobung und einer Minute Windexposition bei 12 m/s Windgeschwindigkeit verschiedener Referenzmischungen sowie Biozementierungsmischungen.

| Mischung bzw. Referenzsystem | Massenverlust nach mechanischer Beprobung und einer Minute Windexposition bei 12 m/s Windgeschwindigkeit. [Gewichtsprozent] |
| --- | --- |
| R3 | >50 |
| R7 | 50,1 |
| M5 | 0,67 |
| M6 | 1,56 |
| M7 | 0,26 |
| M8 | 0,14 |
| M9 | 0,16 |
| M10 | 0,96 |
| M11 | 4,82 |
| M12 | 0,15 |
| M13 | 0,67 |
| M14 | 1,82 |
| M16 | 0,77 |
| M17 | 6,31 |
| M18 | 2,52 |
| M19 | 0,04 |
| M20 | 8,1 |
| M21 | 0,63 |
| M22 | 0,26 |
| M23 | 0,11 |
| M24 | 0,06 |

Vergleichbare Wirkungen auf Emissionsreduktion wurden auch bei leicht abgewandelten Formulierungen der Biozementierungsmischungen M5 bis M24 erzielt, die Calciumacetat, Calciumpropionat, Calciumformiat, Calciumlactat und / oder Calciumchlorid in einer Konzentration von jeweils 0,05 bis 0,4 M enthielten und eine Gesamtcalciumkonzentration von 1 M nicht überschritten (Daten nicht gezeigt). Eine stärkere Variation in der Calciumligninsulfonatkonzentration (z.B. 1 bis 500 g/L), L-Alaninkonzentration (z. B. 1 bis 250 g/L), Styrolacrylatdispersionskonzentration (z.B. 1 bis 350 g/L), Polyvinylalkoholkonzentration (z.B. 1 bis 250 g/L), Polyvinylacetatdispersionskonzentration (z.B. 1 bis 350 g/L), Albuminkonzentration (1 bis 200 g/L), Stärkeetherkonzentration (z.B. 1 bis 90 g/L), Magnesiumsulfatkonzentration (z.B. 1 bis 300 g/L), Lysinkonzentration (z.B. 1 bis 250 g/L), Harnstoffkonzentration (z.B. 0,1 bis 1,0 M) oder bei der Hefeextraktmenge (z.B. 0,1 bis 150 g/L) erbrachte ebenfalls gute Emissionsreduktion. Die Staubunterdrückung war jeweils abhängig von den eingesetzten Konzentrationen der Bestandteile der jeweiligen Biozementierungsmischung (Daten nicht gezeigt). Entsprechende Beobachtungen wurden auch für entsprechend abgewandelte, erfindungsgemäße Formulierungen der Beispiele 3, 4 und 5 gemacht.

Vergleichbare Wirkungen auf Emissionsreduktion wurde auch bei den Biozementierungsmischungen M5 bis M24 erzielt, bei denen die Bakterien als sprühgetrocknetes und/oder gefriergetrocknetes Pulver vorlagen. Hierzu wurden die jeweiligen Bakterienzellen im Kultivierungsmedium konzentriert, anschließend fachmännisch getrocknet und vor der Applikation im entsprechenden Medium aufgelöst. Es zeigte sich, dass bei Verwendung von getrockneten Bakterienzellen der emissionsbedingte Gewichtsverlust sogar noch leicht reduziert werden konnte (Daten nicht gezeigt).

Ebenso wurden vergleichbare Wirkungen aller oben genannten Mischungen in Mischungen erzielt, bei denen Calciumligninsulfonat gegen Ligninsulfonsäure, Natriumligninsulfonat, Kaliumligninsulfonat bzw. Ammoniumligninsulfonat ausgetauscht wurde. Darüber hinaus wurde bei Entfernung der Kationenquelle (hier: Calciumquelle) in den Mischungen M5, M6, M7, M8, M9, M10, M11, M12, M13, M14, M18, M19, M21, M22 und M23 eine vergleichbare Wirkung der Staubunterdrückung erzielt. Wurde gleichzeitig Calciumligninsulfonat gegen Ligninsulfonsäure, Natriumligninsulfonat, Kaliumligninsulfonat bzw. Ammoniumligninsulfonat ausgetauscht und die Kationenquelle (hier: Calciumquelle) entfernt, wurde auch eine vergleichbare Wirkung erzielt.

**Beispiel 3: Analyse ausgewählter Mischungen sowie Referenzsystemen im Windkanal bei einem externen Prüflabor**

Material und Methoden:

In einem externen Prüflabor wurden die emissionsmindernde Wirkung von den Referenzsystemen R1 (trocken), R2 (Wasserapplikation) sowie eines kommerziell am Markt erhältlichen staubunterdrückenden Mittels R8 im Vergleich zur Mischung M20 getestet.

Als Bodensubstrat wurde ein feines Calciumcarbonat mit der Bezeichnung ESKAL 60 verwendet. Dieser feinpartikuläre Staub dient als Prüfstaub für diverse Analysen u.a. der Windkanal Analytik. ESKAL 60 besitzt eine genau definierte Kornverteilung. Die mittlere Korngröße beträgt 60 $\mu$m. Dem Fachmann ist bekannt, dass je nach verwendetem Windkanal ein passender Prüfstaub verwendet werden muss. Plastikschalen (Durchmesser 87 mm, Höhe 16 mm) wurden mit dem Bodensubstrat randvoll gefüllt und das exakte Gewicht der jeweiligen Gefäße ermittelt.

Folglich wurden alle Proben mit dem jeweiligen Flächenbehandlungsmittel versehen. Die behandelten Proben wurden im Sinne eines Blind-Tests so gekennzeichnet, dass eine Zuordnung zu den jeweiligen Flächenbehandlungsmitteln nicht möglich war.

Referenzmischung 8 (R8): 50 g/L Polymerdispersion (divers)

Das kommerziell am Markt erhältliche Produkt ist ein Krustenbildner. Es wurde nach Herstellerangaben verwendet und mit 1,5 L/m$^2$ appliziert. Des Weiteren wurde die emissionsmindernde Wirkung von Biozementierungsmischung M20 untersucht. Mischung 20 wurde in vergleichbaren Aufwandmengen gemessen in Masse Feststoff pro Oberfläche wie R8 aufgetragen.

Alle Proben, mit Ausnahme von R2, wurden unter definierten Umgebungsbedingungen (31% relativer Luftfeuchte, 23 °C) in einem Klimaschrank 24 Stunden equilibriert und anschließend nochmals gewogen. Die Proben der Referenz R2 wurden erst direkt vor der Exposition in dem Windkanal appliziert. Die befeuchtende Applikation (R2) wurde unmittelbar vor Versuchsbeginn mit einer gleichbleibend positionierten Sprühflasche mit entionisiertem Wasser beaufschlagt. Der Masseneintrag an Wasser wurde protokolliert.

Zu Versuchsbeginn wurden die Proben in randomisierter Reihenfolge einzeln und abgedeckt in der Mitte des Windkanals (D=0,15 m, L=5,4 m) positioniert. Mit Versuchsbeginn wurde der Partikelzähler aktiviert, die Abdeckung des Probenmaterials entfernt und der Windkanal verschlossen. Alle Proben wurden jeweils einzeln 15 Minuten lang der Überströmung mit einer mittleren, auf Höhe der Probe gemessenen, Aerosolgeschwindigkeit von 6 m/s ausgesetzt, wobei alle 30 Sekunden eine Partikelgrößenverteilung ermittelt wurde. Alle Versuche wurden drei Mal wiederholt. Der emissionsbedingte Massenverlust wurde mit der in Beispiel 1 angegebenen Formel ermittelt. Die berichteten Messwerte sind Mittelwerte von den drei Replikaten, die typischerweise im Bereich von 10% des ermittelten Wertes lagen.

Ergebnisse:

Die Versuche zeigten, dass das Flächenbehandlungsmittel M20 den Staubaustrag zuverlässig verhindert hat. Lediglich bei dem kommerziell am Markt erhältlichen Mittel R8 sowie bei den unbehandelten Proben (R1) und bei den mit Wasser behandelten Proben (R2) kam es zu Emissionen.

Beim kommerziell am Markt erhältlichen Mittel R8 macht sich dieses Verhalten durch einen Partikelaustritt von bis zu 180 erfassten Partikeln in den ersten 90 Sekunden und einem mittleren Massenverlust von 1,86% bemerkbar.

Die als Vergleich dienenden unbehandelten Calciumcarbonatproben (R1) wiesen den stärksten Partikelaustrag aller betrachteten Proben auf. Beginnend mit 2500 bis 3800 Partikeln/30 Sekunden stieg die Emission auf 4100 bis 5500 Partikeln/30 Sekunden um dann stetig auf einen Wert von ca. 100 Partikeln/30 Sekunden zu fallen. Der emissionsbedingte mittlere Massenverlust betrug 74,55%.

Bei den mit Wasser behandelten Proben war die Partikelfreisetzung zeitlich verzögert, hier setzte die Partikelfreisetzung erst nach ca. 200 Sekunden ein. Der emissionsbedingte mittlere Massenverlust beträgt 66,94%. Die Verzögerung der Freisetzung ist wahrscheinlich auf die Evaporation des Wassers im Windkanal zurück zu führen.

Bei der Biozementierungsmischung M20 war keine Partikelfreisetzung zu detektieren und der emissionsbedingte Massenverlust betrug 0,003% (vgl. Abbildung 4).

**Beispiel 4: Freilandnachweis der Emissionsreduzierenden Wirkung in einer Kalksteinmine**

Material und Methoden:

Zur Kontrolle der Staubunterdrückung unter Freilandbedingungen wurde in einem Kalksteinbruch exemplarisch eine Biozementierungsmischung M20 im Vergleich zur Referenzmischung R3 (als Kontrolle) an drei Standorten appliziert. Die drei Standorte innerhalb der Mine befanden sich auf einer Straße (Stelle 1 in Abbildung 5 oben links), auf einer frischen Halde (Stelle 2 in Abbildung 5 oben links) sowie in einer aktiven Grube (Stelle 3 in Abbildung 5 oben links). Es erfolgte eine Applikation auf je 150 qm Fläche mit drei Litern pro Quadratmeter Applikationsvolumen. Als weitere Referenz wurde die derzeitig im täglichen Betrieb der Mine verwendete emissionsmindernde Maßnahme durchgeführt, die Applikation von drei Litern Wasser pro Quadratmeter (Abbildung 5 oben rechts). Dies geschah analog zu Referenz R2. Die Referenzflächen befanden sich unmittelbar neben den Prüfflächen der Biozementierungsmischungen und waren gleich frequentiert. Die Ausbringfläche von Mischung M20 auf der Straße ist in Abbildung 5 unten links dargestellt, die Ausbringfläche von Mischung M20 auf der Halde ist in Abbildung 5 unten rechts dargestellt.

Nach Applikation wurden alle 9 applizierten Flächen wie in Abbildung 5 unten exemplarisch dargestellt, abgesteckt und 48 Stunden reagieren gelassen. Nach 24 Stunden wurde die Schichtbildung visuell überprüft und nach 48 Stunden die Bruchkraft der Schichten gemessen (Daten nicht gezeigt).

Der Freilandversuch wurde für 4 Wochen bonitiert. Die Temperatur variierte hierbei zwischen 5,3 °C in der Nacht und 26,3 °C am Tage. Die relative Luftfeuchte variierte zwischen 64% in der Nacht und 31% am Tage. Innerhalb des Versuchszeitraums erfolgte eine gesamte Niederschlagsmenge von 11 L/m$^2$.

Die Messung der staubunterdrückenden Wirkung erfolgte zu verschiedenen Zeitpunkten nach 48 h, 7 Tagen und 28 Tagen. Nach 48 Stunden wurde mit einem Laubbläser der Firma Bosch (GBL 18V-120) an mehreren Stellen die staubunterdrückende Wirkung überprüft. Hierbei wurden Windgeschwindigkeiten von 40 m/s aus einem Meter Abstand zur Oberfläche und einem Aufprallwinkel von ca. 15° verwendet. Die Begutachtung, durchgeführt von drei Angestellten der Mine, erfolgte mittels der Klassifizierung "staubt stark", "staubt mäßig und "staubt nicht". Alle Angestellten sind Fachmänner im Bereich der Bereichstaubunterdrückung im Tagebau und wiesen jeweils mehr als 10 Jahre relevante Berufserfahrung auf. "Staubt nicht" wurde verwendet, wenn keine sichtbaren Partikel ausgetragen wurden. "Staubt stark" wurde verwendet, wenn die Testfläche wie eine unbehandelte Fläche staubte. "Staubt mäßig" wurde verwendet, wenn die Staubbildung im Vergleich zur unbehandelten Fläche verringert war. Die fachmännisch erhaltenen Daten wurden zusätzlich durch Partikelanalysen verifiziert (Daten nicht gezeigt).

Nach der ersten Prüfung (48h) wurden die untersuchten Flächen wieder für den Betrieb freigegeben und die Sperrungen entfernt. Hierbei wurde drauf geachtet, dass alle Flächen gleich beansprucht wurden. Die visuelle Begutachtung der Flächen sowie die Messung der staubunterdrückenden Wirkung wurde für alle Flächen nach 7 Tagen und 28 Tagen wie nach 48 Stunden durchgeführt.

Ergebnisse

Nach einem Tag war die Schicht der beschleunigten Biozementierungsformulierung M20 spürbar, wohingegen die der Referenzmischung 3 nicht verfestigt waren. Nach 48 Stunden Reaktionszeit konnten die in Beispiel 2 beschriebenen, relativen Bruchfestigkeiten der Schichten reproduziert werden (Daten nicht gezeigt).

Die Prüfung der staubunterdrückenden Wirkung mittels Bosch (GBL 18V-120) ergab nach 48 Stunden folgende Bewertung der Fachmänner:

Mischung 20 (M20) - "staubt nicht"

Referenz 3 (R3) - "staubt mäßig"

Referenz 2 (R2) - "staubt mäßig".

Hierbei unterschied sich die staubunterdrückende Wirkung nicht vom Applikationsort.

Sieben Tage nach Applikation wurden die drei Applikationsorte Straße, Halde und Grube nach oben beschriebenem Schema begutachtet. Auf Halde und in der Grube war zu erkennen, dass bei der Mischung 20 (M20) noch eine feste Schicht zu erkennen war, wohingegen bei den Referenzmischungen R2 und R3 keine Schicht ausgeprägt war.

Die staubunterdrückende Tendenz wurde wie folgt bewertet:

Mischung 20 (M20) - "staubt nicht"

Referenz 3 (R3) - "staubt mäßig"

Referenz 2 (R2) - "staubt stark".

Auf der Straße war der Effekt noch deutlicher zu erkennen. Dies ist auf den erfindungsgemäßen Effekt zurückzuführen, dass die erfindungsgemäße Biozementierungsmischung M20 eine hohe mechanische Festigkeit aufweist. Auf der Straße wurde folgende Bewertung vorgenommen:

Mischung 20 (M20) - "staubt nicht"

Referenz 3 (R3) - "staubt stark"

Referenz 2 (R2) - "staubt stark".

Vergleichbare Ergebnisse wie nach 7 Tagen wurden nach 28 Tagen erzielt. Der Versuch wurde nach diesem Zeitraum abgebrochen.

Ebenso wurden vergleichbare Wirkungen auf Emissionsreduktion aller oben genannten Mischungen in Mischungen erzielt, bei denen die Bakterien als Pulver vorlagen. Hierzu wurden die jeweiligen Bakterienzellen im Kultivierungsmedium konzentriert, anschließend fachmännisch getrocknet und vor Verwendung im entsprechenden Medium aufgelöst.

Dieses Beispiel zeigt eindrucksvoll, dass die erfindungsgemäßen Formulierungen aufgrund ihrer schnelleren Verfestigung und höheren Festigkeit eine verbesserte staubunterdrückende Wirkung bei mechanischer Belastung aufweisen. Weiterhin sind Krusten, die mit erfindungsgemäßen Formulierungen erzeugt wurden über einen längeren Zeitraum haltbar im Vergleich zu bestehenden Systemen.

**Beispiel 5: Synergistische Wirkung von Biozementierungsformulierungen mit kohäsionsmodifizierenden Verbindungen**

Material und Methoden:

Der Versuch wurde im Labor in Plastikgefäßen mit einem Volumen von 450 $cm^3$ durchgeführt. Die Applikationsfläche betrug jeweils 78,5 $cm^2$.

Das Bodensubstrat im Versuch bestand aus einen Quarzsand mit einer Körnung von 0-2 mm. Der Sand war vom Hersteller gewaschen sowie getrocknet und wurde direkt verwendet. Es wurden 800 g Quarzsand pro Plastikgefäß als Bodensubstrat verwendet. Das Plastikgefäß war randvoll gefüllt.

Zur Kontrolle wurden Referenz-Mischungen benutzt, welche aus den folgenden Bestandteilen in folgenden Konzentrationen bestanden:

Referenz 3 (R3):

| | | |
|---|---|---|
| 48 | g/L | Harnstoff |
| 44 | g/L | Calciumchlorid |
| 4 x 10^8 | Zellen/mL | *S. pasteurii* |

Referenz 7 (R7):

| | | |
|---|---|---|
| 50 | g/L | Calciumligninsulfonat |

Referenz 9 (R9)

| | | |
|---|---|---|
| 25 | g/L | Polyvinylalkohol |

Referenz 10 (R10)

| | | |
|---|---|---|
| 15,6 | g/L | Polyvinylalkohol |

Referenz 11 (R11):

| | | |
|---|---|---|
| 9,4 | g/L | Stärkeether |

Referenz 12 (R12):

| | | |
|---|---|---|
| 50 | g/L | Huminsäure |

Referenz 13 (R13):

| | | |
|---|---|---|
| 50 | g/L | Natriumsilikat |

Referenz 14 (R14):

| | | |
|---|---|---|
| 25 | g/L | Styrolbutadiendispersion |

Des Weiteren sind in der Mischung R3 Spurenelemente und Spuren von beispielsweise Salzen und Zuckern enthalten (<1 Gew.-%). Harnstoff diente in diesem Medium primär als Carbonatquelle.

Alle Komponenten der vorliegenden Mischungen, die zur Biozementierung in der Lage sind, bis auf die Styrolbutadiendispersion, Huminsäure sowie die Bakterien des Stammes *S. pasteurii,* lagen in fester Form vor. Die Bakterien lagen als Flüssigkultur in einem aus dem Stand der Technik bekannten Kultivierungsmedium vor, wie beispielsweise in Cuthbert, M. O. et al., Ecological Engineering 2012, 41, 32-40 beschrieben (s. Abschnitt 2.2, S. 33), wobei im Rahmen der vorliegenden Erfindung 5 g/L Hefeextrakt verwendet wurden. Die festen Bestandteile und die Bakterien in Flüssigkultur wurden direkt vor Verwendung gemischt, wobei sich die festen Bestandteile auflösten.

Die Referenz-Mischungen wurden in jeweils drei Replikaten auf die Versuchsflächen aufgebracht. Die Applikationsmenge pro Quadratmeter war durchgehend 4 Liter je Replikat. Zur Applikation der vollständig gelösten Proben wurde eine Pipette verwendet. Nach der Applikation wurde die Oberfläche mit einem Spatel glattgestrichen. Die berichteten Messwerte sind Mittelwerte von den drei Replikaten, die typischerweise im Bereich von 10% des ermittelten Wertes lagen.

Es wurden flüssige Biozementierungsmischungen benutzt, welche aus den folgenden Bestandteilen in den folgenden Konzentrationen bestanden:

Mischung 12 (M12):

| | | |
|---|---|---|
| 48 | g/L | Harnstoff |
| 44 | g/L | Calciumchlorid |
| 9,4 | g/L | Stärkeether |
| 4 x 10^8 | Zellen/mL | *S. pasteurii* |

Mischung 19 (M19):

| | | |
|---|---|---|
| 48 | g/L | Harnstoff |
| 44 | g/L | Calciumchlorid |
| 25 | g/L | Polyvinylalkohol |
| 4 x 10^8 | Zellen/mL | *S. pasteurii* |

Mischung 24 (M24):

| | | |
|---|---|---|
| 48 | g/L | Harnstoff |
| 44 | g/L | Calciumchlorid |

(fortgesetzt)

| 50 | g/L | Calciumligninsulfonat |
|---|---|---|
| 4 x 10^8 | Zellen/mL | *S. pasteurii* |

Mischung 25 (M25):

| 48 | g/L | Harnstoff |
|---|---|---|
| 44 | g/L | Calciumchlorid |
| 15,6 | g/L | Polyvinylalkohol |
| 4 x 10^8 | Zellen/mL | *S. pasteurii* |

Mischung 26 (M26):

| 48 | g/L | Harnstoff |
|---|---|---|
| 44 | g/L | Calciumchlorid |
| 50 | g/L | Huminsäure |
| 4 x 10^8 | Zellen/mL | *S. pasteurii* |

Mischung 27 (M27):

| 48 | g/L | Harnstoff |
|---|---|---|
| 44 | g/L | Calciumchlorid |
| 50 | g/L | Natriumsilikat |
| 4 x 10^8 | Zellen/mL | *S. pasteurii* |

Mischung 28 (M28):

| 48 | g/L | Harnstoff |
|---|---|---|
| 44 | g/L | Calciumchlorid |
| 25 | g/L | Styrolbutadiendispersion |
| 4 x 10^8 | Zellen/mL | *S. pasteurii* |

Des Weiteren waren in der Mischung M12, M19, M24, M25, M26, M27 und M28 Spurenelemente und Spuren von beispielsweise Salzen und Zuckern enthalten (<1 Gew.-%). Harnstoff diente in diesem Medium primär als Carbonatquelle.

Stärkeether, Polyvinylalkohol, Calciumligninsulfonat, Huminsäure (jeweils als Polymerisat), Natriumsilikat und Styrolbutadiendispersion sind in den Mischungen M12, M19, M24 M25, M26, M27 und M28 die kohäsionsmodifizierende Verbindung. Harnstoff diente in den Mischungen M12, M19, M24 M25, M26, M27 und M28 als Carbonatquelle.

Alle Komponenten der vorliegenden Mischungen, die zur Biozementierung in der Lage sind, bis auf die Styrolbutadiendispersion, Huminsäure sowie die Bakterien des Stammes *S. pasteurii,* lagen in fester Form vor. Die Bakterien lagen als Flüssigkultur in einem aus dem Stand der Technik bekannten Kultivierungsmedium vor, wie beispielsweise in Cuthbert, M. O. et al., Ecological Engineering 2012, 41, 32-40 beschrieben (s. Abschnitt 2.2, S. 33), wobei im Rahmen der vorliegenden Erfindung 5 g/L Hefeextrakt verwendet wurden. Die festen Bestandteile und die Bakterien in Flüssigkultur wurden direkt vor Verwendung gemischt, wobei sich die festen Bestandteile auflösten.

Die Mischungen wurden in jeweils drei Replikaten auf die Versuchsflächen aufgebracht. Die Applikationsmenge pro Quadratmeter war durchgehend 4 Liter je Replikat. Zur Applikation der vollständig gelösten Proben wurde eine Pipette verwendet. Nach der Applikation wurde die Oberfläche mit einem Spatel glattgestrichen. Die berichteten Messwerte sind Mittelwerte von den drei Replikaten, die typischerweise im Bereich von 10% des ermittelten Wertes lagen.

Nach der Applikation der Referenz-Mischungen sowie der Biozementierungsmischungen erfolgte eine Inkubation über den Gesamtbeobachtungszeitraum für 28 Tage bei einer Luftfeuchte von 20% bis 60% und einem mehrfachen Luftwechsel pro Tag. In diesem Zeitraum herrschte eine Minimaltemperatur von 14,2 °C und eine Maximaltemperatur von 25,2 °C.

Nach ein, zwei, drei, vier, zehn und 28 Tagen wurde die Bruchkraft und der emissionsbedingte Gewichtsverlust, wie in den Beispielen 1 und 2, beschrieben durchgeführt. Zudem wurde die Schichtdicke gemessen:
Nach ein, zwei, drei, vier, zehn und 28 Tagen wurde die Bruchkraft der Schichten bestimmt. Die Bruchkraft (Maximalwert der Kraftmessung) kann mit Hilfe des folgenden Verfahrens bestimmt werden: Das Verfahren ist angelehnt an das normierte Prüfverfahren zur Festigkeitsbestimmung in Zement DIN EN 196-1 :2005-05. Mittels eines digitalen (Bruch-) Kraftmessgeräts wird nach Angaben des Herstellers die Bruchkraft gemessen. Ein Prüfkörper wird mit Hilfe eines Kurbelprüfstandes in die Probe (bis zum Bruch) gedrückt und die aufgebrachte Kraft kontinuierlich gemessen. Aus mehreren Messungen (>3) wird die mittlere Bruchkraft errechnet. Die mittlere Bruchkraft beträgt vorzugsweise zwischen 0,5 und 1000 N, weiter bevorzugt zwischen 1 und 300 N.

Im Anschluss an die Bestimmung der Bruchkraft wurde die Schichtdicke der gebildeten Schicht bestimmt. Hierzu wurde eine manuelle Messung nach mechanischem Bruch der Schicht mit Hilfe eines Messschiebers durchgeführt. Die Schichtdicke wurde an sechs Stellen der gebrochenen Schicht bestimmt, die Abweichung der Einzelmessungen betrug 1 mm. Die Schichtdickte wurde als arithmetisches Mittel der Einzelmessungen dokumentiert.

Im Anschluss an die Bestimmung der Schichtdicke wurde die mechanisch beanspruchte Probe in den Windkanal gestellt und für eine Minute einer Windgeschwindigkeit von 12 m/s ausgesetzt. Die Strömungsrichtung der Luft traf in einem Winkel von 12,5° auf die Oberfläche. Der emissionsbedingte Gewichtsverlust wird mit in Beispiel 1 genannter Formel bestimmt. Dieser Test dient als Referenz für die Langzeitabilität der Proben sowie deren Staubunterdrückung.

Ergebnisse:

In den vorherigen Beispielen 1 bis 4 wurden Formulierungen beschrieben, die einen schnelleren Ansteifungsverlauf und einen verringerten emissionsbedingten Gewichtsverlust aufwiesen. Bei der Analyse stellte sich unerwartet heraus, dass bei erfindungsgemäßen Mischungen nicht zwangsläufig eine Korrelation zwischen Bruchfestigkeit und Emissionsminderung auftritt. Eine Korrelation wäre eigentlich zu erwarten gewesen und wurde auch bei im Stand der Technik beschriebenen Mitteln anhand von den Referenz-Mischungen R9 und R10 beobachtet (Abbildung 6). Die Referenzsysteme wiesen nach vier Tagen Reaktionszeit eine Bruchkraft von R9= 53,8 N und R10= 29,8 N auf. Der emissionsbedingte Gewichtsverlust nach mechanischer Überprüfung betrug bei R9= 3,79% und bei R10= 7,72%. Es zeigte sich, dass festere Referenzsysteme einen geringeren emissionsbedingten Gewichtsverlust aufwiesen. Somit existierte also eine negative Korrelation zwischen Bruchkraft und emissionsbedingtem Gewichtsverlust. Eine vergleichbare Abnahme des emissionsbedingten Gewichtsverlustes bei Erhöhung der Bruchfestigkeit wurde für das Referenzsystem Calciumligninsulfonat beobachtet: Wird Calciumligninsulfonat in einer Ausbringmenge von 25 bis 400 g/m$^2$ Calciumligninsulfonat pro Quadratmeter Sand ausgebracht, so nimmt die Bruchfestigkeit linear zu und der emissionsbedingte Gewichtsverlust ab (Daten nicht gezeigt).

Bei erfindungsgemäßen Mischungen war nach zwei Tagen keine direkte Korrelation zwischen hoher Bruchkraft und geringem, emissionsbedingten Gewichtsverlust zu beobachten (vgl. Beispiel 2). M24 wies beispielsweise nach vier Tagen eine Bruchkraft von 14 N auf, wohingegen das zugehörige Referenzsystem R7 eine Bruchkraft von 26,5 N aufwies. R7 wies jedoch einen signifikant höheren emissionsbedingten Gewichtsverlust von 53% auf. Das Referenzsystem 3 verfestigte in dieser Zeit nahezu nicht (Bruchkraft R3= 1,5 N) und wies einen emissionsbedingten Gewichtsverlust nach Bestimmung der Bruchkraft und Windexposition von 51% auf. Die Kombination beider Systeme (Mischung 24) ergibt ein emissionsreduzierendes System, in dem der emissionsbedingte Gewichtsverlust nur 0,87% betrug. Die Bruchkraft dieses Systems betrug M24= 14 N. Es war, im Kontext des Standes der Technik, nicht zu erwarten, dass diese weniger bruchfeste Mischung eine signifikant höhere Staubunterdrückung aufwies. Dies ist auf den synergistischen Effekt zwischen Biozementierung und den kohäsionsmodifizierenden Substanzen zurückzuführen: M24, M19, M25 und M12 wiesen einen signifikant geringeren emissionsbedingten Gewichtsverlust als ihre Einzelkomponenten R3 und R7, R3 und R9, R3 und R10 sowie R3 und R11 (Abbildung 6) auf. Die Bruchkraft dieser Mischungen ist in Abbildung 6 oben und der emissionsbedingte Gewichtsverlust nach mechanischer Überprüfung in Abbildung 6 unten gezeigt. Eine hohe Bruchkraft wirkt sich jedoch auch nicht negativ auf die Staubunterdrückung aus und ist unter Umständen als zusätzlicher Vorteil der Biozementierungsmischungen zu sehen (vgl. Beispiel 2). Der Effekt der kohäsionsmodifizierenden Substanzen liegt hier in dem Bruchbild der Biozementschicht. Nach Brechen der Schicht teilt sich R7 in viele kleine Fragmente, wohingegen bei M24 lediglich kleine Löcher zurückbleiben. Die kleinen Fragmente können leicht vom Wind aufgenommen und verteilt werden.

Die Bestimmung der Schichtdicke der gebildeten Schicht ergab folgende Werte. Die Schichtdicke von R7 betrug 8 mm, wohingegen M24 eine Schichtdicke von 14 mm aufwies.

Ähnliche Beobachtungen wurden auch bei Verwendung von den kohäsionsmodifizierenden Verbindungen Stärkeether (R11, M12), Huminsäure (R12, M26), Natriumsilikat (R13, M27) und Styrolbutadiendispersion (R14, M28) gemacht. In den besagten Mischungen ist die Bruchkraft der jeweiligen Biozementierungsmischung kleiner als die der jeweiligen Referenz, jedoch ist die Emissionsreduktion höher (vgl. Abb. 6).

Vergleichbare Wirkungen auf Emissionsreduktion der Mischungen M12, M19, M24, M25, M26, M27 und M28 wurde auch bei leicht abgewandelten Formulierungen der Biozementierungsmischungen, die Calciumacetat, Calciumpropionat, Calciumformiat, Calciumpyruvat, Calciumsalicylat, Calciumcitrat und / oder Calciumchlorid in einer Konzentration von jeweils 0,05 bis 0,4 M enthielten und eine Gesamtcalciumkonzentration von 1 M nicht überschritten (Daten nicht gezeigt). Eine stärkere Variation in der Calciumligninsulfonatkonzentration (z.B. 1 bis 500 g/L), Polyvinylalkoholkonzentration (z.B. 1 bis 250 g/L), Stärkeetherkonzentration (z.B. 1 bis 90 g/L), Huminsäurekonzentration (z.B. 1 bis 350 g/L) Kalium- und Natriumsilikatkonzentration (z.B. 1 bis 450 g/L), Polyvinylalkohol, Harnstoffkonzentration (z.B. 0,1 bis 1,0 M) oder bei der Hefeextraktmenge (z.B. 0,1 bis 30 g/L) erbrachte ebenfalls gute Emissionsreduktion. Die Staubunterdrückung war jeweils abhängig von den eingesetzten Konzentrationen der Bestandteile der jeweiligen Biozementierungsmischung (Daten nicht gezeigt). Vergleichbare Wirkungen wurden auch bei Austausch des Bakterienstammes mit *L. sphaericus, B. cohnii, B. halodurans, B. pseudofirmus* und *A. crystallopoietes* in gleicher Zellzahl pro Milliliter erzielt (Daten nicht gezeigt). Wurden 8. *cohnii, B. halodurans, B. pseudofirmus* und *A. crystallopoietes* in gleicher Zellzahl pro Milliliter in den Formulierungen analog verwendet, wurden die Grundbestandteile den Bedürfnissen des jeweiligen bakteriellen Stammes weiter angepasst. Dem Fachmann ist hier bekannt, dass bei diesen nicht-ureoyltisch biozementierenden Bakterienstämmen das Grundmedium analog zu den in Beispiel 2 gelisteten Bestandteilen angepasst werden muss, insbesondere in Bezug auf ein geeignetes Stoffwechseledukt. Die Wirkung auf Emissionsreduktion der Mischungen war vergleichbar zu den dargestellten Ergebnissen für *S. pasteurii* (Daten nicht gezeigt).

Ebenso wurden vergleichbare Wirkungen auf Emissionsreduktion aller oben genannten Mischungen in Mischungen erzielt, bei denen die Bakterien als Pulver vorlagen. Hierzu wurden die jeweiligen Bakterienzellen im Kultivierungsmedium konzentriert, anschließend fachmännisch getrocknet und vor Verwendung im entsprechenden Medium aufgelöst.

Ebenso wurden vergleichbare Wirkungen auf Emissionsreduktion wie bei der Mischung M24 in Mischungen erzielt, bei denen Calciumligninsulfonat gegen Ligninsulfonsäure, Natriumligninsulfonat, Kaliumligninsulfonat bzw. Ammoniumligninsulfonat ausgetauscht wurde. Die Entfernung der Kationenquelle (hier: Calciumquelle wie z.B. Calciumchlorid) in den Mischungen M12, M19, M24, M25, M26, M27 und M28 erzielte auch vergleichbare Ergebnisse in der Staubunterdrückung. Wurde sowohl das Ligninderivat ausgetauscht (wie oben beschrieben, beispielsweise gegen Ligninsulfonsäure) als auch die Kationenquelle (hier: Calciumquelle) entfernt, führte dies auch zu vergleichbaren Ergebnissen in der Staubunterdrückung.

Auf Grundlage der vorliegenden Ergebnisse ist die Annahme plausibel, dass bei Verwendung von kohäsionsmodifizierenden Verbindungen wie hier offenbart die Kationenquelle, insbesondere eine Calciumquelle, optional ist.

**Beispiel 6: Bestimmung der Mindestanforderungen an kohäsionsmodifizierende Verbindungen zur Tauglichkeit emissionsbedingten Gewichtsverlust von Biozement zu reduzieren und länger beständigen Biozement zu bewirken**

Material und Methoden:

Der Versuch wurde im Labor in Plastikgefäßen mit einem Volumen von 450 cm$^3$ durchgeführt. Die Applikationsfläche betrug jeweils 78,5 cm$^2$.

Das Bodensubstrat im Versuch bestand aus einen Quarzsand mit einer Körnung von 0-2 mm. Der Sand war vom Hersteller gewaschen sowie getrocknet und wurde direkt verwendet. Es wurden 800 g Quarzsand pro Plastikgefäß als Bodensubstrat verwendet. Das Plastikgefäß war randvoll gefüllt.

Zur Kontrolle wurden Referenz-Mischungen benutzt, welche aus den folgenden Bestandteilen in folgenden Konzentrationen bestanden:

Referenz 3 (R3):

| | | |
|---|---|---|
| 48 | g/L | Harnstoff |
| 44 | g/L | Calciumchlorid |
| 4 x 10^8 | Zellen/mL | *S. pasteurii* |

Referenz 15 (R15):

| | | |
|---|---|---|
| 50 | g/L | Polyvinylacetat 20 (Feststoff, Granulat) |

Referenz 16 (R16):

| | | |
|---|---|---|
| 50 | g/L | Polycarbonat (Feststoff, Granulat) |

Referenz 17 (R17):

| 50 | g/L | Pflanzenöl (Rapsöl) |

Referenz 18 (R18):

| 12,5 | g/L | langkettige Fettsäure (Stearinsäure) |

Referenz 19 (R19):

| 50 | g/L | Stärke unbehandelt (Feststoff, Pulver) |

Die Referenz-Mischungen enthielten anstelle des Bestandteils (iii) Verbindungen, die weder wasserlöslich noch Wasser-dispergierbar noch Wasser-emulgierbar sind.

Des Weiteren sind in der Mischung R3 Spurenelemente und Spuren von beispielsweise Salzen und Zuckern enthalten (<1 Gew.-%). Harnstoff diente in diesem Medium primär als Carbonatquelle.

Alle Komponenten der vorliegenden Mischungen, die zur Biozementierung in der Lage sind, bis auf die Bakterien des Stammes *S. pasteurii,* lagen in fester Form vor. Die Bakterien lagen als Flüssigkultur in einem aus dem Stand der Technik bekannten Kultivierungsmedium vor, wie beispielsweise in Cuthbert, M. O. et al., Ecological Engineering 2012, 41, 32-40 beschrieben (s. Abschnitt 2.2, S. 33), wobei im Rahmen der vorliegenden Erfindung 5 g/L Hefeextrakt verwendet wurden. Die festen Bestandteile und die Bakterien in Flüssigkultur wurden direkt vor Verwendung gemischt, wobei sich die wasserlöslichen, festen Bestandteile auflösten. Die nicht wasserlöslichen, nicht Wasser-dispergierbaren bzw. nicht Wasser-emulgierbaren Substanzen wurden im Vorfeld gleichmäßig auf die Sandoberschicht aufgetragen, um eine homogene Auftragung zu erreichen und auszuschließen, dass es durch eine etwaige nicht-homogene Auftragung negative Effekte auf den Staubunterdrückungstest gab.

Die Referenz-Mischungen wurden in jeweils drei Replikaten auf die Versuchsflächen aufgebracht. Die Applikationsmenge pro Quadratmeter war durchgehend 4 Liter je Replikat. Zur Applikation der vollständig gelösten Proben wurde eine Pipette verwendet. Nach der Applikation wurde die Oberfläche mit einem Spatel glattgestrichen. Die berichteten Messwerte sind Mittelwerte von den drei Replikaten, die typischerweise im Bereich von 10% des ermittelten Wertes lagen.

Es wurden flüssige Biozementierungsmischungen benutzt, welche aus den folgenden Bestandteilen in den folgenden Konzentrationen bestanden:

Referenz 20 (R20):

| 48 | g/L | Harnstoff |
| 44 | g/L | Calciumchlorid |
| 50 | g/L | Polyvinylacetat 20 (Feststoff, Granulat) |
| 4 x 10^8 | Zellen/mL | *S. pasteurii* |

Referenz 21 (R21):

| 48 | g/L | Harnstoff |
| 44 | g/L | Calciumchlorid |
| 50 | g/L | Polycarbonat (Feststoff, Granulat) |
| 4 x 10^8 | Zellen/mL | *S. pasteurii* |

Referenz 22 (R22):

| 48 | g/L | Harnstoff |
| 44 | g/L | Calciumchlorid |
| 50 | g/L | Pflanzenöl |
| 4 x 10^8 | Zellen/mL | *S. pasteurii* |

Referenz 23 (R23):

| | | |
|---|---|---|
| 48 | g/L | Harnstoff |
| 44 | g/L | Calciumchlorid |
| 12,5 | g/L | langkettige Fettsäure |
| 4 x 10^8 | Zellen/mL | *S. pasteurii* |

Referenz 24 (R24):

| | | |
|---|---|---|
| 48 | g/L | Harnstoff |
| 44 | g/L | Calciumchlorid |
| 50 | g/L | Stärke unbehandelt (Feststoff, Pulver) |
| 4 x 10^8 | Zellen/mL | *S. pasteurii* |

Polyvinylacetat 20 (Feststoff, Granulat), Polycarbonat (Feststoff, Granulat), Rapsöl, langkettige Fettsäure und Stärke erwiesen sich als nicht wasserlöslich und nicht Wasser-dispergierbar und nicht Wasser-emulgierbar und konnten somit nicht zu den kohäsionsmodifizierenden Verbindungen gezählt werden. Harnstoff diente in den Mischungen R20, R21, R22, R23 und R24 als Carbonatquelle.

Alle Komponenten der vorliegenden Mischungen, die zur Biozementierung in der Lage sind, bis auf Rapsöl und die Bakterien des Stammes *S. pasteurii,* lagen in fester Form vor. Die Bakterien lagen als Flüssigkultur in einem aus dem Stand der Technik bekannten Kultivierungsmedium vor, wie beispielsweise in Cuthbert, M. O. et al., Ecological Engineering 2012, 41, 32-40 beschrieben (s. Abschnitt 2.2, S. 33), wobei im Rahmen der vorliegenden Erfindung 5 g/L Hefeextrakt verwendet wurden. Die festen Bestandteile und die Bakterien in Flüssigkultur wurden direkt vor Verwendung gemischt, wobei sich die wasserlöslichen, festen Bestandteile auflösten. Die nicht wasserlösliche, nicht Wasser-dispergierbaren bzw. Wasser-emulgierbaren Substanzen wurden im Vorfeld gleichmäßig auf die Sandoberschicht aufgetragen.

Die Mischungen wurden in jeweils drei Replikaten auf die Versuchsflächen aufgebracht. Die Applikationsmenge pro Quadratmeter war durchgehend 4 Liter je Replikat. Zur Applikation der vollständig gelösten Proben wurde eine Pipette verwendet. Nach der Applikation wurde die Oberfläche mit einem Spatel glattgestrichen. Die berichteten Messwerte sind Mittelwerte von den drei Replikaten, die typischerweise im Bereich von 10% des ermittelten Wertes lagen.

Nach der Applikation der Referenz-Mischungen sowie der Biozementierungsmischungen erfolgte eine Inkubation über den Gesamtbeobachtungszeitraum für 28 Tage bei einer Luftfeuchte von 20% bis 60% und einem mehrfachen Luftwechsel pro Tag. In diesem Zeitraum herrschte eine Minimaltemperatur von 14,2 °C und eine Maximaltemperatur von 25,2 °C.

Nach ein, zwei, drei, vier, zehn und 28 Tagen wurde die Bruchkraft der Schichten bestimmt. Die Bruchkraft (Maximalwert der Kraftmessung) kann mit Hilfe des folgenden Verfahrens bestimmt werden: Das Verfahren ist angelehnt an das normierte Prüfverfahren zur Festigkeitsbestimmung in Zement DIN EN 196-1 :2005-05. Mittels eines digitalen (Bruch-) Kraftmessgeräts wird nach Angaben des Herstellers die Bruchkraft gemessen. Ein Prüfkörper wird mit Hilfe eines Kurbelprüfstandes in die Probe (bis zum Bruch) gedrückt und die aufgebrachte Kraft kontinuierlich gemessen. Aus mehreren Messungen (>3) wird die mittlere Bruchkraft errechnet. Die mittlere Bruchkraft beträgt vorzugsweise zwischen 0,5 und 1000 N, weiter bevorzugt zwischen 1 und 300 N.

Im Anschluss an die Bestimmung der Bruchkraft wurde die mechanisch beanspruchte Probe in den Windkanal gestellt und für eine Minute einer Windgeschwindigkeit von 12 m/s ausgesetzt. Die Strömungsrichtung der Luft traf in einem Winkel von 12,5° auf die Oberfläche. Der emissionsbedingte Gewichtsverlust wird mit in Beispiel 1 genannter Formel bestimmt. Dieser Test dient als Referenz für die Langzeitstabilität der Proben sowie deren Staubunterdrückung.

Um die Wasserlöslichkeit, Wasser-Dispergierbarkeit bzw. Wasser-Emulgierbarkeit der Substanzen zu bestimmen wurde wie folgt vorgegangen: Zur Bestimmung der Wasserlöslichkeit fester, pastöser und gelartiger Substanzen (beispielsweise Polyvinylacetat 20, Polycarbonat, langkettige Fettsäure und Stärke) wurden 5 g der Substanz in 100 mL destilliertes Wasser gegeben und bei 20°C für 24 Stunden gerührt. Anschließend wurde filtriert (Homyl 80-120μm Quantitatives Filterpapier). Das Filterpapier wurde fachmännisch getrocknet und gewogen. Die ermittelte Masse, abzüglich der Filtermasse, ist die Masse des Rückstandes in Gramm (hierin definiert). Die Differenz von 5 g und der Masse des Rückstandes in Gramm geteilt durch 0,1 L ergibt die Löslichkeit der jeweiligen Substanz in g pro Liter.

Zur Bestimmung der Wasser-Dispergierbarkeit fester, pastöser und gelartiger Substanzen wurde 50 g der jeweiligen Substanz mit 1000 mL destilliertem Wasser versetzt und bei 20°C in dem Dissolver DISPERMAT® LC75 bei 15000 Umdrehungen pro Minute für 5 Minuten homogenisiert. Anschließend wurde die Mischung in ein Zentrifugengefäß überführt und 2 min bei 100 g zentrifugiert. Der Überstand wurde abdekantiert und das Präzipitat fachmännisch getrocknet und gewogen. Die ermittelte Masse ist die Masse des Präzipitats nach Zentrifugation (hierin definiert). Die Differenz zwischen 50 g und der Masse des Präzipitats nach Zentrifugation geteilt durch 1 L ist die Wasser-Dispergierbarkeit der Substanz (hierin definiert).

Zum Bestimmen der Wasser-Löslichkeit bzw. Wasser-Emulgierbarkeit einer flüssigen Substanz (beispielsweise Rapsöl) wurde wie folgt vorgegangen. Es wurden 5 g der Substanz mit 100 g destilliertem Wasser vermengt und 24 Stunden gerührt. Die Mischung wurde anschließend in einen Scheidetrichter überführt. Im Scheidetrichter wurde die Mischung 5 Minuten gelagert. Trat nach dieser Zeit noch keine Phasenseparation auf, wurde die Mischung weitere 2 Stunden, vorzugsweise weitere 10 Stunden ruhen gelassen. Trat keine Phasenseparation auf, so galt die Substanz als wasserlöslich. Die Wasserlöslichkeit der Substanz beträgt in diesem Fall mindestens 50 Gramm pro Liter. Trat eine Phasenseparation auf, so wurden die Phasen im Scheidetrichter getrennt und die organische Phase über Natriumsulfat getrocknet. Das Gewicht der getrockneten organischen Phase wurde bestimmt (Masse der organischen Phase in Gramm, hierin definiert). Die Differenz von 5 g und der Masse der organischen Phase in Gramm geteilt durch 0,1 L ergab die Wasser-Emulgierbarkeit der flüssigen Substanz. Wasserlöslichkeit, Wasser-Dispergierbarkeit und Wasser-Emulgierbarkeit werden im Kontext der Erfindung synonym verwendet. Als Grenzwert für bestehende Wasserlöslichkeit,. Wasser-Dispergierbarkeit bzw. Wasser-Emulgierbarkeit einer Verbindung gemäß Bestandteil (iii) wird 1 g pro Liter definiert.

Eine weiter bevorzugte Trennmethode für dispergierte und nicht dispergierte Teilchen ist die Zentrifugation. Nach adäquater Trocknung kann die Masse des Rückstandes in Gramm sowie die Wasserlöslichkeit bzw. Wasser-Dispergierbarkeit bestimmt werden.

Ergebnisse:

In den vorherigen Beispielen 1 bis 5 wurden Biozementierungsformulierungen beschrieben, die zusammen mit kohäsionsmodifizierenden Verbindungen eine synergistische Wirkung aufwiesen und einen verringerten emissionsbedingen Gewichtsverlust aufwiesen.

Bei der Verwendung der Referenzmischungen R20 bis R24 stellte sich heraus, dass die Verwendung von Polycarbonat, Polyvinylacetat 20, Rapsöl, langkettige Fettsäure und unlöslicher Stärke zu keinem synergistischen Effekt in Bezug auf die Verfestigung und Emissionsreduktion führen (Abbildung 7). Das Auftragen der Polymere (R15, R16) führt nicht zu einer Verringerung des emissionsbedingten Gewichtsverlustes: Der emissionsbedingte Gewichtsverlust von R20 und R21 liegt nach vier Tagen Reaktion und mechanischer Überprüfung sowie einer Minute Windexposition von 12 m/s bei über 50 Gew.-%. Dieser ist somit nicht von dem emissionsbedingten Gewichtsverlust der jeweiligen Referenzformulierungen R3 und R15 sowie R3 und R16 zu unterscheiden. Der nicht vorhandene synergistische Effekt ist vermutlich auf die nicht vorhandene Wasserlöslichkeit dieser Polymere zurückzuführen. Die Wasserlöslichkeit bzw. Wasser-Dispergierbarkeit von Polycarbonat bzw. Polyvinylacetat 20 lag in den beschriebenen Assays unter 1 g pro Liter (Daten nicht gezeigt).

Lediglich das Auftragen von Stärke auf die Oberfläche resultierte in einer leicht erhöhten Bruchkraft der Schichten (11 N), jedoch existiert kein synergistischer Effekt mit der Biozementierung (vgl. R19 und R24 in Abbildung 7). Der emissionsbedingte Gewichtsverlust betrug 34 Gew.-%.

Vergleichbare Werte wurden auch nach 10 und 28 Tagen erhalten (Daten nicht gezeigt).

Vergleichbare Wirkungen wurden auch bei Austausch des Baktierenstammes mit *L. sphaericus, B. cohnii, B. halodurans, B. pseudofirmus* und *A. crystallopoietes* in gleicher Zellzahl pro Milliliter erzielt (Daten nicht gezeigt). Wurden 8. *cohnii, B. halodurans, B. pseudofirmus* und *A. crystallopoietes* in gleicher Zellzahl pro *Milliliter* in den Formulierungen analog verwendet, wurden die Grundbestandteile des Bedürfnisses des jeweiligen bakteriellen Stammes weiter angepasst. Dem Fachmann ist hier bekannt, dass bei diesen nicht-ureoyltisch biozementierenden Bakterienstämmen das Grundmedium analog zu den in Beispiel 2 gelisteten Bestandteilen angepasst werden muss, insbesondere in Bezug auf ein geeignetes Stoffwechseledukt. Die Wirkung auf Emissionsreduktion der Mischungen war vergleichbar zu den dargestellten Ergebnissen für *S. pasteurii* (Daten nicht gezeigt).

Dem Fachmann erschließt sich somit, dass kohäsionsmodifizierende Verbindungen im Sinne der Erfindung eine gewisse Wasserlöslichkeit und/oder Wasser-Emulgierbarkeit und/oder Wasser-Dispergierbarkeit aufweisen müssen, um die synergistische Wirkung mit der Biozementierung bewirken zu können.

Die Entfernung der Kationenquelle (hier: Calciumquelle) in den oben genannten Mischungen zeigte vergleichbare Ergebnisse in Bezug auf die Staubunterdrückung.

**Beispiel 7: Weitere Anwendungsgebiete der erfindungsgemäßen Mischungen**

Material und Methoden:

Pelletisieren

Der Versuch wurde im Labor in einem Laborpelletisierer durchgeführt. Hierzu wurden 100 g Eisenerz (Hämatit-Pulver) vorgelegt und flüssige Biozementierungsmischungen zur Staubunterdrückung / Pelletisierung benutzt, welche aus den folgenden Bestandteilen in den folgenden Konzentrationen bestand:

Referenz 3 (R3):

| | | |
|---|---|---|
| 48 | g/L | Harnstoff |
| 44 | g/L | Calciumchlorid |
| 4 x 10^8 | Zellen/mL | *S. pasteurii* |

Mischung 7 (M7):

| | | |
|---|---|---|
| 5 | g/L | Hefeextrakt |
| 21 | g/L | Calciumacetat |
| 34,9 | g/L | Calciumchlorid |
| 46,2 | g/L | Calciumlactat |
| 25 | g/L | Calciumligninsulfonat |
| 4 x 10^8 | Zellen/mL | *B. halodurans* |

Mischung 8 (M8):

| | | |
|---|---|---|
| 36 | g/L | Harnstoff |
| 35 | g/L | Calciumchlorid |
| 10 | g/L | Hefeextrakt |
| 4 x 10^8 | Zellen/mL | *L. sphaericus* |

Mischung 9 (M9):

| | | |
|---|---|---|
| 27 | g/L | Harnstoff |
| 17 | g/L | Calciumchlorid |
| 31 | g/L | Albumin |
| 4 x 10^8 | Zellen/mL | *L. sphaericus* |

Mischung 22 (M22):

| | | |
|---|---|---|
| 27 | g/L | Harnstoff |
| 47 | g/L | Calciumligninsulfonat |
| 12 | g/L | Calciumchlorid |
| 4 x 10^8 | Zellen/mL | *S. pasteurii* |

Des Weiteren sind in der Mischung Spurenelemente und Spuren von beispielsweise Salzen und Zuckern enthalten (<1 Gew.-%). Harnstoff diente in den Mischungen M8, M9 und M22, primär als Carbonatquelle. In der Mischung M7 diente Calciumlactat als Carbonatquelle.

Calciumligninsulfonat, Hefeextrakt und Albumin sind in den Mischungen M7, M8, M9 und M22 die (wasserlöslichen und / oder Wasser-dispergierbaren und / oder Wasser-emulgierbaren) kohäsionsmodifizierenden Verbindungen.

Alle Komponenten der vorliegenden Mischung, die zur Biozementierung in der Lage sind, bis auf die Bakterien lagen in fester Form vor. Die Bakterien lagen wie in den Beispielen 1 bis 6 beschrieben vor. Die festen Bestandteile und die Bakterien in Flüssigkultur wurden direkt vor Verwendung gemischt, wobei sich die festen Bestandteile auflösten.

Dieser Versuch wurde gleich mit Holzschnitzeln durchgeführt, um die Bindefähigkeit der Biozementierungsmischungen für Holzschnitzel zu untersuchen.

20 mL der jeweiligen Biozementmischung wurden auf 100 g Eisenerz (Hämatit-Pulver) gesprüht und für fünf Minuten bei einer Rate von 30 Umdrehungen pro Minute reagieren gelassen.

Nach fünf Minuten wurde die Bruchkraft der entstandenen Pellets bestimmt: Hierzu wurden zunächst Pellets von ähnlichem Durchmesser ausgewählt: Der Durchmesser mit Hilfe eines Messschiebers bestimmt. Der Pelletdurchmesser wurde an drei Stellen des Pellets gemessen, die Abweichungen der Einzelmessungen betrugen 1 mm. Es wurden Pellets ausgewählt, deren Durchmesser 11±1 mm entsprach. Die Bruchkraft (Maximalwert der Kraftmessung) der Pellets kann mit Hilfe des folgenden Verfahrens bestimmt werden: Das Verfahren ist angelehnt an das normierte Prüfverfahren zur Festigkeitsbestimmung in Zement DIN EN 196-1:2005-05. Mittels eines digitalen (Bruch-) Kraftmessgeräts wird nach Angaben des Herstellers die Bruchkraft gemessen. Ein zylindrischer Prüfellerwird mit Hilfe eines Kurbelprüfstandes auf das Pellet aufgesetzt und anschließend (bis zum Bruch) in das Pellet gedrückt. Die aufgebrachte Kraft wird kontinuierlich gemessen. Aus mehreren Pellets (>3) wird die mittlere Bruchkraft errechnet. Die mittlere Bruchkraft der Pellets beträgt vorzugsweise zwischen 0,5 und 500 N, weiter bevorzugt zwischen 1 und 150 N.

Evaporationskontrolle

Der Versuch wurde im Labor in Plastikgefäßen mit einem Volumen von 1000 cm$^3$ durchgeführt. Die Applikationsfläche betrug jeweils 29,2 cm$^2$.

Das Bodensubstrat im Versuch bestand aus einen Quarzsand mit einer Körnung von 0-2 mm. Der Sand war vom Hersteller gewaschen sowie getrocknet und wurde direkt verwendet. Es wurden 2200 g Quarzsand pro Plastikgefäß als Bodensubstrat verwendet. Das Plastikgefäß war randvoll gefüllt.

Zur Kontrolle wurden Referenz-Mischungen benutzt, welche aus den folgenden Bestandteilen in folgenden Konzentrationen bestanden:

Referenz 2 (R2): Applikation von Wasser.

Es wurden flüssige Biozementierungsmischungen benutzt, welche aus den folgenden Bestandteilen in den folgenden Konzentrationen bestanden:

Referenz 3 (R3):

| 48 | g/L | Harnstoff |
|---|---|---|
| 44 | g/L | Calciumchlorid |
| 4 x 10^8 | Zellen/mL | *S. pasteurii* |

Mischung 11 (M11):

| 48 | g/L | Harnstoff |
|---|---|---|
| 44 | g/L | Calciumchlorid |
| 3,9 | g/L | Polyvinylacetatdispersion |
| 4 x 10^8 | Zellen/mL | *S. pasteurii* |

Mischung 16 (M16):

| 1,07 | g/L | Ammoniumchlorid |
|---|---|---|
| 21 | g/L | Calciumacetat |
| 15 | g/L | L-Alanin |
| 34,9 | g/L | Calciumchlorid |
| 0,40 | g/L | Natriumhydroxid |
| 1 | g/L | Hefeextrakt |
| 46,2 | g/L | Calciumlactat |
| 4 x 10^8 | Zellen/mL | *A. crystallopoietes* |

Mischung 22 (M22):

| 27 | g/L | Harnstoff |
|---|---|---|
| 47 | g/L | Calciumligninsulfonat |
| 12 | g/L | Calciumchlorid |
| 4 x 10^8 | Zellen/mL | *S. pasteurii* |

Des Weiteren waren in der Mischung Spurenelemente und Spuren von beispielsweise Salzen und Zuckern enthalten (<1 Gew.-%). Harnstoff diente in den Mischungen R3, M11 und M22, primär als Carbonatquelle. In der Mischung M16 diente Calciumlactat als Carbonatquelle.

Hefeextrakt, L-Alanin, Polyvinylacetatdispersion und Calciumligninsulfonat sind in den Mischungen M11, M16 und M22 die kohäsionsmodifizierenden Verbindungen.

Alle Komponenten der vorliegenden Mischungen, die zur Biozementierung in der Lage sind, bis auf die Bakterien des Stammes *A. crystallopoietes, L. sphaericus* und *S. pasteurii,* lagen in fester Form vor. Die Bakterien lagen als Flüssigkultur in den in den Beispielen 1 bis 6 beschriebenen Kultivierungsmedien vor. Die festen Bestandteile und die Bakterien in Flüssigkultur wurden direkt vor Verwendung gemischt, wobei sich die festen Bestandteile auflösten.

Vor dem Applizieren der jeweiligen Mischungen wurde der Sand mit Wasser benetzt, so dass das anschließende Applizieren der Mischungen den Sand voll mit Wasser durchtränkt hat. Anschließend wurden die jeweiligen Mischungen in jeweils drei Replikaten auf die Versuchsflächen aufgebracht. Die Applikationsmenge pro Quadratmeter war durchgehend 10 Liter je Replikat. Zur Applikation der vollständig gelösten Proben wurde eine Pipette verwendet. Nach der Applikation wurde die Oberfläche mit einem Spatel glattgestrichen. Die berichteten Messwerte sind Mittelwerte von den drei Replikaten, die typischerweise im Bereich von 10% des ermittelten Wertes lagen.

Die applizierte Masse des Wassers wurde gravimetrisch bestimmt. Hierzu wurde die Masse des Sand-befüllten Probegefäßes vor und nach Applikation des Wassers und der jeweiligen Biozementierungsmischung (Masse vor Applikation, Masse nach Applikation, beides hierin definiert) bestimmt. Die Differenz der Masse nach Applikation und der Masse vor Applikation abzüglich des enthaltenen Feststoffes in den jeweiligen Biozementierungsmischungen (vgl. M11, M16, M22) ist die applizierte Wassermenge (hierin definiert). Der in der jeweiligen Biozementierungsmischung enthaltene Feststoff ergibt sich aus der jeweiligen Feststoffkonzentration multipliziert mit dem jeweiligen Applikationsvolumen. Die Summe der Masse vor Applikation und der in der jeweiligen Biozementierungsmischung enthaltenen Feststoffes ist die Gesamtfeststoffmasse des Bechers (hierin definiert).

Nach der Applikation der Referenz-Mischungen sowie der Biozementierungsmischungen erfolgte eine Inkubation über den Gesamtbeobachtungszeitraum für 168 Tage bei einer Luftfeuchte von 20% bis 60% und einem mehrfachen Luftwechsel pro Tag. In diesem Zeitraum herrschte eine Minimaltemperatur von 14,2 °C und eine Maximaltemperatur von 25,2 °C, alle Mischungen wurden den exakt gleichen äußeren Bedingungen ausgesetzt. Die Masse des Probengefäßes wurde zu verschiedenen Zeitpunkten gemessen und dokumentiert (Probenmasse$_{\text{Tag xy}}$).

Die relative Bodenfeuchte am jeweiligen Messtag in Prozent (Tag xy) wurde mit folgender Formel bestimmt:

$$\text{Relative Bodenfeuchte}_{\text{Tag xy}} = [(\text{Probenmasse}_{\text{Tag xy}} - \text{Gesamtfeststoffmasse des Bechers}) / \text{Applizierte Wassermenge}] * 100$$

Dieser Versuch wurde gleich mit Holzschnitzeln, Minen Tailings sowie Landerde durchgeführt. Hierzu wurden die obersten fünf Zentimeter der Sandschicht durch Holzschnitzel, Minen Tailings bzw. Landerde ersetzt und dies als Bodensubstrat wie oben beschrieben mit den Mischungen R3, M11, M16, M22 behandelt. Die Gesamtfeststoffmasse wurde durch das Gewicht der Holzschnitzel, Minen Tailings bzw. der Landerde angepasst.

Dekontamination

Es wurden flüssige Biozementierungsmischungen benutzt, welche aus den folgenden Bestandteilen in den folgenden Konzentrationen bestanden:

Referenz 9 (R9)

| | | |
|---|---|---|
| 25 | g/L | Polyvinylalkohol |

Referenz 25 (R25):

| | | |
|---|---|---|
| 48 | g/L | Harnstoff |
| 4 x 10^8 | Zellen/mL | *S. pasteurii* |

Mischung 20 (M20):

| | | |
|---|---|---|
| 27 | g/L | Harnstoff |
| 47 | g/L | Calciumligninsulfonat |
| 4 x 10^8 | Zellen/mL | *S. pasteurii* |

Mischung 29 (M29):

| 1 | g/L | Hefeextrakt |
| 25 | g/L | Calciumligninsulfonat |
| 21 | g/L | Natriumacetat |
| 46,2 | g/L | Natriumlactat |
| 4 x 10^8 | Zellen/mL | *B. cohnii* |

Mischung 30 (M30):

| 48 | g/L | Harnstoff |
| 50 | g/L | Huminsäure |
| 4 x 10^8 | Zellen/mL | *S. pasteurii* |

Mischung 31 (M31):

| 27 | g/L | Harnstoff |
| 47 | g/L | Natriumligninsulfonat |
| 4 x 10^8 | Zellen/mL | *S. pasteurii* |

Mischung 32 (M32):

| 48 | g/L | Harnstoff |
| 25 | g/L | Polyvinylalkohol |
| 4 x 10^8 | Zellen/mL | *L. sphaericus* |

Des Weiteren sind in den Mischungen R25, M20, M29, M30, M31 und M32 Spurenelemente und Spuren von beispielsweise Salzen und Zuckern enthalten (< 1 Gew.-%). Harnstoff diente in den Mischungen M20, M30, M31 und M32 primär als Carbonatquelle; Natriumacetat und Natriumlactat dienten in der Mischung M29 primär als Carbonatquelle. Optional war in diesen Mischungen eines der folgenden Metallsalze (0,1 M) vorhanden: Nickel(II)chlorid, Eisen(III)chlorid, Kupfer(II)chlorid. Wenn Eisen(III)chlorid verwendet wurde, war ebenfalls noch Salzsäure (0,1 M) vorhanden. Jedes Metallsalz wurde mit jeder Mischung kombiniert. Es wurde folgende Bezeichnung verwendet; Metallsalz + jeweilige Mischung. Für die Metallsalze wird folgende Bezeichnung verwendet: Eisen(III)chlorid = FeCl3, Nicke(II)chlorid = NiCl2, Kupfer(II)chlorid = CuCl2. Die Mischung bei der beispielsweise neben Mittel 20 noch Kupfer(II)chlorid vorlag wird als CuCl2 + M20 aufgeführt (vgl. Abbildung 8). Jede Metallsalzlösung wurde auch ohne die Zugabe der jeweiligen Mischung der jeweiligen Behandlung unterzogen.

Alle Komponenten, inklusive der jeweiligen Bakterien, lagen in fester Form vor. Bei den pulverförmigen Bakterien handelte es sich um ein fachmännisch getrocknetes Pulver. Alle Komponenten, mit Ausnahme des jeweiligen Bakterienpulvers, wurden direkt vor Verwendung gemischt, wobei sich die festen Bestandteile auflösten. Sobald die Komponenten vollständig aufgelöst wurden, wurde das jeweilige Bakterienpulver hinzugegeben und gelöst.

Nach Zusammengeben der Mischungen mit dem Bakterienpulver wurde die Mischung für 5 Minuten gerührt und anschließend für 24 Stunden reagieren lassen. Im Anschluss wurde das entstandene Präzipitat mittels Zentrifugation (3000 g, 10 min) getrennt und abdekantiert. Die Masse des feuchten, schwermetallhaltigen Präzipitats, Feuchtmasse des schwermetallhaltigen Präzipitats (hierin definiert) wurde ermittelt. Anschließend wurde das feuchte, schwermetallhaltige Präzipitat im Stickstoffstrom getrocknet und die Masse des schwermetallhaltigen Präzipitats (hierin definiert) bestimmt. Die Anwesenheit des jeweiligen Schwermetallions wurde mittels Atomspektroskopie quantitativ bestätigt. Als Kontrolle wurden die jeweiligen Mischungen ohne die Anwesenheit des jeweiligen Metallsalzes (M20, M29, M30, M31 und M32) hergestellt und nach exakt gleichem Vorgehen (5 min Rühren, 24 Reaktion, zentrifugieren, dekantieren, trocknen) behandelt. Die Masse dieses Präzipitats nach Dekantieren ist die Feuchtmasse des Kontrollpräzipitats (hierin definiert). Nach Trocknung wurde die Masse des Kontrollpräzipitats (hierin definiert) bestimmt. Ebenso wurde der jeweilige Überstand mittels Absorptionsspektroskopie, beziehungsweise Atomspektroskopie auf die Anwesenheit von Schwermetallionen untersucht. Hierbei wurde eine geeignete Wellenlänge mit geeigneter Sensitivität verwendet. Die sich aus dieser Analyse ergebende Konzentration des jeweiligen Schwermetallions ist die Restschwermetallionenkonzentration (hierin definiert). Die Restschwermetallionenkonzentration geteilt durch 0,1 mol pro L multipliziert mit 100 ist der Restschwermetallionengehalt im Überstand in Prozent (hierin definiert). Die jeweilige Metallsalz-Lösung wurde ebenfalls 5 Minuten gerührt, 24 h inkubiert und bei 3000 g für 10 min zentrifugiert und die Restschwermetallionenkonzentration ermittelt.

Ergebnisse:

Bei der Testung der erfindungsgemäßen Biozementierungsmischungen auf verschiedenen Substraten wurden weitere unerwartete Beobachtungen gemacht, die im nachfolgenden weiter ausgeführt werden. Hieraus ergeben sich weitere, potenzielle Anwendungsfelder, die im vorliegenden Beispiel weiter ausgeführt:

Pelletisieren

Bei der Applikation der erfindungsgemäßen Formulierungen auf eine bewegte Eisenerz Probe, die die Intention hatte, Staubbildung zu unterbinden, fiel auf, dass sich nach Applizieren kleine Agglomerate bzw. Pellets formten. Diese Beobachtung wurde aufgenommen um mit den Biozementierungsmischungen M7, M8, M9 und M22 in einem Laborpelletisierteller Pellets zu formen.

Diese Pellets wiesen neben verringerter Emission bei der Herstellung auch eine höhere Festigkeit auf, als mit den Referenzformulierungen (R3) möglich war. Jeweils ein Pellet das mit verschiedenen Mitteln M7, M8 und M9 (von links nach rechts) dargestellt ist, ist in Abbildung 8 oben gezeigt.

Die Bruchfestigkeit der Pellets betrug bei den verschiedenen Mitteln M7= 28 N, M8= 29 N, M9= 30 N, M22= 27 N und lagen damit über denen von R3. Pellets, die mit R3 hergestellt wurden, wiesen 5 Minuten nach Herstellung eine Bruchkraft von 3 N auf. Die Verarbeitung der mit Referenz 3 hergestellten Pellets erwies sich als schwierig, da die mit R3 hegestellten Pellets sehr leicht zerbrachen. Dies ist vermutlich auf das Fehlen von der kohäsionsmodifizierenden Verbindung zurückzuführen. Kohäsionsmodifizierende Substanzen ermöglichen somit auch die Darstellung eines Biozementes, welcher für Pelletisierung eingesetzt werden kann.

Die erfindungsgemäßen Mischungen sind auch in der Lage Holzschnitzel zu binden und zu aggregieren.

Ebenso zeigte sich, dass bei Verwendung der Mischungen, bei denen alle Komponenten, inklusive der Bakterien, als Pulver vorlagen, ähnliche Ergebnisse in Bezug auf die Emissionsreduktion erzielt wurden. Hierzu wurden alle pulverförmigen Komponenten gemischt und die oben beschriebene Wassermenge im Laborpelletisierer hinzugegeben (Daten nicht gezeigt). Vergleichbare Wirkungen wurden auch bei Austausch des Baktierenstammes mit *L. sphaericus, B. cohnii, B. halodurans, B. pseudofirmus* und *A. crystallopoietes* in gleicher Zellzahl pro Milliliter erzielt (Daten nicht gezeigt). Wurden 8. *cohnii, B. halodurans, B. pseudofirmus* und *A. crystallopoietes* in gleicher Zellzahl pro *Milliliter* in den Formulierungen analog verwendet, wurden die Grundbestandteile des Bedürfnisses des jeweiligen bakteriellen Stammes weiter angepasst. Dem Fachmann ist hier bekannt, dass bei diesen nicht-ureoyltisch biozementierenden Bakterienstämmen das Grundmedium analog zu den in Beispiel 2 gelisteten Bestandteilen angepasst werden muss, insbesondere in Bezug auf ein geeignetes Stoffwechseledukt. Hierbei zeigte sich, dass mit allen Bakterienstämmen eine gute Pelletisierung erzielt wurde (Daten nicht gezeigt).

Unerwartet fiel auf, dass nach Formation des Biozementes einige Substrate im Laborpelletisierer langsamer trockneten, deswegen wurde der Einfluss der Biozementierungsmischungen auf die Evaporation tiefgründiger untersucht.

Evaporationskontrolle

Durch effektive Schichtbildung wurde die Trocknungsgeschwindigkeit des Sandes verringert. Dies ist an der höheren relativen Bodenfeuchte der Proben, in denen die Mischungen M11, M16 und M22 im Vergleich zur Wasserapplikation (R2) zu erkennen (Abbildung 8, Mitte). Im Vergleich zur Applikation von der Referenzformulierung R3, die zur Biozementierung in der Lage ist, ist die relative Bodenfeuchte der Mischungen M11, M16 und M22 signifikant höher. Dies liegt daran, dass die entstandene Biozementschicht ein kohäsives Hindernis für von unten nachströmendes Wasser aufweist. Es kann vermutet werden, dass aufgrund der Anwesenheit der kohäsionsmodifizierenden Substanzen die Porosität der Schicht in einer Art geändert wird, so dass Wasser weniger schnell verdunsten kann.

Die veränderte Porosität könnte auch für andere Anwendungen in Frage kommen, wo Porosität eine Rolle spielt. Dies gilt insbesondere für die Verwendung in Dämmmaterialien, Katalysatorbetten und/oder Batteriematerialien. Durch die verringerte Porosität eignet sich das Material auch als Abdichtungsmaterial.

Ebenso zeigte sich, dass bei Verwendung der Mischungen, bei denen alle Komponenten, inklusive der Bakterien, als Pulver vorlagen, ähnliche Ergebnisse in Bezug auf die Emissionsreduktion erzielt wurden. Hierzu wurden alle pulverförmigen Komponenten gemischt und die oberste Sandschicht eingearbeitet. Das entsprechende Flüssigkeitsvolumen wurde im Anschluss appliziert (Daten nicht gezeigt). Vergleichbare Wirkungen wurden auch bei Austausch des Baktierenstammes mit *L. sphaericus, B. cohnii, B. halodurans, B. pseudofirmus* und *A. crystallopoietes* in gleicher Zellzahl pro Milliliter erzielt (Daten nicht gezeigt). Wurden *B. cohnii, B. halodurans, B. pseudofirmus* und *A. crystallopoietes* in gleicher Zellzahl pro *Milliliter* in den Formulierungen analog verwendet, wurden die Grundbestandteile des Bedürfnisses des jeweiligen bakteriellen Stammes weiter angepasst. Dem Fachmann ist hier bekannt, dass bei diesen nicht-ureolytisch biozementierenden Bakterienstämmen das Grundmedium analog zu den in Beispiel 2 gelisteten Bestandteilen angepasst werden muss, insbesondere in Bezug auf ein geeignetes Stoffwechseledukt. Hierbei zeigte sich, dass mit allen Bakterienstämmen eine gute Evaporationsreduktion erzielt wurde (Daten nicht gezeigt).

Beim Verwenden von verschiedenen Minen-Tailings fiel auf, dass stark mit Kupfer(II), Eisen(II), Eisen(III) und Nickel(II)-Ionen belastete Böden eine substanziell schnellere Schichtbildung zeigten. Bei der Verwendung der Tailing / Sand-Schichtung wurden ähnliche Ergebnisse erzielt, wie bei der reinen Sand-Probe (Daten nicht gezeigt). Auch hier wiesen die Mischungen mit kohäsionsmodifizierenden Substanzen eine langsamere Trocknung auf.

Dekontamination

Dem Fachmann ist bekannt, dass Carbonationen, die durch Bakterien aus z.B. Urea hergestellt werden, zur Ausfällung von Metallionen benutzt werden können (Phillips et al, Engineered applications of ureolytic biomineralization: a review, Biofouling, 2013, Vol. 29, No. 6, 715-733). Vermutlich wurde aus diesem Grund im vorherigen Beispiel (Beispiel 7, Evaporationskontrolle) beobachtet, dass bei der Verwendung von schwermetallbelasteten Böden eine schnellere Schichtbildung einsetzte. Deswegen wurde getestet, ob sich die kohäsionsmodifizierenden Substanzen auch zum Verbessern von Schwermetallionenpräzipitation eignen.

In jeder der verwendeten Mischungen ist die Masse des Kontrollpräzipitats kleiner als die Masse des schwermetallhaltigen Präzipitats. Dies zeigt, dass die erfindungsgemäßen Mischungen in der Lage sind Schwermetallionen zu binden und zu präzipitieren. Die Anwesenheit des jeweiligen Metallsalzes wurde mittels Atomspektroskopie bestätigt.

Die Feuchtmasse des schwermetallhaltigen Präzipitats bei der Verwendung von R9, R25 und R32 zur Präzipitation von Eisen(III)chlorid betrug $FeCl_3$ + R9= 0,00 g, bei $FeCl_3$ + R20= 0,75 g und bei $FeCl_3$ + M32= 12,4 g (vor dem Trocknen). Bei $FeCl_3$ + M32 bildet sich ein voluminöses Gel durch die Bakterienaktivität. Dies ist im Stickstoffstrom sehr schwer zu trocknen. Die Masse des schwermetallionenhaltigen Präzipitats betrug bei $FeCl_3$ + R9= 0,00 g, bei $FeCl_3$ + R25= 0,05 g und bei $FeCl_3$ + M32= 6,53 g (hier ist von einer nicht vollständigen Trocknung aufgrund des gelartigen Charakters auszugehen). Der Restschwermetallionengehalt war bei $FeCl_3$ + M32 um 50% geringer als bei $FeCl_3$ + R25.

Bei der Verwendung von M20 zum Ausfällen von $FeCl_3$, $NiCl_2$ und $CuCl_2$ zeigte sich, dass der Zusatz von kohäsionsmodifizierenden Verbindungen zu einer erhöhten Ausfällung der Metallsalze führte: Die Feuchtmasse des Präzipitats von M20 ist 0,02 g, Die Feuchtmasse des schwermetallhaltigen Präzipitats ist bei $FeCl_3$ + M20 = 0,40 g, bei $NiCl_2$ + M20 = 1,44 g und bei $CuCl_2$ + M20 = 0,24 g. Der Restschwermetallionengehalt im Überstand ist in Abbildung 8 unten dargestellt.

Unerwartet stellte sich heraus, dass die Anwesenheit von kohäsionsmodifizierenden Substanzen auch die Präzipitation aus Lösung erhöht. Die Verwendung der nicht explizit im Ergebnissteil genannten Mischungen zeigten vergleichbare Ergebnisse in Bezug auf die Ausfällungseffizienz (Daten nicht gezeigt). Die Verwendung der Bakterien, die in den Flüssigkeitsmedien der Beispiele 1 bis 6 vorlagen, zeigte ebenfalls eine sehr gute Ausfällungseffizienz (Daten nicht gezeigt).

Kohäsionsmodifizierende Verbindungen zeichnen sich dadurch aus, dass sie synergistisch mit Biozementierung einen besonders kohäsiven, emissionsarmen Biozement ergeben. Unerwartet wurde gefunden, dass dies auch in Lösung stattfindet und sich somit eine besonders effiziente Schwermetallionenpräzipitation ergibt. Dies war insbesondere deshalb unerwartet, weil gerade Polymere dazu neigen, mehrwertige Ionen, insbesondere auch zweiwertigen Metallkationen wie Ca(II), Cu(II), Mg(II) sowie Ni(II) zu binden, sie in Lösung zu dispergieren und so deren Löslichkeit zu erhöhen. Aufgrund dieser Affinität zu zweiwertigen Metallkationen wurde erwartet, dass insbesondere wenn es sich bei der wasserlöslichen und / oderwasser-dispergierbaren, kohäsionsmodifizierenden Verbindung um ein Polymer handelt, sie mehrwertige Metallkationen, sowie Aggregate und Agglomerate davon in Lösung stabilisieren und so eine weniger effiziente Metallionenausfällung stattfindet (vgl. Tadros T F 2016, Nanodispersions, ISBN-978-3-11-029033-2, insbesondere Kap. S. 25 ff *steric stabilization*).

Die Entfernung der Kationenquelle (hier: Calciumquelle) in den oben genannten Mischungen zeigte vergleichbare Ergebnisse in Bezug auf die untersuchten Effekte.

**Patentansprüche**

**1.** Verwendung einer Mischung, die zur Biozementierung geeignet ist und folgende Bestandteile aufweist:

(i) mindestens einen Organismus, der dazu in der Lage ist, Carbonat zu bilden, die Carbonat-Bildung zu induzieren und / oder zu katalysieren, und / oder mindestens ein Enzym, das dazu in der Lage ist, Carbonat zu bilden, die Carbonat-Bildung zu induzieren und / oder zu katalysieren,

(ii) wenigstens einen Stoff zur Bildung von Carbonat,

(iii) wenigstens eine wasserlösliche, Wasser-dispergierbare und / oder Wasseremulgierbare kohäsionsmodifizierende Verbindung ausgewählt aus der Gruppe bestehend aus:

Verbindungen mit Calciumaffinität; und
Verbindungen mit Carbonataffinität;

(iv) optional: mindestens eine Kationen-Quelle;
(v) optional: mindestens einen Zusatzstoff;
zum Reduzieren von Staubbildung und / oder Erosion,
wobei der Bestandteil (iii) ausgewählt ist aus der Gruppe bestehend aus:

(iii-1) (Bio-) Polymeren, die ausgewählt sind aus der Gruppe bestehend aus:

Cellulose und deren Derivaten, Stärke und deren Derivaten, Lignine und deren Derivaten, insbesondere Ligninsulfonate und Kraft-Lignine, Huminsäuren und deren Derivaten;
Chitin und dessen Derivaten, Chitosan und dessen Derivaten, Cyclodextrine und deren Derivaten, Dextrine und deren Derivaten;
natürlichen Klebstoffen, Hydrogelbildnern, Latex, Kautschuk, und deren Derivaten;
Proteinquellen und/oder Peptiden, die zumindest eine der folgenden Aminosäuren enthalten: Alanin, Glycin, Lysin, Asparagin, Glutamin, Glutamat, eine nicht-proteinogene Aminosäure;
Stärkeethern und Stärkeestern, Hefen und deren Derivaten und Extrakten;
flüssigen und getrockneten Polymerdispersionen oder Polymerisaten enthaltend oder bestehend aus Säuren, insbesondere Carbonsäuren, sowie deren Salzen, Cyanaten, Estern, Ethern, Oxiranen, Aminen, Amiden, Sulfaten, Alkoholen, Thiolen, Halogenen, Silanen, Siloxanen, Phosphaten, Alkylen, Allylen und Arylen, sowie deren Derivaten,

(iii-2) (Poly)sacchariden und extrazellulären Substanzen (EPS) und jeweils deren Derivaten, wobei die extrazellulären Substanzen (EPS) ausgewählt sind aus der Gruppe bestehend aus mikrobiellen Exopolysacchariden, wobei die (Poly)saccharide vorzugsweise Lactose, Saccharose, Glucose, Glucosamin, Fructose, Inulin oder Kombinationen davon enthalten oder daraus bestehen,
(iii-3) Carbonsäuren, die ausgewählt sind aus der Gruppe bestehend aus Ameisensäure, Maleinsäure, Bernsteinsäure, Butansäure, Propansäure, Essigsäure, Benztraubensäure, Acetessigsäure, Lävulinsäure, Oxalessigsäure, Zitronensäure, Fruchtsäuren, vorzugsweise Apfelsäure, Citronensäure, Fumarsäure, Gluconsäure, Glycolsäure, Mandelsäure, Oxalsäure, Salicylsäure, a-Hydroxycaprylsäure und Weinsäure, kurzkettige Fettsäuren, mittelkettige Fettsäuren und Milchsäure sowie jeweils deren Salzen, bevorzugt Carboxylaten, und deren Estern,
(iii-4) anorganischen Bindern, Mineralien und Salzen, die ausgewählt sind aus der Gruppe bestehend aus Zement, einschließlich dessen Derivaten, bevorzugt CEM I, CEM II, CEM III, CEM IV, CEM V, CEM VI, Aluminatzement, Magnesiazement, Phosphatzement Gips, Natrium-, Kalium- und Lithium-Silikaten sowie weiteren Wasserglasderivaten, Calciumcarbonat und dessen Derivaten, Aluminiumhydroxid, Calciumsulfat, Calciumhydroxid, Magnesiumsulfat, Microsilica, Kaolinen,
(iii-5) Aminosäuren, die ausgewählt sind aus der Gruppe bestehend aus Alanin, Glycin, Lysin, Asparagin, Glutamin, und Glutamat, nicht-proteinogene Aminosäuren und jeweils deren Salzen, bevorzugt Carboxylaten, und deren Estern und Amiden.

**2.** Verwendung nach Anspruch 1, wobei die durch die Bestandteile (i), (ii) und (iii) hervorgerufene staubreduzierende Wirkung größer ist als die Summe der staubreduzierenden Wirkung, die durch die Bestandteile (i) und (ii) hervorgerufen wird, und der staubreduzierenden Wirkung, die durch den Bestandteil (iii) hervorgerufen wird.

**3.** Verwendung nach Anspruch 1 oder 2, wobei der Bestandteil (iii) in einer Menge von mindestens 0,5 Gew.-%, bezogen auf die Gesamtmasse der Bestandteile (i), (ii) und (iii), vorliegt und / oder wobei der Bestandteil (iii) in einer Menge von höchstens 85 Gew.-%, bezogen auf die Gesamtmasse der Bestandteile (i), (ii) und (iii) vorliegt.

**4.** Verwendung nach einem der vorhergehenden Ansprüche, wobei der Bestandteil (iii) ausgewählt ist aus der Gruppe bestehend aus:

Ligninsulfonaten, Huminsäure und deren Salzen, bevorzugt Carboxylaten und deren Derivaten, Kraft-Lignine, Fasern und Faserstoffen, die ausgewählt sind aus der Gruppe bestehend aus Cellulosefasern, Holzfasern und Holzcellulosefasern,

Gummi arabicum, Xanthan, Alginaten und Agar Agar,

Proteinquellen und / oder Peptiden, die ausgewählt sind aus der Gruppe bestehend aus Casein, Albumin, Hefeextrakten, Peptonen, Caseinat, Calciumcaseinat, Milchpulver, Alanin, Glycin, Lysin, Asparagin, Glutamin, Glutamat, nichtproteinogenen Aminosäuren, Reststoffen und Industriestoffen, die ausgewählt sind aus der Gruppe bestehend aus Maisquellwasser, Lactose-Mutterlaugen, Proteinlysaten, Melasse, Proteinabfällen, vorzugsweise aus der Hefeproduktion, Fleischherstellung, Obstherstellung, Gemüseherstellung, Milchindustrie und Papierfabrikation,

flüssigen und getrockneten Polymerdispersionen oder Polymerisaten, die ausgewählt sind aus der Gruppe bestehend aus Polyhydroxybutyrat, Polylactid, Polybutylensuccinat, Polyacrylsäure, Polymethacrylat, Poly(2-hydroxyethylmethacrylat), Polyvinylalkohol, Polyvinylacetat, Polyvinylpyrrolidon, Polyvinylimidazol, Poly(2-ethyl-2-oxazolin), Polystyrol, Polyamid, Styrolbutadiene, Styrolacrylate, Styrole, Acrylate, Acrylsäuren, Vinylacetate, Isocyanate, Epoxide, Polyaminosäuren.

5. Verwendung nach einem der vorhergehenden Ansprüche, wobei der Bestandteil (iii) ausgewählt ist aus der Gruppe bestehend aus:

Calciumligninsulfonat, Natriumligninsulfonat, Kaliumligninsulfonat, Magnesiumligninsulfonat, Ammoniumligninsulfonat, insbesondere Calciumligninsulfonat, Hefeextrakt, Albumin, Stärkeether, Alanin, Lysin, Styrolacrylatdispersion, Magnesiumsulfat, Polyvinylalkohol, Polyvinylacetatdispersion, Styrolbutadiendispersion, Huminsäure, Alkalisilikat und Kombinationen davon.

6. Verwendung nach einem der vorhergehenden Ansprüche, wobei der Bestandteil (ii) ausgewählt ist aus der Gruppe bestehend aus:

Harnstoff und dessen Salzen; organischen Säuren wie Milchsäure und deren Salzen, bevorzugt Carboxylaten, und deren Estern; Gluconsäure und deren Salzen, bevorzugt Carboxylaten, und deren Estern; Essigsäure und deren Salzen, bevorzugt Carboxylaten, und deren Estern; Ameisensäure und deren Salzen, bevorzugt Carboxylaten, und deren Estern; Propansäure und deren Salzen, bevorzugt Carboxylaten, und deren Estern; Butansäure und deren Salzen, bevorzugt Carboxylaten, und deren Estern; Pentansäure und deren Salzen, bevorzugt Carboxylaten, und deren Estern, Ameisensäure und deren Salzen, bevorzugt Carboxylaten, und deren Estern, Maleinsäure und deren Salzen, bevorzugt Carboxylaten, und deren Estern, Bernsteinsäure und deren Salzen, bevorzugt Carboxylaten, und deren Estern, Benztraubensäure und deren Salzen, bevorzugt Carboxylaten, und deren Estern, Acetessigsäure und deren Salzen, bevorzugt Carboxylaten, und deren Estern, Lävulinsäure und deren Salzen, bevorzugt Carboxylaten, und deren Estern, Oxalessigsäure und deren Salzen, bevorzugt Carboxylaten, und deren Estern, Zitronensäure und deren Salzen, bevorzugt Carboxylaten, und deren Estern, Fruchtsäuren, vorzugsweise Apfelsäure und deren Salzen, bevorzugt Carboxylaten, und deren Estern, Citronensäure und deren Salzen, bevorzugt Carboxylaten, und deren Estern, Fumarsäure und deren Salzen, bevorzugt Carboxylaten, und deren Estern, Gluconsäure und deren Salzen, bevorzugt Carboxylaten, und deren Estern, Glycolsäure und deren Salzen, bevorzugt Carboxylaten, und deren Estern, Mandelsäure und deren Salzen, bevorzugt Carboxylaten, und deren Estern, Oxalsäure und deren Salzen, bevorzugt Carboxylaten, und deren Estern, Salicylsäure und deren Salzen, bevorzugt Carboxylaten, und deren Estern, $\alpha$-Hydroxycaprylsäure und deren Salzen, bevorzugt Carboxylaten, und deren Estern und Weinsäure und deren Salzen, bevorzugt Carboxylaten, und deren Estern; Peptiden, vorzugsweise enthaltend nicht-proteinogene Aminosäuren, Asparagin, Alanin, Glycin, Lysin, Glutamin und / oder Glutaminsäure; Aminosäuren, vorzugsweise nicht-proteinogene Aminosäuren, Asparagin, Alanin, Glycin, Lysin, Glutamin und Glutaminsäure, und deren Salzen, bevorzugt Carboxylaten, und deren Estern; pflanzlichen und tierischen Komplexsubstraten, insbesondere Pepton, Hefeextrakt, Fleischextrakt, Nährbouillon und Casaminosäure; industriellen Reststoffströmen, insbesondere Maisquellwasser, Lactose-Mutterlauge, Proteinlysaten, vorzugsweise aus Erbsen, Fleisch, Kartoffeln oder Tomaten; anaerobe Substrate, vorzugsweise Kohlenstoffdioxid und Methan.

7. Verwendung nach einem der vorhergehenden Ansprüche, wobei die Mischung in flüssiger Form, als Gel, Paste oder als Pulver vorliegt.

8. Verwendung nach einem der vorhergehenden Ansprüche, wobei der Bestandteil (i) ausgewählt ist aus der Gruppe bestehend aus Mikroorganismen, vorzugsweise ausgewählt aus der Gruppe bestehend aus Mikroorganismen der Abteilung Firmicutes, vorzugsweise der Klasse Bacilli, vorzugsweise der Ordnung Bacillales, vorzugsweise der Familien Planococcaceae oder Bacillaceae, vorzugsweise der Gattungen *Sporosarcina*, *Lysinibacillus* oder *Bacillus*, vorzugsweise ausgewählt aus den Arten *Sporosarcina pasteurii, Sporosarcina ureae, Lysinibacillus sphaericus,*

*Lysinibacillus fusiformis, Bacillus megaterium, Lysinibacillus sp., Bacillus pseudofirmus, Bacillus halodurans* oder *Bacillus cohnii*; und Mikroorganismen der Abteilung Proteobacteria, vorzugsweise der Klassen Alphaproteobacteria, Gammaproteobacteria, Deltaproteobacteria oder Epsilonproteobacteria, vorzugsweise der Ordnungen Enterobacteriales, Myxococcales, Campylobacterales, Pseudomonadales oder Caulobacterales, vorzugsweise der Familien Enterobacteriaceae, Myxococcaceae, Helicobacteraceae, Pseudomonadaceae oder Caulobacteraceae, vorzugsweise der Gattungen *Proteus, Myxococcus, Helicobacter, Pseudomonas* oder *Brevundimonas,* vorzugsweise ausgewählt aus den Arten *Proteus vulgaris, Proteus mirabilis, Myxococcus xanthus, Helicobacter pylori, Pseudomonas aeruginosa* oder *Brevundimonas diminuta*; und Mikroorganismen der Abteilung Actinobacteria, vorzugsweise der Klasse Actinobacteria, vorzugsweise der Ordnung Actinomycetales, vorzugsweise der Familien Brevibacteriaceae oder Micrococcineae, vorzugsweise der Gattungen *Brevibacterium* oder *Micrococcaceae,* vorzugsweise ausgewählt aus den Arten *Brevibacterium linens* oder *Arthrobacter crystallopoietes*; und Mikroorganismen der Abteilung Cyanobacteria, vorzugsweise der Klasse Cyanobacteria, vorzugsweise der Ordnung Synechococcales, vorzugsweise der Familie Synechococcaceae, vorzugsweise der Gattung *Synechococcus,* vorzugsweise der Art *Synechococcus;* und aeroben Bakterien, anaeroben Bakterien, fakultativ anaeroben Bakterien und deren Zwischenstufen.

**9.** Verwendung nach einem der Ansprüche 1 bis 7, wobei der Bestandteil (i) ausgewählt ist aus der Gruppe bestehend aus Urease, Asparaginase, Carboanhydrase und metabolischen Enzymen.

**10.** Verwendung nach einem der vorhergehenden Ansprüche, wobei der Bestandteil (v) ausgewählt ist aus der Gruppe bestehend aus:
natürlichen und chemischen Herbiziden; Fungiziden; Molluskiziden; Insektiziden; Hydrophobizierern und Wachsemulsionen; Stabilisierer; Dispergatoren; Emulgierhilfen; Tensiden, vorzugsweise kationischen, anionischen und ungeladenen Tensiden; Aminen; Ethanolaminen; Thixotropiermitteln; Treibmitteln; Rieselhilfsmitteln, Kristallisationskeimen und Kristallisationsmodifizierern; Komplexbildnern, vorzugsweise Phosphonaten, Phosphaten und Polyphosphaten, Fettsäuren; Mineralien und Spurenelementen; Salzen, vorzugsweise Halogeniden, Silikaten, Phosphaten und Sulfaten; Gesteinen, vorzugsweise Bimsstein, Sand, Kies und Schiefermehl, Gummimehlen, Gummigranulaten und anderen thermoplastischen Elastomeren, vorzugsweise aus der Reifenindustrie; Zuschlagsstoffen, vorzugsweise amorphen und kristallinen Zuschlagsstoffen, weiter bevorzugt hydraulischen, nicht-hydraulischen und puzzolanischen Materialien; Pflanzensamen, vorzugsweise Monokotylen und Dikotylen, Sporen, vorzugsweise Moossporen, Pflanzen und Teilen davon, vorzugsweise Wurzeln, Zwiebeln, Holz und Holzschnitzel; Dünger; Bakterien, die zur Bildung von Polymeren in der Lage sind; und Substanzen, die die Biozementierung modifizieren.

**11.** Verfahren zum Reduzieren von Staubbildung und / oder Erosion, umfassend folgende Schritte:

(a) Identifizieren eines zu behandelnden Substrats, auf / in dem eine Staubbildung und / oder Erosion reduziert werden soll,
(b) Bereitstellen einer Mischung, oder deren Bestandteilen, wie in einem der Ansprüche 1 bis 10 definiert,
(c) Applizieren der in Schritt (b) bereitgestellten Mischung, oder von deren Bestandteilen, auf / in das zu behandelnde Substrat, in einer Menge, die ausreicht, um eine Biozementierung zu ermöglichen, und
(d) Ausbilden lassen einer Biozement-Schicht, so dass eine Staubbildung und / oder Erosion auf / in dem Substrat reduziert wird.

**12.** Verfahren nach Anspruch 11, wobei das Substrat ausgewählt ist aus der Gruppe bestehend aus organischem und anorganischem Material, insbesondere biogenen und/oder anthropogenen Ursprungs, vorzugsweise metamorphen, sedimentären und magmatischen Gesteinen und jeweils deren Derivaten und Mischungen, sowie Kombinationen davon.

**13.** Verfahren nach Anspruch 11 oder 12, wobei Schritt (c) einmalig oder wiederholt durchgeführt wird und die Menge des insgesamt applizierten Bestandteils (iii) mindestens 20 g, bezogen auf 1 Quadratmeter Applikationsfläche, beträgt und / oder die Menge des insgesamt applizierten Bestandteils (iii) höchstens 2000 g, bezogen auf 1 Quadratmeter Applikationsfläche, beträgt.

**14.** Verfahren nach einem der Ansprüche 11 bis 13, wobei der in Schritt (b) bereitgestellte Bestandteil (i) indigene Organismen sind, die in dem zu behandelnden Substrat vorliegen.

**15.** Mischung, die zur Biozementierung in der Lage ist, wie in einem der Ansprüche 1 bis 10 definiert, wobei der Bestandteil (iii) ausgewählt ist aus der Gruppe bestehend aus:

Albumin; Stärkeether; Alanin; Lysin; Styrolacrylat, insbesondere Styrolacrylatdispersion; Ethylenvinylacetat, insbesondere einer Ethylenvinylacetatdispersion; Polyvinylalkohol; Magnesiumsulfat; Polyvinylacetat, insbesondere einer Polyvinylacetatdispersion; Styrolbutadien, insbesondere einer Styrolbutadiendispersion; Huminsäure und Kombinationen davon sowie Polymeren, die Monomere der vorgenannten Polymere enthalten, wobei der Bestandteil (ii) vorzugsweise ausgewählt ist aus der Gruppe bestehend aus:
Harnstoff und dessen Salzen; organischen Säuren wie Milchsäure und deren Salzen, bevorzugt Carboxylaten, und deren Estern; Gluconsäure und deren Salzen, bevorzugt Carboxylaten, und deren Estern; Essigsäure und deren Salzen, bevorzugt Carboxylaten, und deren Estern; Ameisensäure und deren Salzen, bevorzugt Carboxylaten, und deren Estern; Propansäure und deren Salzen, bevorzugt Carboxylaten, und deren Estern; Butansäure und deren Salzen, bevorzugt Carboxylaten, und deren Estern; Pentansäure und deren Salzen, bevorzugt Carboxylaten, und deren Estern; Peptiden, vorzugsweise enthaltend Asparagin, Alanin, Glycin, Lysin, Glutamin und / oder Glutaminsäure; Aminosäuren, vorzugsweise Asparagin, Alanin, Glycin, Lysin, Glutamin und Glutaminsäure, und deren Salzen, bevorzugt Carboxylaten, und deren Estern; pflanzlichen und tierischen Komplexsubstraten, insbesondere Pepton, Hefeextrakt, Fleischextrakt, Nährbouillon und Casaminosäure; industriellen Reststoffströmen, insbesondere Maisquellwasser, Lactose-Mutterlauge, Proteinlysaten, vorzugsweise aus Erbsen, Fleisch, Kartoffeln oder Tomaten; anaeroben Substraten, vorzugsweise Kohlenstoffdioxid und Methan.

**Claims**

1. Use of a mixture suitable for biocementation and having the following constituents:

   (i) at least one organism which is capable of forming carbonate or of inducing and/or catalysing carbonate formation, and/or at least one enzyme which is capable of forming carbonate or of inducing and/or catalysing carbonate formation,
   (ii) at least one substance for forming carbonate,
   (iii) at least one water-soluble, water-dispersible and/or water-emulsifiable, cohesion-modifying compound, selected from the group consisting of:

      compounds having calcium affinity; and
      compounds having carbonate affinity;

   (iv) optionally: at least one cation source;
   (v) optionally: at least one adjuvant;
   for reducing dust formation and/or erosion,
   wherein the constituent (iii) is selected from the group consisting of:

      (iii-1) (bio)polymers selected from the group consisting of:

         cellulose and derivatives thereof, starch and derivatives thereof, lignins and derivatives thereof, especially lignosulfonates and kraft lignins, humic acids and derivatives thereof;
         chitin and derivatives thereof, chitosan and derivatives thereof, cyclodextrins and derivatives thereof, dextrins and derivatives thereof;
         natural adhesives, hydrogel-formers, latex, rubber, and derivatives thereof;
         protein sources and/or peptides which contain at least one of the following amino acids: alanine, glycine, lysine, asparagine, glutamine, glutamate, a non-proteinogenic amino acid;
         starch ethers and starch esters, yeasts and their derivatives and extracts;
         liquid and dried polymer dispersions or polymerisates comprising or consisting of acids, especially carboxylic acids, and also their salts, cyanates, esters, ethers, oxiranes, amines, amides, sulfates, alcohols, thiols, halogens, silanes, siloxanes, phosphates, alkyls, allyls and aryls, and derivatives thereof,

      (iii-2) (poly)saccharides and extracellular substances (EPS) and their respective derivatives, wherein the extracellular substances (EPS) are selected from the group consisting of microbial exopolysaccharides, wherein the (poly)saccharides preferably comprise or consist of lactose, sucrose, glucose, glucosamine, fructose, inulin, and combinations thereof,
      (iii-3) carboxylic acids selected from the group consisting of formic acid, maleic acid, succinic acid, butanoic acid, propanoic acid, acetic acid, pyruvic acid, acetoacetic acid, levulinic acid, oxalacetic acid, citric acid, fruit acids, preferably malic acid, citric acid, fumaric acid, gluconic acid, glycolic acid, mandelic acid, oxalic acid, salicylic acid, $\alpha$-hydroxycaprylic acid and tartaric acid, short-chain fatty acids, medium-chain fatty acids, and lactic acid and their respective salts, preferably carboxylates, and their esters,

(iii-4) inorganic binders, minerals and salts, selected from the group consisting of cement, including its derivatives, preferably CEM I, CEM II, CEM III, CEM IV, CEM V, CEM VI, alumina cement, magnesia cement, phosphate cement gypsum, sodium, potassium and lithium silicates and further waterglass derivatives, calcium carbonate and its derivatives, aluminium hydroxide, calcium sulfate, calcium hydroxide, magnesium sulfate, microsilica, and kaolins,

(iii-5) amino acids selected from the group consisting of alanine, glycine, lysine, asparagine, glutamine, glutamate, non-proteinogenic amino acids and their respective salts, preferably carboxylates, and their esters and amides.

2. Use according to claim 1, wherein the dust-reducing effect brought about by the constituents (i), (ii), and (iii) is greater than the sum of the dust-reducing effect brought about by the constituents (i) and (ii) and of the dust-reducing effect brought about by the constituent (iii).

3. Use according to claim 1 or 2, wherein the constituent (iii) is present in an amount of at least 0.5 wt%, based on the total mass of the constituents (i), (ii), and (iii), and/or

wherein the constituent (iii) is present in an amount of at most 85 wt%, based on the total mass of the constituents (i), (ii), and (iii).

4. Use according to any of the preceding claims, wherein the constituent (iii) is selected from the group consisting of:

Lignosulfonates, humic acid and salts thereof, preferably carboxylates and derivatives thereof, kraft lignins, fibres and fibre substances selected from the group consisting of cellulose fibres, wood fibres, and wood cellulose fibres,

gum arabic, xanthan, alginates, and agar,

protein sources and/or peptides selected from the group consisting of casein, albumin, yeast extracts, peptones, caseinate, calcium caseinate, milk powder, alanine, glycine, lysine, asparagine, glutamine, glutamate, non-proteinogenic amino acids, residual substances and industrial substances selected from the group consisting of corn steep liquor, lactose mother liquors, protein lysates, molasses, protein wastes, preferably from yeast production, meat production, fruit production, vegetable production, dairy industry, and papermaking,

liquid and dried polymer dispersions or polymerisates selected from the group consisting of polyhydroxybutyrate, polylactide, polybutylenesuccinate, polyacrylic acid, polymethacrylate, poly(2-hydroxyethyl methacrylate), polyvinyl alcohol, polyvinyl acetate, polyvinylpyrrolidone, polyvinylimidazole, poly(2-ethyl-2-oxazoline), polystyrene, polyamide, styrene-butadienes, styrene-acrylates, styrenes, acrylates, acrylic acids, vinyl acetates, isocyanates, epoxides, polyamino acids.

5. Use according to any of the preceding claims, wherein the constituent (iii) is selected from the group consisting of: calcium lignosulfonate, sodium lignosulfonate, potassium lignosulfonate, magnesium lignosulfonate, ammonium lignosulfonate, especially calcium lignosulfonate, yeast extract, albumin, starch ether, alanine, lysine, styrene-acrylate dispersion, magnesium sulfate, polyvinyl alcohol, polyvinyl acetate dispersion, styrene-butadiene dispersion, humic acid, alkali silicate, and combinations thereof.

6. Use according to any of the preceding claims, wherein the constituent (ii) is selected from the group consisting of: urea and salts thereof; organic acids such as lactic acid and salts thereof, preferably carboxylates, and esters thereof; gluconic acid and salts thereof, preferably carboxylates, and esters thereof; acetic acid and salts thereof, preferably carboxylates, and esters thereof; formic acid and salts thereof, preferably carboxylates, and esters thereof; propanoic acid and salts thereof, preferably carboxylates, and esters thereof; butanoic acid and salts thereof, preferably carboxylates, and esters thereof; pentanoic acid and salts thereof, preferably carboxylates, and esters thereof, formic acid and salts thereof, preferably carboxylates, and esters thereof, maleic acid and salts thereof, preferably carboxylates, and esters thereof, succinic acid and salts thereof, preferably carboxylates, and esters thereof, pyruvic acid and salts thereof, preferably carboxylates, and esters thereof, acetoacetic acid and salts thereof, preferably carboxylates, and esters thereof, levulinic acid and salts thereof, preferably carboxylates, and esters thereof, oxalacetic acid and salts thereof, preferably carboxylates, and esters thereof, citric acid and salts thereof, preferably carboxylates, and esters thereof, fruit acids, preferably malic acid and salts thereof, preferably carboxylates, and esters thereof, citric acid and salts thereof, preferably carboxylates, and esters thereof, fumaric acid and salts thereof, preferably carboxylates, and esters thereof, gluconic acid and salts thereof, preferably carboxylates, and esters thereof, glycolic acid and salts thereof, preferably carboxylates, and esters thereof, mandelic acid and salts thereof, preferably carboxylates, and esters thereof, oxalic acid and salts thereof, preferably carboxylates, and esters thereof, salicylic acid and salts thereof, preferably carboxylates, and esters thereof, $\alpha$-hydroxycaprylic acid and salts thereof, preferably carboxylates, and esters thereof, and tartaric acid and salts thereof, preferably carboxylates, and esters thereof; peptides, preferably containing non-proteinogenic amino acids, asparagine, alanine, glycine, lysine, glutamine and/or glutamic acid; amino acids, preferably non-proteinogenic amino acids, asparagine, alanine, glycine, lysine, glutamine and glutamic acid, and salts thereof, preferably carboxylates, and esters thereof; vegetable and animal complex substrates, especially peptone, yeast extract, meat extract, nutrient broth and casamino acid; industrial residual substance streams, especially corn steep liquor, lactose mother liquor, protein lysates, preferably from peas, meat, potatoes or tomatoes; anaerobic substrates, preferably carbon dioxide and methane.

7. Use according to any of the preceding claims, wherein the mixture is present in liquid form, as a gel, paste, or powder.

8. Use according to any of the preceding claims, wherein the constituent (i) is selected from the group consisting of microorganisms, preferably selected from the group consisting of microorganisms of the phylum Firmicutes, preferably of the class Bacilli, preferably of the order Bacillales, preferably of the families Planococcaceae or Bacillaceae, preferably of the genera *Sporosarcina, Lysinibacillus* or *Bacillus,* preferably selected from the species *Sporosarcina pasteurii, Sporosarcina ureae, Lysinibacillus sphaericus, Lysinibacillus fusiformis, Bacillus megaterium, Lysinibacillus sp., Bacillus pseudofirmus, Bacillus halodurans* or *Bacillus cohnii*; and microorganisms of the phylum Proteobacteria, preferably of the classes Alphaproteobacteria, Gammaproteobacteria, Deltaproteobacteria or Epsilonproteobacteria, preferably of the orders Enterobacteriales, Myxococcales, Campylobacterales, Pseudomonadales or Caulobacterales, preferably of the families Enterobacteriaceae, Myxococcaceae, Helicobacteraceae, Pseudomonadaceae or Caulobacteraceae, preferably of the genera *Proteus, Myxococcus, Helicobacter, Pseudomonas* or *Brevundimonas,* preferably selected from the species *Proteus vulgaris, Proteus mirabilis, Myxococcus xanthus, Helicobacter pylori, Pseudomonas aeruginosa* or *Brevundimonas diminuta*; and microorganisms of the phylum Actinobacteria, preferably of the class Actinobacteria, preferably of the order Actinomycetales, preferably of the families Brevibacteriaceae or Micrococcineae, preferably of the genera *Brevibacterium* or *Micrococcaceae,* preferably selected from the species *Brevibacterium linens* or *Arthrobacter crystallopoietes*; and microorganisms of the phylum Cyanobacteria, preferably of the class Cyanobacteria, preferably of the order Synechococcales, preferably of the family Synechococcaceae, preferably of the genus *Synechococcus*, preferably of the species *Synechococcus*; and aerobic bacteria, anaerobic bacteria, facultatively anaerobic bacteria, and intermediate stages thereof.

9. Use according to any of claims 1 to 7, wherein the constituent (i) is selected from the group consisting of urease, asparaginase, carbonic anhydrase, and metabolic enzymes.

10. Use according to any of the preceding claims, wherein the constituent (v) is selected from the group consisting of: Natural and chemical herbicides; fungicides, molluscicides; insecticides; hydrophobizers and wax emulsions; stabilizers; dispersants; emulsifying aids, surfactants, preferably cationic, anionic and uncharged surfactants; amines; ethanolamines; thixotropic agents; propellants; free-flow agents, crystallization seeds, and crystallization modifiers; complexing agents, preferably phosphonates, phosphates and polyphosphates, fatty acids; minerals and trace elements; salts, preferably halides, silicates, phosphates and sulfates; rocks, preferably pumice, sand, gravel and slate flour, rubber flour, rubber granules, and other thermoplastic elastomers, preferably from the tyre industry; aggregates, preferably amorphous and crystalline aggregates, more preferably hydraulic, non-hydraulic and pozzolanic materials; plant seeds, preferably monocotyledons and dicotyledons, spores, preferably moss spores, plants, and parts thereof, preferably roots, bulbs, wood, and wood chips; fertilizers; bacteria capable of forming polymers; and substances which modify the biocementation.

11. Method for reducing dust formation and/or erosion, comprising the following steps:

   (a) identifying a substrate to be treated, on/in which dust formation and/or erosion is to be reduced,
   (b) providing a mixture, or constituents thereof, as defined in any of claims 1 to 10,
   (c) applying the mixture provided in step (b), or constituents thereof, to/into the substrate to be treated, in an amount sufficient to enable biocementation, and
   (d) allowing a biocement layer to form, thereby reducing dust formation and/or erosion on/in the substrate.

12. Method according to claim 11, wherein the substrate is selected from the group consisting of organic and inorganic material, especially of biogenic and/or anthropogenic origin, preferably metamorphic, sedimentary and igneous rocks, and respective derivatives and mixtures thereof, and also combinations thereof.

13. Method according to claim 11 or 12, wherein step (c) is carried out once or repeatedly and the amount of the constituent (iii) applied overall is at least 20 g, based on one square metre of application area, and/or

the amount of the constituent (iii) applied overall is at most 2000 g, based on one square metre of application area.

14. Method according to any of the claims 11 to 13, wherein the constituent (i) provided in step (b) are indigenous organisms, which are present in the substrate to be treated.

15. Mixture capable of biocementation, as defined in any of claims 1 to 10, wherein the constituent (iii) is selected from the group consisting of:

Albumin; starch ether; alanine; lysine; styrene-acrylate, especially styrene-acrylate dispersion; ethylene-vinyl acetate, especially an ethylene-vinyl acetate dispersion; polyvinyl alcohol; magnesium sulfate; polyvinyl acetate, especially a polyvinyl acetate dispersion; styrene-butadiene, especially a styrene-butadiene dispersion; humic acid and combinations thereof, and also polymers containing monomers of the aforesaid polymers,
wherein the constituent (ii) is preferably selected from the group consisting of:
urea and salts thereof; organic acids such as lactic acid and salts thereof, preferably carboxylates, and esters thereof; gluconic acid and salts thereof, preferably carboxylates, and esters thereof; acetic acid and salts thereof, preferably carboxylates, and esters thereof; formic acid and salts thereof, preferably carboxylates, and esters thereof; propanoic acid and salts thereof, preferably carboxylates, and esters thereof; butanoic acid and salts thereof, preferably carboxylates, and esters thereof; pentanoic acid and salts thereof, preferably carboxylates, and esters thereof; peptides, preferably containing asparagine, alanine, glycine, lysine, glutamine and/or glutamic acid; amino acids, preferably asparagine, alanine, glycine, lysine, glutamine and glutamic acid, and salts thereof, preferably carboxylates, and esters thereof; vegetable and animal complex substrates, especially peptone, yeast extract, meat extract, nutrient broth and casamino acid; industrial residual substrate streams, especially corn steep liquor, lactose mother liquor, protein lysates, preferably from peas, meat, potatoes or tomatoes; anaerobic substrates, preferably carbon dioxide and methane.

## Revendications

1. Utilisation d'un mélange qui est adapté à la biocimentation et comprend les composants suivants:

(i) au moins un organisme qui est capable de former du carbonate, d'induire et / ou de catalyser la formation de carbonate, et / ou au moins une enzyme qui est capable de former du carbonate, d'induire et / ou de catalyser la formation de carbonate,
(ii) au moins une substance pour la formation de carbonate,
(iii) au moins un composé modificateur de cohésion qui est soluble dans l'eau, dispersible dans l'eau et / ou émulsifiable dans l'eau et est choisi dans le groupe constitué par:

des composés d'affinité pour le calcium; et
des composés d'affinité pour le carbonate;

(iv) en option: au moins une source de cations;
(v) en option: au moins un additif;
pour réduire la formation de poussière et / ou l'érosion,
dans laquelle le composant (iii) est choisi dans le groupe constitué par:

(iii-1) les (bio)polymères qui sont choisis dans le groupe constitué par:

la cellulose et ses dérivés, l'amidon et ses dérivés, les lignines et leurs dérivés, en particulier les sulfonates de lignine et les lignines kraft, les acides humiques et leurs dérivés;
la chitine et ses dérivés, le chitosane et ses dérivés, les cyclodextrines et leurs dérivés, les dextrines et leurs dérivés;
les adhésifs naturels, les hydrogelifiants, le latex, le caoutchouc, et leurs dérivés;
les sources de protéines et / ou les peptides qui contiennent au moins l'un des acides aminés suivants: l'alanine, la glycine, la lysine, l'asparagine, la glutamine, le glutamate, un acide aminé non protéinogène;

les éthers d'amidon et les esters d'amidon, les levures et leurs dérivés et extraits;
les dispersions de polymères ou les polymérisats liquides et séché(e)s contenant ou constituées par des acides, en particulier les acides carboxyliques, ainsi que leurs sels, les cyanates, les esters, les éthers, les oxiranes, les amines, les amides, les sulfates, les alcools, les thiols, les halogènes, les silanes, les siloxanes, les phosphates, les alkyles, les allyles et les aryles, ainsi que leurs dérivés,

(iii-2) les (poly)saccharides et les substances extracellulaires (EPS) et leurs dérivés respectifs, les substances extracellulaires (EPS) étant choisies dans le groupe constitué par les exopolysaccharides microbiens, les (poly)saccharides contenant de préférence le lactose, le saccharose, le glucose, la glucosamine, le fructose, l'inuline ou leurs combinaisons ou étant constitués par ceux-ci,
(iii-3) les acides carboxyliques qui sont choisis dans le groupe constitué par l'acide formique, l'acide maléique, l'acide succinique, l'acide butanoïque, l'acide propanoïque, l'acide acétique, l'acide pyruvique, l'acide acétoacétique, l'acide lévulinique, l'acide oxaloacétique, l'acide citrique, les acides de fruits, de préférence l'acide malique, l'acide citrique, l'acide fumarique, l'acide gluconique, l'acide glycolique, l'acide mandélique, l'acide oxalique, l'acide salicylique, l'acide $\alpha$-hydroxycaprylique et l'acide tartrique, les acides gras à chaîne courte, les acides gras à chaîne moyenne et l'acide lactique et leurs sels respectifs, de préférence les carboxylates, et leurs esters,
(iii-4) les liants inorganiques, les minéraux et les sels qui sont choisis dans le groupe constitué par le ciment, y compris ses dérivés, de préférence CEM I, CEM II, CEM III, CEM IV, CEM V, CEM VI, le ciment d'aluminate, le ciment de magnésie, le ciment de phosphate le gypse, les silicates de sodium, de potassium et de lithium ainsi que d'autres dérivés de verre soluble, le carbonate de calcium et ses dérivés, l'hydroxyde d'aluminium, le sulfate de calcium, l'hydroxyde de calcium, le sulfate de magnésium, la microsilice, les kaolins,
(iii-5) les acides aminés qui sont choisis dans le groupe constitué par l'alanine, la glycine, la lysine, l'asparagine, la glutamine et le glutamate, les acides aminés non protéinogènes et leurs sels respectifs, de préférence les carboxylates, et leurs esters et amides.

2. Utilisation selon la revendication 1, dans laquelle l'effet réducteur de poussière provoqué par les composants (i), (ii) et (iii) est supérieur à la somme de l'effet réducteur de poussière qui est provoqué par les composants (i) et (ii) et l'effet réducteur de poussière qui est provoqué par le composant (iii).

3. Utilisation selon la revendication 1 ou 2, dans laquelle le composant (iii) est présent en une quantité d'au moins 0,5 % en poids, par rapport à la masse totale des composants (i), (ii) et (iii), et / ou
dans laquelle le composant (iii) est présent en une quantité de 85 % en poids tout au plus, par rapport à la masse totale des composants (i), (ii) et (iii).

4. Utilisation selon l'une quelconque des revendications précédentes, dans laquelle le composant (iii) est choisi dans le groupe constitué par:

les sulfonates de lignine, l'acide humique et ses sels, de préférence les carboxylates et leurs dérivés, les lignines kraft,
les fibres et les matériaux fibreux qui sont choisis dans le groupe constitué par les fibres de cellulose, les fibres de bois et les fibres de cellulose de bois,
la gomme arabique, la gomme xanthane, les alginates et l'agar-agar,
les sources de protéines et / ou les peptides qui sont choisis dans le groupe constitué par la caséine, l'albumine, les extraits de levure, les peptones, le caséinate, le caséinate de calcium, le lait en poudre, l'alanine, la glycine, la lysine, l'asparagine, la glutamine, le glutamate, les acides aminés non protéinogènes, les résidus et les matières industrielles qui sont choisis dans le groupe constitué par les eaux de trempe de maïs, les liqueurs mères de lactose, les lysats de protéines, la mélasse, les déchets protéiques, de préférence issus de la production de levure, de la production de viande, de la production de fruits, de la production de légumes, de l'industrie laitière et de la fabrication de papier,
les dispersions de polymères ou les polymérisats liquides et séché(e)s qui sont choisi(e)s dans le groupe constitué par le polyhydroxybutyrate, le polylactide, le polybutylène succinate, l'acide polyacrylique, le polyméthacrylate, le poly(2-hydroxyéthyl méthacrylate), l'alcool polyvinylique, l'acétate de polyvinyle, la polyvinylpyrrolidone, le polyvinylimidazole, le poly(2-éthyl-2-oxazoline), le polystyrène, le polyamide, le styrène butadiène, le styrène acrylate, le styrène, les acrylates, les acides acryliques, les acétates de vinyle, les isocyanates, les époxydes, les polyaminoacides.

5. Utilisation selon l'une quelconque des revendications précédentes, dans laquelle le composant (iii) est choisi dans le groupe constitué par:
le sulfonate de lignine de calcium, le sulfonate de lignine de sodium, le sulfonate de lignine de potassium, le sulfonate de lignine de magnésium, le sulfonate de lignine d'ammonium, en particulier le sulfonate de lignine de calcium, l'extrait de levure, l'albumine, l'éther d'amidon, l'alanine, la lysine, la dispersion d'acrylate de styrène, le sulfate de magnésium, l'alcool polyvinylique, la dispersion d'acétate de polyvinyle, la dispersion de styrène-butadiène, l'acide humique, le silicate alcalin et leurs combinaisons.

6. Utilisation selon l'une quelconque des revendications précédentes, dans laquelle le composant (ii) est choisi dans le groupe constitué par:
l'urée et ses sels; les acides organiques tels que l'acide lactique et ses sels, de préférence les carboxylates, et ses esters ; l'acide gluconique et ses sels, de préférence les carboxylates, et ses esters; l'acide acétique et ses sels, de préférence les carboxylates, et ses esters ; l'acide formique et ses sels, de préférence les carboxylates, et ses esters; l'acide propanoïque et ses sels, de préférence les carboxylates, et ses esters; l'acide butanoïque et ses sels, de préférence les carboxylates, et ses esters; l'acide pentanoïque et ses sels, de préférence les carboxylates, et ses esters, l'acide formique et ses sels, de préférence les carboxylates, et ses esters, l'acide maléique et ses sels, de préférence les carboxylates, et ses esters, l'acide succinique et ses sels, de préférence les carboxylates, et ses esters, l'acide pyruvique et ses sels, de préférence les carboxylates, et ses esters, l'acide acétoacétique et ses sels, de préférence les carboxylates, et ses esters, l'acide lévulinique et ses sels, de préférence les carboxylates, et ses esters, l'acide oxaloacétique et ses sels, de préférence les carboxylates, et ses esters, l'acide citrique et ses sels, de préférence les carboxylates et ses esters, les acides de fruits, de préférence l'acide malique et ses sels, de préférence les carboxylates et ses esters, l'acide citrique et ses sels, de préférence les carboxylates, et ses esters, l'acide fumarique et ses sels, de préférence les carboxylates, et ses esters, l'acide gluconique et ses sels, de préférence les carboxylates, et ses esters, l'acide glycolique et ses sels, de préférence les carboxylates, et ses esters, l'acide mandélique et ses sels, de préférence les carboxylates, et ses esters, l'acide oxalique et ses sels, de préférence les carboxylates, et ses esters, l'acide salicylique et ses sels, de préférence les carboxylates, et ses esters, l'acide α-hydroxycaprylique et ses sels, de préférence les carboxylates, et ses esters et l'acide tartrique et ses sels, de préférence les carboxylates, et ses esters; les peptides, contenant de préférence des acides aminés non protéinogènes, l'asparagine, l'alanine, la glycine, la lysine, la glutamine et / ou l'acide glutamique; les acides aminés, de préférence les acides aminés non protéinogènes, l'asparagine, l'alanine, la glycine, la lysine, la glutamine et l'acide glutamique, et leurs sels, de préférence les carboxylates, et leurs esters; les substrats complexes végétaux et animaux, en particulier la peptone, l'extrait de levure, l'extrait de viande, le bouillon nutritif et l'acide casaminé; les flux de résidus industriels, en particulier les eaux de trempe de maïs, la liqueur mère de lactose, les lysats de protéines, de préférence de pois, de viande, de pommes de terre ou de tomates; les substrats anaérobies, de préférence du dioxyde de carbone et du méthane.

7. Utilisation selon l'une quelconque des revendications précédentes, dans laquelle le mélange est présent sous forme liquide, en tant que gel, pâte ou en tant que poudre.

8. Utilisation selon l'une quelconque des revendications précédentes, dans laquelle le composant (i) est choisi dans le groupe constitué de microorganismes, de préférence choisi dans le groupe constitué de microorganismes de la division Firmicutes, de préférence de la classe Bacilli, de préférence de l'ordre Bacillales, de préférence des familles Planococcaceae ou Bacillaceae, de préférence des genres *Sporosarcina, Lysinibacillus* ou *Bacillus*, de préférence choisies parmi les espèces *Sporosarcina pasteurii, Sporosarcina ureae, Lysinibacillus sphaericus, Lysinibacillus fusiformis, Bacillus megaterium, Lysinibacillus sp., Bacillus pseudofirmus, Bacillus halodurans* ou *Bacillus cohnii*; et des microorganismes de la division Proteobacteria, de préférence des classes Alphaproteobacteria, Gammaproteobacteria, Deltaproteobacteria ou Epsilonproteobacteria, de préférence des ordres Enterobacteriales, Myxococcales, Campylobacterales, Pseudomonadales ou Caulobacterales de préférence des familles Enterobacteriaceae, Myxococcaceae, Helicobacteraceae, Pseudomonadaceae ou Caulobacteraceae, de préférence des genres *Proteus, Myxococcus, Helicobacter, Pseudomonas* ou *Brevundimonas,* de préférence choisis parmi les espèces *Proteus vulgaris, Proteus mirabilis, Myxococcus xanthus, Helicobacter pylori, Pseudomonas aeruginosa* ou *Brevundimonas diminuta*; et les microorganismes de la division Actinobacteria, de préférence de la classe Actinobacteria, de préférence de l'ordre Actinomycetales, de préférence des familles Brevibacteriaceae ou Micrococcineae, de préférence des genres *Brevibacterium* ou *Micrococcaceae,* de préférence choisis parmi les espèces *Brevibacterium linens* ou *Arthrobacter crystallopoietes*; et les microorganismes de la division Cyanobacteria, de préférence de la classe Cyanobacteria, de préférence de l'ordre Synechococcales, de préférence de la famille Synechococcaceae, de préférence du genre *Synechococcus,* de préférence de l'espèce *Synechococcus*; et les bactéries aérobies, les bactéries anaérobies, les bactéries anaérobies facultatives et leurs intermédiaires.

**9.** Utilisation selon l'une quelconque des revendications 1 à 7, dans laquelle le composant (i) est choisi dans le groupe constitué par l'uréase, l'asparaginase, l'anhydrase carbonique et les enzymes métaboliques.

**10.** Utilisation selon l'une quelconque des revendications précédentes, dans laquelle le composant (v) est choisi dans le groupe constitué par:
les herbicides naturels et chimiques; les fongicides; les molluscicides; les insecticides; les agents hydrophobisants et les émulsions de cire; les stabilisateurs; les dispersants; les auxiliaires émulsifiants; les tensioactifs, de préférence les tensioactifs cationiques, anioniques et non chargés; les amines; les éthanolamines; agents thixotropes; les propulseurs; les aides à l'écoulement, les germes de cristallisation et les modificateurs de cristallisation; les agents complexants, de préférence les phosphonates, phosphates et polyphosphates, les acides gras; les minéraux et les oligo-éléments; les sels, de préférence les halogénures, les silicates, les phosphates et les sulfates; les roches, de préférence la pierre ponce, le sable, le gravier et la poudre d'ardoise, les poudres de caoutchouc, les granulés de caoutchouc et d'autres élastomères thermoplastiques, de préférence issus de l'industrie du pneumatique; les adjuvants, de préférence les adjuvants amorphes et cristallins, plus préférablement les matériaux hydrauliques, non hydrauliques et pouzzolaniques; les graines de plantes, de préférence les monocotylédones et les dicotylédones, les spores, de préférence les spores de mousse, les plantes et les parties de celles-ci, de préférence les racines, les bulbes, le bois et les copeaux de bois; les engrais; les bactéries qui sont capables de former des polymères; et les substances qui modifient la biocimentation.

**11.** Procédé de réduction de la formation de poussière et / ou de l'érosion, comprenant les étapes suivantes consistant à:

(a) identifier un substrat à traiter sur/dans lequel une formation de poussière et / ou une érosion doit être réduite,
(b) fournir un mélange, ou ses composants, tel que défini dans l'une quelconque des revendications 1 à 10,
(c) appliquer le mélange fourni à l'étape (b), ou ses composants, sur/dans le substrat à traiter, en une quantité qui est suffisante pour permettre une biocimentation, et
(d) permettre à une couche de biociment de se former de manière à réduire une formation de poussière et / ou une érosion sur/dans le substrat.

**12.** Procédé selon la revendication 11, dans lequel le substrat est choisi dans le groupe constitué par du matériau organique et inorganique, en particulier d'origine biogénique et / ou anthropogénique, de préférence les roches métamorphiques, sédimentaires et magmatiques et leurs dérivés et mélanges respectifs, ainsi que leurs combinaisons.

**13.** Procédé selon la revendication 11 ou 12, dans lequel l'étape (c) est mise en oeuvre une ou plusieurs fois et la quantité totale de composant (iii) appliquée est d'au moins 20 g, par rapport à 1 mètre carré de surface d'application, et / ou
la quantité totale de composant (iii) appliquée est de 2000 g tout au plus, par rapport à 1 mètre carré de surface d'application.

**14.** Procédé selon l'une quelconque des revendications 11 à 13, dans lequel le composant (i) fourni à l'étape (b) sont des organismes indigènes qui sont présents dans le substrat à traiter.

**15.** Mélange qui est adapté à la biocimentation, tel que défini dans l'une quelconque des revendications 1 à 10, dans lequel le composant (iii) est choisi dans le groupe constitué par:

l'albumine; l'éther d'amidon; l'alanine; la lysine; l'acrylate de styrène, en particulier la dispersion d'acrylate de styrène; l'éthylène acétate de vinyle, en particulier une dispersion d'éthylène acétate de vinyle; l'alcool polyvinylique; le sulfate de magnésium; l'acétate de polyvinyle, en particulier une dispersion d'acétate de polyvinyle; le styrène-butadiène, en particulier une dispersion de styrène-butadiène; l'acide humique et leurs combinaisons ainsi que les polymères qui contiennent des monomères des polymères précités,
dans lequel le composant (ii) est sélectionné de préférence dans le groupe constitué par:
l'urée et ses sels; les acides organiques tels que l'acide lactique et ses sels, de préférence les carboxylates, et ses esters; l'acide gluconique et sels, de préférence les carboxylates, et ses esters; l'acide acétique et ses sels, de préférence les carboxylates, et ses esters; l'acide formique et ses sels, de préférence les carboxylates, et ses esters; l'acide propanoïque et ses sels, de préférence les carboxylates, et ses esters; l'acide butanoïque et ses sels, de préférence les carboxylates, et ses esters; l'acide pentanoïque et ses sels, de préférence les carboxylates, et ses esters; les peptides contenant de préférence de l'asparagine, de l'alanine, de la glycine, de la lysine, de la glutamine et / ou de l'acide glutamique; les acides aminés, de préférence l'asparagine, l'alanine, la glycine, la lysine, la glutamine et l'acide glutamique, et leurs sels, de préférence les carboxylates, et leurs esters; les substrats complexes végétaux et animaux, en particulier la peptone, l'extrait de levure, l'extrait de viande, le bouillon nutritif et l'acide casaminé; les flux de résidus industriels, en particulier les eaux de trempe de maïs, la liqueur mère de lactose, les lysats de protéines, de préférence de pois, de viande, de pommes de terre ou de tomates; des substrats anaérobies, de préférence du dioxyde de carbone et du méthane.

Abbildung 1

Abbildung 2

Abbildung 3

Abbildung 4

Abbildung 5

Abbildung 6

Abbildung 7

Abbildung 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009151316 A
- EP 0305621 A
- EP 2838969 A
- WO 2006066326 A
- WO 2016145190 A1
- EP 2664596 A3

**In der Beschreibung aufgeführte Nicht-Patentliteratur**

- **NAEIMI M ; CHU J.** *Environmental Science and Pollution Research,* 2017, vol. 24 (29), 23341-23350
- **MAYER, FD et al.** Geo-frontiers 2011. *advances in geotechnical engineering,* 2011, 4002-4011
- **STABNIKOV V et al.** *Water Air Soil Pollut.,* 2013, vol. 224, 1631
- **PORATH J et al.** *Nature,* 1975, vol. 258 (5536), 598-599
- **CAMPBELL J A.** *Biochem Soc Tans.,* 1991, vol. 19 (4), 387S
- **HORVÁTH, B. et al.** A Simple Method for Measuring the Carbonate Content of Soils. *Soil Science Society of America Journal,* 2005, vol. 69, 1066-1068
- Microbial CaCOs Precipitation for the production of Biocement. **V. S. WHIFFIN.** Dissertation. Murdoch University, 2004
- **STRUNZ H ; NICKEL E H.** V Strunz Mineralogical Tables. 2001
- **PHILLIPS et al.** Engineered applications of ureolytic biominerafization: a review. *Biofouling,* 2013, vol. 29 (6), 715-733
- **TADROS T F.** *Nanodispersions,* 2016, ISBN 978-3-11-029033-2, 25
- **STABNIKOV, V. et al.** *Water, Air, & Soil Pollution,* 2013, vol. 224, 1631
- **CUTHBERT, M. O. et al.** *Ecological Engineering,* 2012, vol. 41, 32-40
- **DICK, J. et al.** *Biodegradation,* 2006, vol. 17, 357-367
- **JONKERS H. M. et al.** Tailor Made Concrete Structures. Taylor & Francis Group, 2008
- **HAMILTON, R. W. et al.** *Journal of Bacteriology,* 1977, vol. 129 (2), 874-879
- **ABSCHNITT.** *Materials and Methods,* 874-875
- **PHILLIPS et al.** Engineered applications of ureolytic biomineralization: a review. *Biofouling,* 2013, vol. 29 (6), 715-733